(19) Europäisches Patentamt
European Patent Office
Office européen des brevets

(11) **EP 3 190 683 A1**

(12) **EUROPEAN PATENT APPLICATION**
published in accordance with Art. 153(4) EPC

(43) Date of publication:
**12.07.2017 Bulletin 2017/28**

(51) Int Cl.:
**H02J 13/00** *(2006.01)* **G06Q 50/06** *(2012.01)*
**H02J 3/32** *(2006.01)*

(21) Application number: **15827069.4**

(22) Date of filing: **15.07.2015**

(86) International application number:
**PCT/JP2015/070254**

(87) International publication number:
**WO 2016/017424 (04.02.2016 Gazette 2016/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **31.07.2014 JP 2014156204**

(71) Applicant: **NEC Corporation**
**Tokyo 108-8001 (JP)**

(72) Inventors:
• **KUDO, Koji**
**Tokyo 108-8001 (JP)**
• **SAKUMA, Hisato**
**Tokyo 108-8001 (JP)**
• **YANO, Hitoshi**
**Tokyo 108-8001 (JP)**

(74) Representative: **Vossius & Partner**
**Patentanwälte Rechtsanwälte mbB**
**Siebertstrasse 3**
**81675 München (DE)**

(54) **CONTROL DEVICE, APPARATUS CONTROL DEVICE, REPORTING METHOD, AND RECORDING MEDIUM**

(57) In power supply/demand adjustment processing for a DR (Demand Response) system, requests for the power supply/demand adjustment processing can be submitted to customers who maintain power supply/demand adjustment devices that can accommodate the power supply/demand adjustment processing. The control device (A) of the present invention is provided with: an acquisition unit (A1) that acquires processing information indicating power supply/demand adjustment processing that can be accommodated by an adjustment unit that manages, for each customer, adjustment amounts for one or more power supply/demand adjustment devices used in power adjustment of power supply/demand adjustment processing; and a reporting unit (A2) that, on the basis of information indicating characteristics relating to the power supply/demand adjustment processing and processing information, reports the actuation of power supply/demand adjustment processing to customers that are the object of the power supply/demand adjustment processing.

FIG. 1A

**Description**

**Technical Field**

The present invention relates to a control device, an apparatus control device, and a reporting method, and a program, and for example, relates to a control device, an apparatus control device, and a reporting method, and a program that relate to power supply/demand adjustment processing.

**Background Art**

Methods that use a power supply/demand adjustment device such as a storage battery are known as methods of performing power supply/demand adjustment processing.

Patent Document 1 discloses a DR system that controls the operations of an electrical apparatus that functions as a power supply/demand adjustment device to execute power supply/demand adjustment processing that accords with DR (Demand Response) contracts. Known types of power supply/demand adjustment processing include a peak-cut process that decreases power demand and a frequency adjustment process that adjusts the frequency of the power grid.

In the DR system described in Patent Document 1, a server that is under the control of a DR aggregator submits a request for DR service (power supply/demand adjustment processing) to a DR controller that is installed on the premises (in-residence) of a customer that has concluded a contract. The customer-side DR controller controls one or more electrical apparatuses maintained by the customer to implement the DR service.

**Literature of the Prior Art**

**Patent Documents**

Patent Document 1: International No. WO 2014/038201

**Summary of the Invention**

**Problem to be Solved by the Invention**

Typically, the one or more power supply/demand adjustment devices (such as electrical apparatuses) maintained by customers are highly likely to differ for each customer. As a result, the power supply/demand adjustment processes that can be accommodated on the customer-side (one or more power supply/demand adjustment devices) are also highly likely to differ.

In the DR system described in Patent Document 1, a server under the control of a DR aggregator submits a request for power supply/demand adjustment processing to a customer-side DR controller without giving consideration to the capabilities for power supply/demand adjustment processing on the customer side.

As a result, in the DR system described in Patent Document 1, the possibility arises that a server will submit a request to the customer side for a power supply/demand adjustment process that cannot be accommodated on the customer side. In such cases, the power supply/demand adjustment process requested by the server will not be performed. Accordingly, there is the issue that a method is desired that enables a request for a power supply/demand adjustment process to be submitted to a customer that maintains a power supply/demand adjustment device that is capable of accommodating the power supply/demand adjustment process.

It is an example object of the present invention to provide a control device, an apparatus control device, a reporting method, and a program that can solve the above-described problem.

**Means for Solving the Problem**

The control device of an example aspect of the present invention is provided with: an acquisition unit that acquires processing information that indicates power supply/demand adjustment processing that can be accommodated in an adjustment unit that manages, for each customer, adjustment amounts in one or more power supply/demand adjustment devices that are used in power adjustment of the power supply/demand adjustment processing; and a reporting unit that, on the basis of information that indicates characteristics relating to the power supply/demand adjustment processing and the processing information, reports actuation of the power supply/demand adjustment processing to a customer for which the power supply/demand adjustment processing is carried.

The apparatus control device of an example aspect of the present invention includes: an adjustment unit that manages for each customer information relating to one or more power supply/demand adjustment devices that are used in power adjustment of power supply/demand adjustment processing; and a reporting unit that, on the basis of information indicating characteristics relating to the power supply/demand adjustment processing and information relating to power supply/demand adjustment devices in the adjustment unit of each customer, transmits to an outside device processing information that indicates whether execution of the power supply/demand adjustment process can be accommodated.

The reporting method of an example aspect of the present invention includes steps of: acquiring processing information that indicates power supply/demand adjustment processing that can be accommodated in an adjustment unit that manages adjustment amounts for each customer in one or more power supply/demand adjustment devices that are used in power adjustment of the power supply/demand adjustment processing; and

on the basis of information indicating characteristics relating to the power supply/demand adjustment processing and the processing information, reporting the actuation of the power supply/demand adjustment processing to a customer or which the power supply/demand adjustment processing is carried out.

The reporting method of an example aspect of the present invention includes steps of: managing, for each customer, information relating to one or more power supply/demand adjustment devices that are used in power adjustment of power supply/demand adjustment processing; and

on the basis of information that indicates characteristics relating to the power supply/demand adjustment processing and information relating to power supply/demand adjustment devices in the adjustment unit of each customer, transmitting to an outside device processing information that indicates whether execution of the power supply/demand adjustment processing can be accommodated.

The recording medium of the present invention is a recording medium that can be read by a computer and on which a program is recorded that causes a computer to execute:

an acquisition procedure of acquiring processing information that indicates power supply/demand adjustment processing that can be accommodated in an adjustment unit that manages, for each customer, adjustment amounts in one or more power supply/demand adjustment devices that are used in power adjustment of power supply/demand adjustment processing; and

a reporting procedure of reporting actuation of the power supply/demand adjustment processing to a customer for which the power supply/demand adjustment processing is carried out on the basis of information that indicates characteristics relating to the power supply/demand adjustment processing and the processing information.

Another recording medium of the present invention is a recording medium that can be read by a computer and on which a program is recorded that causes a computer to execute:

a management procedure of managing, for each customer, information relating to one or more power supply/demand adjustment devices that are used in power adjustment of power supply/demand adjustment processing; and

a transmission procedure of, on the basis of information indicating characteristics relating to the power supply/demand adjustment processing and information relating to power supply/demand adjustment devices in the adjustment unit of each customer, transmitting to an outside device processing information that indicates whether execution of the power supply/demand adjustment processing can be accommodated.

**Effect of the Invention**

An example advantage according to the invention is a request for power supply/demand adjustment processing can be submitted to a customer that maintains a power supply/demand adjustment device that can accommodate the power supply/demand adjustment processing.

**Brief Description of the Drawings**

FIG. 1A shows control device A of the first example embodiment of the present invention.
FIG. 1B shows control device AA that has a storage unit that stores processing information.
FIG. 1C shows an example of control device AA that is a modification of the first example embodiment.
FIG. 2 is a flow chart for describing the operation of control device A.
FIG. 3 shows control device B of the second example embodiment of the present invention.
FIG. 4 shows an example of the processing information for each customer.
FIG. 5 is a flow chart for describing the operation of control device B.
FIG. 6 shows control device C of the third example embodiment of the present invention.

FIG. 7 is a flow chart for describing the operation of control device B.

FIG. 8A shows customer-side device D of the fourth example embodiment of the present invention.

FIG. 8B shows customer-side device DD.

FIG. 9 shows an example of the characteristics of each of applications AP1-AP3.

FIG. 10 is a flow chart for describing the operation of customer-side device D.

FIG. 11 shows customer-side device E of the fifth example embodiment of the present invention.

FIG. 12 shows an example of the response times and communication reliability of applications AP1-AP3.

FIG. 13 is a flow chart for describing the operation of customer-side device E.

FIG. 14 shows customer-side device F of the sixth example embodiment of the present invention.

FIG. 15 shows customer-side device G of the seventh example embodiment of the present invention.

FIG. 16 shows an example of the response times, communication reliability and profitability of applications AP 1-AP3.

FIG. 17 is a flow chart for describing the operation of customer-side device G.

FIG. 18 shows customer-side device H of the eighth example embodiment of the present invention.

FIG. 19 shows an example of the response times, communication reliability, profitability, reliability, and implementation time of applications AP1-AP3.

FIG. 20 is a flow chart for describing the operation of customer-side device H.

FIG. 21 shows power control system 1000 that adopts the battery control system of the ninth example embodiment of the present invention.

FIG. 22 shows an example of load dispatching unit 2, central control device 7, and a plurality of apparatus control devices 8.

FIG. 23A shows an example of storage battery distribution ratio curve 202a at the time of discharging.

FIG. 23B shows an example of storage battery distribution ratio curve 202b at the time of charging.

FIG. 24A shows an example of the DR2 charging/discharging gain line.

FIG. 24B shows an example of the DR3 drooping characteristic line.

FIG. 25 is a sequence chart for describing the operation of generating processing information.

FIG. 26 shows the response time, communication reliability, reliability, profitability, and implementation time indicated in a DR execution contract.

FIG. 27 shows an example of a table showing the correspondence relation between power demand and the power value that can be supplied.

FIG. 28 shows an example of the processing information and DR application characteristics for each customer.

FIG. 29 shows an example of the classification of adjustment units and profit conditions for each customer.

FIG. 30 is a flow chart for describing the operation in which central control device 7 selects request-destination customers.

FIG. 31 shows request-destination customers for each DR application and the assignment of capacity in request-destination customers.

FIG. 32 shows the normal-time power demand curve of customer No. 1.

FIG. 33 is a sequence diagram for describing the $P_{ES-DR2}$ derivation operation.

FIG. 34 is a sequence diagram for describing the DR2 comprehension operation.

FIG. 35 is a sequence diagram for describing the DR2 allotment operation.

FIG. 36 shows an example of local charging/discharging gain line 800A.

FIG. 37 is a sequence diagram for describing the charging/discharging control operation.

FIG. 38 is a sequence diagram for describing the DR3 comprehension operation.

FIG. 39 is a sequence diagram for describing the DR3 allotment operation.

FIG. 40 is a sequence diagram for describing the charging/discharging control operation.

FIG. 41 shows an example of the power demand at the time of executing DR applications 1-3 at customer No. 1.

**Best Mode for Carrying Out the Invention**

Example embodiments of the present invention are next described with reference to the accompanying drawings.

**First Example Embodiment**

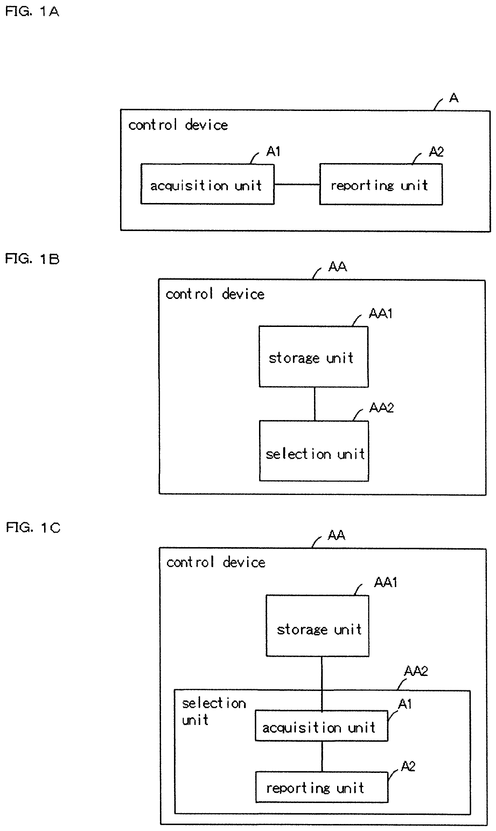

FIG. 1A shows control device A of the first example embodiment of the present invention.

Control device A includes acquisition unit A1 and reporting unit A2.

Acquisition unit A1 acquires processing information from an outside device (for example, the apparatus control device of a customer). In addition, acquisition unit A1 may also acquire processing information not necessarily by direct acquisition from the apparatus control device of the customer but by way of another outside device.

The processing information is information that indicates power supply/demand adjustment processing that can be accommodated in an adjustment unit that manages, for each customer, the adjustment amounts in one or more power supply/demand adjustment devices used in power adjustment in power supply/demand adjustment processing.

Here, customers are the units of measuring adjustment amounts of power supply/demand adjustment devices that are used in power supply/demand adjustment processing or the units of contracts for carrying out agreements on the meaning of participation.

An adjustment unit that is capable of processing power supply/demand adjustment is, for example, an adjustment unit that satisfies a characteristic (for example, a response time) that is necessary for the process of power supply/demand adjustment. Characteristics that are necessary for power supply/demand adjustment processing can be altered as appropriate and are not limited to the response time. For example, communication characteristics, profitability, reliability, or the implementation time may also be used as characteristics that are necessary for power supply/demand adjustment processing.

Explanation is here presented regarding response time.

Response time refers to the time required from giving an instruction to execute processing until the initial response is received.

For example, in the case of power supply/demand adjustment processing, the response time is the time for making the power demand curve coincide with the "target power demand curve" by carrying out the relevant processing (for example, from 10 seconds to one minute for application AP1, from one to nine seconds for application AP2, and less than one second for application AP3).

In the case of a power supply/demand adjustment device such as a storage battery, the response time is the time from receiving an instruction to carry out a relevant process until the power supply/demand adjustment operation is executed.

In the present example embodiment, a power demand reduction process, an LFC (Load Frequency Control) process, and a GF (Governor Free) process are used as the power supply/demand adjustment processes. The power supply/demand adjustment processing is not limited to the power demand reduction process, LFC process, and GF process and can be altered as appropriate. Further, the number of types of power supply/demand adjustment processes is not limited to three and can be altered as appropriate.

The power demand reduction process, LFC process, and GF process are hereinbelow each referred to as "application AP1," "application AP2," and "application AP3," respectively.

Application AP1 (the demand reduction process) is a process of, for example, carrying out power demand peak cutting. Application AP2 (the LFC process) and application AP3 (the GF process) are processes of controlling (stabilizing) the grid frequency of the power grid.

Applications AP 1-AP3 are all processes that carry out power supply/demand adjustment by controlling the operation of adjustment units that include one or more power supply/demand adjustment device (for example, storage batteries, air conditioners, electric water heaters, heat pump water heaters, pumps, and freezers) that are connected to the power grid.

In addition, the power supply/demand adjustment devices are not limited to storage batteries, air conditioners, electric water heaters, heat pump water heaters, pumps, and freezers and can also be altered as appropriate. For example, electric vehicles may also be used as power supply/demand adjustment devices.

Further, an adjustment unit comprehends and then manages the characteristics of each power supply/demand adjustment device that each customer maintains as shown hereinbelow.

*Air conditioners (A/C)*: Although lacking a followability on the order of seconds such as GF, this device has a following capability on the order of minutes for LFC use.

*HP (Heat pump) water heaters*: These devices include a demand reduction followability on the order of minutes and include HP water heaters that accommodate LFC.

*Pumps*: These devices guarantee a followability on the order of LFC by digital control of power ON/OFF.

*Freezers*: Also respond on the order of GF with analog-type output fluctuation.

*Storage batteries*: Comprehends responsiveness of charging/discharging.

On the basis of information indicating characteristics relating to applications and processing information, reporting unit A2 reports, for each application, the actuation of the application to a customer that is the object of the application.

The operation of the present example embodiment is next described.

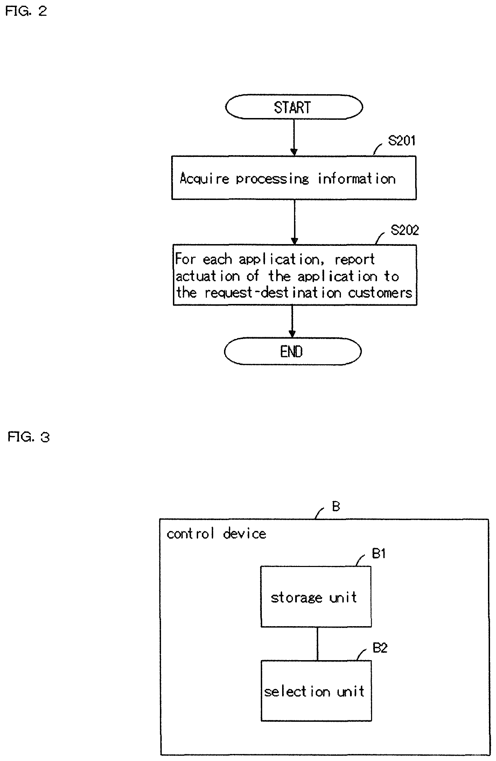

FIG. 2 is a flow chart for describing the operation of control device A.

Acquisition unit A1 acquires processing information (Step S201). For example, acquisition unit A1 acquires processing information from an outside device.

Acquisition unit A1 next supplies the processing information to reporting unit A2. Reporting unit A2, upon receiving the processing information, reports the actuation of the application to the customer that is the object of the application on the basis of information that indicates characteristics relating to the application and the processing information (Step S202).

When, for example, the characteristic that relates to the application is "a condition of selecting as the request-destination customers all customers that maintain adjustment units that can accommodate the application," reporting unit A2 first, for each application, selects as the request-destination customers, all customers that maintain adjustment units that can accommodate the application.

Reporting unit A2 next, for each application, reports the actuation of the application to the request-destination customers.

The characteristic relating to the application is not limited to the above-described condition and can be altered as appropriate. For example, "the condition of selecting as request-destination customers, of customers that maintain adjustment units that can accommodate the application, those customers that are present in an area that is set to the application" may also be used as a characteristic relating to the application. In the following explanation, "information indicating characteristics relating to an application" is also referred to as a "predetermined condition."

The effect of the present example embodiment is next described.

In the present example embodiment, acquisition unit A1 acquires processing information. On the basis of information indicating characteristics relating to an application and the processing information, reporting unit A2 reports actuation of the application to customers that are the objects of the application.

As a result, requests for an application can be submitted to customers that maintain power supply/demand adjustment devices that can accommodate the application. An application can thus be executed with high accuracy and the reliability and accuracy of power supply/demand adjustment processing can be raised.

In addition, control device A is able to use the processing information to select request-destination customers without holding information of each power supply/demand adjustment device maintained by customers. As a result, control device A need not manage personal information of customers such as the information of each power supply/demand adjustment device that is maintained by each customer.

Modifications of the present example embodiment are next described.
The processing information may further indicate a power value that can be supplied when the adjustment unit executes the application that is indicated by the processing information.

In addition, the control device may include a storage unit that stores processing information.

FIG. 1B shows control device AA that has a storage unit for storing processing information.

Control device AA includes storage unit AA1 and selection unit AA2.

Storage unit AA stores processing information.

Selection unit AA2 includes acquisition unit A1 and reporting unit A2.

FIG. 1C shows control device AA that includes storage unit AA1 and selection unit AA2 that includes acquisition unit A1 and reporting unit A2.

Selection unit AA2 acquires processing information from storage unit AA1. Selection unit AA2 uses the processing information to identify, for each application, customers that maintain adjustment units that can accommodate the application. For each application, selection unit AA2 selects, from among customers that have been identified for each application, request-destination customers that are the request destinations of the application on the basis of information (predetermined conditions) that indicate characteristics relating to applications. For each application, selection unit AA2 reports the actuation of the application to the request-destination customers of the application. Selection unit AA2 may also receive processing information for each customer from each customer-side device maintained by the customers and store the processing information in storage unit AA1.

When acquisition unit A1 and reporting unit A2 are provided separately from selection unit AA2, selection unit AA2 becomes a device that has the function of selecting, for each application, request-destination customers of the application on the basis of processing information and information that indicates characteristics relating to applications.

In the present modification and example embodiments described hereinbelow, the selection unit may also be inside the reporting unit, or may also be provided separately from the reporting unit. In addition, the storage unit may be inside the acquisition unit or may be provided separately from the acquisition unit.

**Second Example Embodiment**

FIG. 3 shows control device B of the second example embodiment of the present invention.

The main points of difference between the second example embodiment and the first example embodiment are that, in the second example embodiment, the processing information for each customer further indicates an interval in which the adjustment unit of a customer can execute the application that is indicated by the processing information, and the predetermined conditions include an execution interval of each application. The second example embodiment is next described with focus on the points of difference with the first example embodiment.

Control device B includes storage unit B1 and selection unit B2.

Storage unit B1 stores processing information for each customer.
In the present example embodiment, each item of processing information indicates an application that can be accommodated by an adjustment unit that is maintained by a customer, a power value that can be supplied when the adjustment unit executes the application, and an interval in which the adjustment unit can execute the application.

In the present example embodiment, a power supply/demand adjustment device that can accommodate application AP3 among the power supply/demand adjustment devices contained in an adjustment unit can also accommodate applications AP1-AP2. In addition, a power supply/demand adjustment device that can accommodate application AP2 among the power supply/demand adjustment devices that are contained in an adjustment unit can also accommodate application AP1.

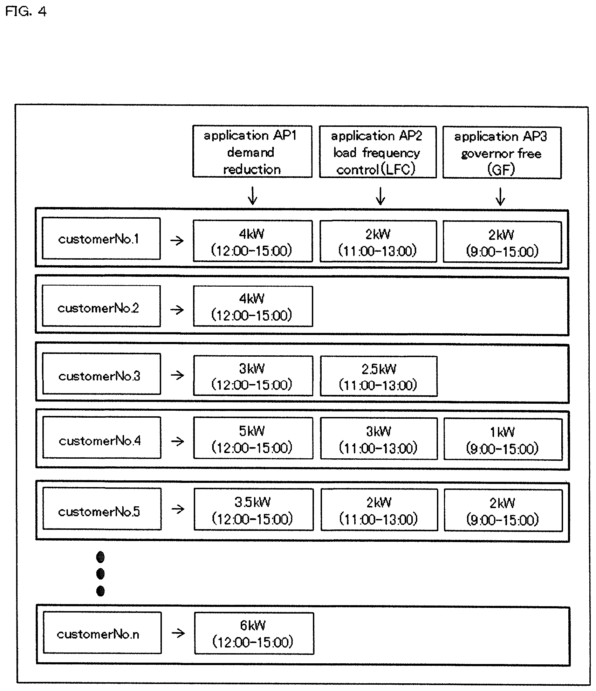

FIG. 4 shows an example of the processing information for each customer.

The processing information for each customer shown in FIG. 4 indicates the following content.

The adjustment unit of customer No. 1 is capable of accommodating applications AP1-AP3, is capable of executing each of applications AP1-AP3 in the intervals of 12:00-15:00, 11:00-13:00, and 9:00-15:00, respectively, and is capable of supplying the power 4kW, 2kW and 2kW in applications AP1-AP3, respectively.

The adjustment unit of customer No. 2 is capable of accommodating application AP1, is capable of executing application AP1 in the interval 12:00-15:00, and is capable of supplying power of 4kW in application AP1.

The adjustment unit of customer No. 3 is capable of accommodating applications AP1-AP2, is capable of executing applications AP1-AP2 in the intervals 12:00-15:00 AND 11:00-13:00, respectively, and is capable of supplying power of 3kW and 2.5kW in applications AP1-AP2, respectively.

The adjustment unit of customer No. 4 is capable of accommodating applications AP1-AP3, is capable of executing each of applications AP1-AP3 in the intervals 12:00-15:00, 11:00-13:00, and 9:00-15:00, respectively, and is capable of supplying power of 5kW, 3kW, and 1kW in applications AP1-AP3, respectively.

The adjustment unit of customer No. 5 is capable of accommodating applications AP1-AP3, is capable of executing each of applications AP1-AP3 in the intervals 12:00-15:00, 11:00-13:00, and 9:00-15:00, respectively, and is capable of supplying power of 3.5kW, 2kW, and 2kW in applications AP1-AP3, respectively.

The adjustment unit of customer No. n is capable of accommodating application AP1, is capable of executing application AP1 in the interval 12:00-15:00, and is capable of supplying power of 6kW in application AP1.

The power value that can be supplied in each application is the power value that can be supplied when the adjustment unit is executing that application alone.

For example, it will be assumed that adjustment unit that is maintained by customer No. 1 is made up of a storage battery and a plurality of household appliances. It is then further assumed that in customer No. 1, a storage battery whose output power is 2kW can accommodate applications AP1-AP3 and that a plurality of household appliances whose total value of output power is 2kW can accommodate application AP1. In this case, the adjustment unit of customer No. 1 is capable of supplying 4kW, 2kW, and 2kW of power in applications AP1-AP3, respectively.

Selection unit B2 is one example of the acquisition unit and the reporting unit.

The acquisition unit in selection unit B2 acquires processing information from storage unit B1. Selection unit B2 uses the processing information that was acquired from storage unit B1 to identify, for each application, customers that maintain adjustment units that can accommodate the application. In addition, selection unit B2, based on the predetermined conditions, selects request-destination customers for each application from among the customers that have been identified for each application.

In the present example embodiment, selection unit B2 uses the condition regarding the execution interval of the application as the predetermined condition.

It is assumed that the execution interval of each application is as shown below. The execution interval of each application is not limited to the intervals shown below and can be altered as appropriate.

Execution interval of application AP1: 12:00-15:00
Execution interval of application AP2: 11:00-13:00
Execution interval of application AP3: 9:00-15:00
The execution intervals of each application are stored in storage unit B1.

The reporting unit in selection unit B2 reports, for each application, the actuation of the application to the request-destination customers of the application.

The operation of the present example embodiment is next described.

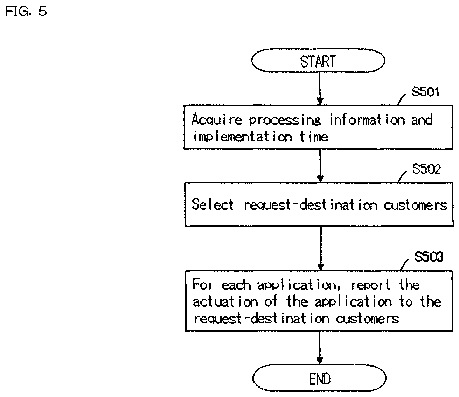

FIG. 5 is a flow chart for describing the operation of control device B.

The acquisition unit in selection unit B2 acquires the processing information and the execution intervals of the applications from storage unit B1 (Step S501).

On the basis of the processing information and the execution intervals of applications, selection unit B2 next selects, for each application, the request-destination customers from among the customers that maintain adjustment units that can accommodate the application (Step S502).

For example, selection unit B2 uses the processing information to identify, for each of applications AP1-AP3, customers that maintain adjustment units that can handle the applications.

Selection unit B2 next selects as the request-destination customer of application AP1 a customer that maintains an adjustment unit that can execute the application in the execution interval of application AP1 from among customers that maintain adjustment units that handle application AP1.

Selection unit B2 next selects as the request-destination customer of application AP2 a customer who maintains an adjustment unit that can execute application AP2 in an interval other than the execution interval of application AP1 from among the customers who maintain adjustment units that can handle application AP2.

Selection unit B2 next selects as the request-destination customers of application AP3 customers who maintain adjustment units that can execute application AP3 in an interval other than the execution intervals of applications AP1 and AP2 from among customers who maintain adjustment units that can handle application AP3.

The reporting unit in selection unit B2 next reports, for each application, the actuation of the application to the request-destination customers of the application (Step S503).

The effect of the present example embodiment is next described.

In the present example embodiment, selection unit B2 selects for each application request-destination customers from among customers that maintain adjustment units that can accommodate the application on the basis of the processing information and the execution interval of the application. The present example embodiment thus enables an improvement in the reliability and accuracy of the execution of an application with respect to the execution interval of the application.

A modification of the present example embodiment is next described.

Although selection unit B2 selected the request-destination customers of applications AP1-AP3 in the order of applications AP1, AP2, and AP3, the order of the applications for which request-destination customers are selected is not limited to the order of applications AP1, AP2, and AP3 and can be altered as appropriate.

**Third Example Embodiment**

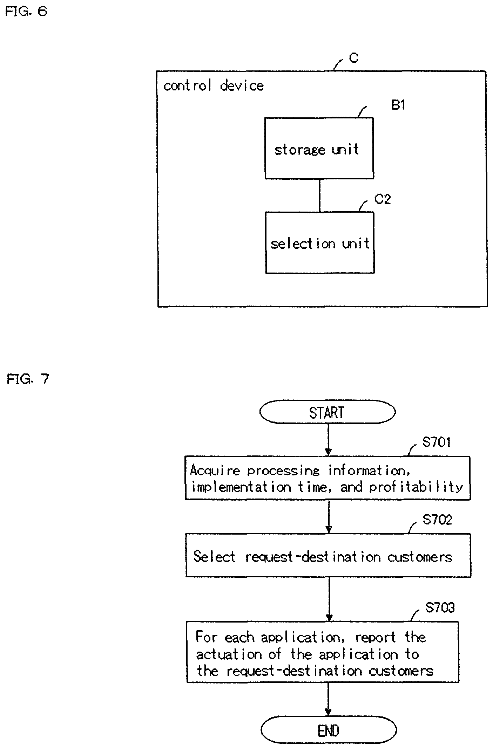

FIG. 6 shows control device C of the third example embodiment of the present invention. In FIG. 6, components that are the same as shown in FIG. 5 are given the same reference numbers.

The main point of difference between the third example embodiment and the second example embodiment is that, in the third example embodiment, a condition regarding the profitability of an application is used as a predetermined condition in addition to the condition regarding the execution interval of the application. The third example embodiment is next described while focusing on the points of difference with the second example embodiment.

Control device C includes storage unit B1 and selection unit C2.

In the present example embodiment as well, a power supply/demand adjustment device that is capable of accommodating application AP3 among power supply/demand adjustment devices that are included in an adjustment unit is also capable of accommodating applications AP1-AP2. In addition, a power supply/demand adjustment device that is capable of accommodating application AP2 among the power supply/demand adjustment devices included in an adjustment unit is also capable of accommodating application AP1.

Selection unit C2 is one example of the acquisition unit and the reporting unit.

The acquisition unit in selection unit C2 acquires processing information from storage unit B1.

Selection unit C2 uses the processing information that was acquired from storage unit B1 to identify, for each application, customers that maintain adjustment units that are capable of accommodating the application. In addition, selection unit C2 selects, from among the customers that have been identified for each application, request-destination customers for each application on the basis of a predetermined condition.

In the present example embodiment, selection unit C2 uses a condition regarding the execution interval of the application and a condition regarding the profitability of the application as the predetermined conditions.

The execution interval of each application is the same as the execution interval of an application in the second example embodiment.

Selection unit C2 uses the profitability of the application to select request-destination customers. The profitability of an application refers to the compensation that is paid to a customer that maintains an adjustment unit when the adjustment unit is used in the implementation of the application.

The profitability of each application is as shown hereinbelow. The profitability of each application is not limited to the values shown below and can be altered as appropriate.

| | |
|---|---|
| Profitability of application AP1: | 7 yen/kW × 1h |
| Profitability of application AP2: | 5 yen/kW × 1h |
| Profitability of application AP3: | 2 yen/kW × 1h |

The profitability of each application is stored in storage unit B1.

The reporting unit of selection unit C2 reports, for each application, the actuation of the application to the request-destination customers of the application.

The operation of the present example embodiment is next described.

FIG. 7 is a flow chart for describing the operation of control device C.

The acquisition unit in selection unit C2 acquires the processing information and the profitability and execution intervals of applications from storage unit B1 (Step S701).

Selection unit C2 next selects, for each application, request-destination customers from among customers that maintain adjustment unit that are capable of accommodating the application on the basis of the processing information and the execution interval and profitability of the application (Step S702).

For example, selection unit C2 uses the processing information to identify, for each of applications AP1-AP3, customer that maintain adjustment units that are capable of accommodating the applications.

Selection unit C2 next selects, from among the customers that maintain adjustment units that are capable of accommodating application AP1, that has the highest profitability among applications AP1-AP3, customers that maintain adjustment units that are capable of executing application AP1 in the execution interval of application AP1 as the request-destination customers of application AP1.

Selection unit C2 next selects, from among customers that maintain adjustment units that are capable of accommodating application AP2, that has the next highest profitability after application AP1, customers that maintain adjustment units that are capable of executing application AP2 in intervals other than the execution interval of application AP1 as the request-destination customers of application AP2.

Selection unit C2 next selects, from among customers that maintain adjustment units that are capable of handling application AP3 that has the next highest profitability after application AP2, customers that maintain adjustment units that are capable of executing application AP3 in intervals other than the execution intervals of applications AP1 and AP2 as the request-destination customers of application AP3.

The reporting unit in selection unit C2 next reports, for each application, the actuation of the application to the request-destination customers of the application (Step S703).

The effect of the present example embodiment is next described.

In the present example embodiment, selection unit C2 selects, for each application, request-destination customers from among customers that maintain adjustment units that are capable of accommodating the application on the basis of the processing information and the execution interval and profitability of the application. As a result, the present example embodiment enables an improvement of the reliability of execution of the application with respect to the execution interval of the application, and from the viewpoint of the request-destination customers, enables an improvement of the profit efficiency for applying the power supply/demand adjustment device to the application.

A modification of the present example embodiment is next described.

Selection unit C2 may also select, for each application, request-destination customers from among customers that maintain adjustment units that are capable of accommodating the application on the basis of the processing information and the profitability of the application.

**Fourth Example Embodiment**

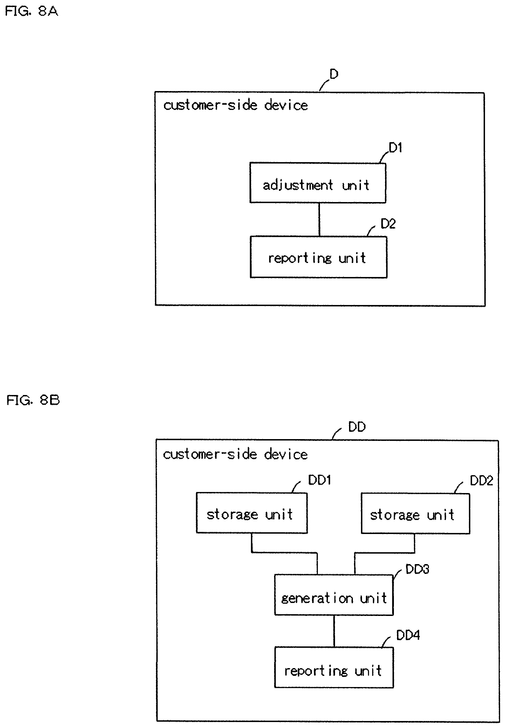

FIG. 8A shows customer-side device D of the fourth example embodiment of the present invention. Customer-side device D is an example of a customer-side device that was described in the explanation of the first example embodiment.

Customer-side device D is maintained by a customer that maintains an adjustment unit that includes one or more power supply/demand adjustment devices.

Customer-side device D contains adjustment unit D1 and reporting unit D2.

Adjustment unit D1 manages for each customer information relating to one or more power supply/demand adjustment devices.

Reporting unit D2 transmits to an outside device processing information that indicates, on the basis of information that indicates characteristics relating to power supply/demand adjustment processing and information relating to power supply/demand adjustment devices in the adjustment unit of each customer, whether the execution of power supply/demand adjustment processing can be accommodated.

The characteristics of each of applications AP1-AP3 are used as the characteristics relating to the power supply/demand adjustment processing.

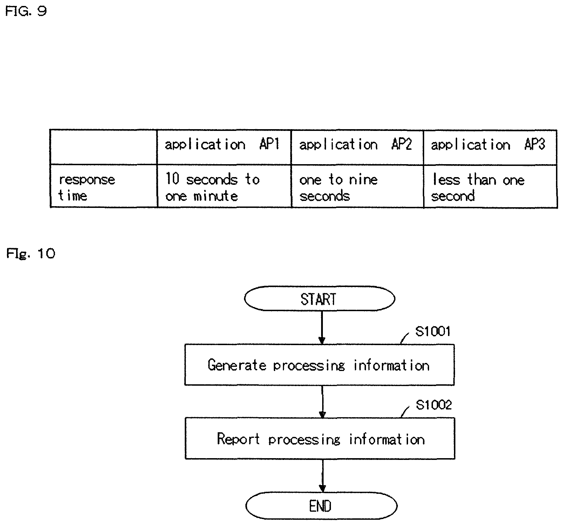

FIG. 9 shows an example of a characteristic of each of applications AP1-AP3.

In FIG. 9, the response time is used as the characteristic of each of applications AP1-AP3.

The response time refers to the response time that is required by an application. The response time of an application is an example of a response characteristic required by an application.

Further, in the present example embodiment, the information of an adjustment unit that comprehends and manages the characteristics of one or more power supply/demand adjustment devices in the adjustment unit of each customer is used as the information that relates to power supply/demand adjustment devices in the adjustment unit of each customer. In the present example embodiment, the information of each of one or more power supply/demand adjustment devices that are contained in an adjustment unit is used as the information of the adjustment unit.

The operation of the present example embodiment is next described.

FIG. 10 is a flow chart for describing the operation of customer-side device D.

Reporting unit D2 generates processing information that indicates whether there is any capability to accommodate the execution of power supply/demand adjustment processing on the basis of information that indicates characteristics relating to the power supply/demand adjustment processing and information (for example, characteristics) of adjustment unit D1 that contains one or more power supply/demand adjustment devices in units of customers as information relating to power supply/demand adjustment devices in units of customers (Step S1001).

In the present example embodiment, the processing information represents applications for which there are adjustment units that can satisfy the characteristics. Further, an adjustment unit that satisfies the characteristics is an example of an adjustment unit that accommodates the characteristics.

For example, reporting unit D2 generates processing information that represents applications that represents, from among power supply/demand adjustment devices that are contained in an adjustment unit, power supply/demand adjustment devices that meet the following Condition (a).

Condition (a): A response time that is equal to or less than the response time of the application.

Information that indicates the "response times" of power supply/demand adjustment devices contained in the adjustment unit is stored in adjustment unit D1.

The "response time" of a power supply/demand adjustment device is an example of the response characteristic of the power supply/demand adjustment device.

Reporting unit D2 next reports the processing information to an outside device (for example, above-described control devices A, AA, B, and C) (Step S1002).

The effect of the present example embodiment is next described.

In the present example embodiment, adjustment unit D1 manages information relating to one or more power supply/demand adjustment devices for each customer. Reporting unit D2 transmits to an outside device processing information that indicates whether there is any capability to execute power supply/demand adjustment processing on the basis of information indicating characteristics relating to the power supply/demand adjustment processing and information relating to the power supply/demand adjustment devices in the adjustment unit of each customer.

As a result, the outside device is able to check the applications that customer-side device D is capable of accommodating on the basis of the processing information. The outside device is thus able to submit a request regarding the application to a customer who maintains a power supply/demand adjustment device that is capable of accommodating the application.

A modification of the present example embodiment is next described.

Although the response time was used as the characteristic of the application in the present example embodiment, the characteristic of the application is not limited to the response time and can be altered as appropriate.

In addition, a customer-side device may include a storage unit that stores the characteristics of each of applications AP1-AP3 and a storage unit that stores information (for example, characteristics) of adjustment units that contain one or more power supply/demand adjustment devices.

FIG. 8B shows customer-side device DD that has storage unit DD1 that stores the characteristics of each of applications AP1-AP3 and storage unit DD2 that stores information (for example, characteristics) of adjustment units that contain one or more power supply/demand adjustment devices.

Customer-side device DD includes storage units DD1 and DD2, generation unit DD3, and reporting unit DD4. Storage unit DD2 is an example of adjustment unit D1. A configuration that includes generation unit DD3 and reporting unit DD4 is an example of reporting unit D2. Storage unit DD1 is an example of the first storage unit. Storage unit DD1 stores the characteristics of each of applications AP1-AP3. In this example, storage unit DD1 stores the characteristic shown in FIG. 9.

Storage unit DD2 is an example of the second storage unit. Storage unit DD2 stores information (for example, characteristics) of adjustment units that contain one or more power supply/demand adjustment devices. In the present example embodiment, storage unit DD2 stores, as the information of adjustment units, information of each of the one or more power supply/demand adjustment devices that are contained in an adjustment unit.

Generation unit DD3 uses the characteristics that are stored in storage unit DD1 and the information that is stored in storage unit DD2 to generate processing information that represents applications for which there are adjustment units that accommodate the characteristics. Reporting unit DD4 reports the processing information that was generated by generation unit D3 to an outside device (for example, control devices A, AA, B, and C described above).

The operation of the present example embodiment is next described.

The operation of customer-side device DD is described by again referring to FIG. 10. Generation unit DD3 uses the characteristics that are stored in storage unit DD1 and the information that is stored in storage unit DD2 to generate processing information that represents applications for which there are adjustment units that satisfy the characteristics (Step S1001). An adjustment unit that satisfies the characteristics is an example of an adjustment unit that is compatible with the characteristics.

For example, generation unit DD3 generates processing information that represents an application for which there are, among power supply/demand adjustment devices that are contained in an adjustment unit, power supply/demand adjustment devices that satisfy the above-described Condition (a).

Further, information that indicates the "response time" of the power supply/demand adjustment device contained in the adjustment unit is stored in storage unit DD2.

Generation unit DD3 next supplies the processing information to reporting unit DD4.

Reporting unit DD4, upon receiving the processing information, reports this processing information to an outside device (for example, the above-described control devices A, AA, B, and C) (Step S1002).

Storage unit DD1 may also serve as storage unit DD2. In this case, storage unit DD1 stores the characteristics of each of applications AP1-AP3 and information (such as characteristics) of adjustment units that contain one or more power supply/demand adjustment devices

One or both of storage unit DD1 and storage unit DD2 may be incorporated in generation unit DD3. For example, storage unit DD1 and storage unit DD2 may also be memory that is incorporated in generation unit DD3.

## Fifth Example Embodiment

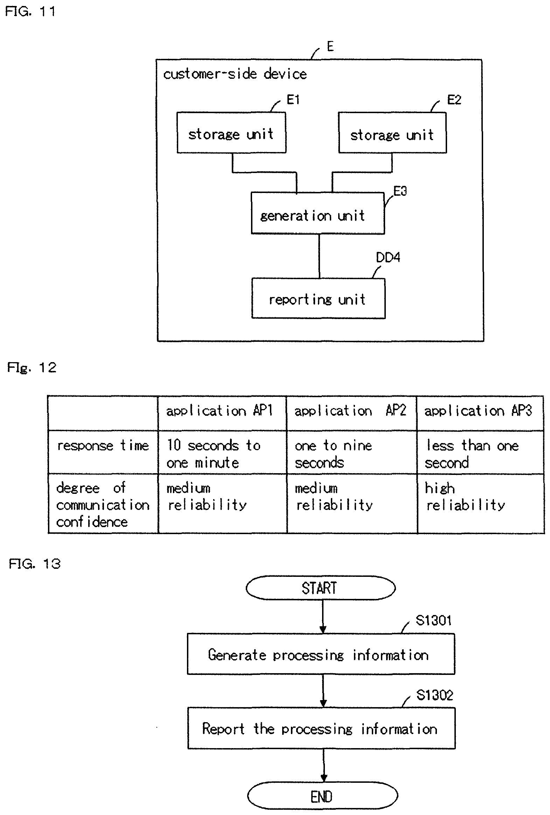

FIG. 11 shows customer-side device E of the fifth example embodiment of the present invention. In FIG. 11, components having the same configuration as components shown in FIG. 8 are given the same reference numbers.

The main point of difference between the fifth example embodiment and the fourth example embodiment is that communication characteristics that are required by each application are used in addition to the response times of each application as the characteristics of each of applications AP1-AP3. The fifth example embodiment is next described while focusing on the points of difference with the fourth example embodiment.

Customer-side device E is an example of the customer-side device described in the explanation of the first example embodiment.

Customer-side device E is maintained by a customer that maintains an adjustment unit that contains one or more power supply/demand adjustment devices.

Customer-side device E includes storage units E1 and E2, generation unit E3, and reporting unit DD4. Storage unit E2 is an example of an adjustment unit. A configuration that contains generation unit E3 and reporting unit DD4 is an example of a reporting unit. In other words, generation unit E3 and reporting unit DD4 function as a reporting unit and, on the basis of information that indicates characteristics relating to power supply/demand adjustment processing and information relating to power supply/demand adjustment devices in the adjustment unit of each customer that storage unit E2 manages as adjustment units, generate processing information that indicates whether the execution of power supply/demand adjustment processing can be accommodated. Reporting unit DD4 then functions as a reporting unit to report the processing information to an outside device.

Storage unit E1 is an example of the first storage unit. In addition to the response times of each application, storage unit E1 stores, as the characteristics of each of applications AP1-AP3, communication characteristics that are required by each application. In the present example embodiment, the degree of communication confidence required by an application is used as a communication characteristic. In the following explanation, the "degree of communication confidence required by an application" is also referred to as the "degree of communication confidence of an application."

FIG. 12 shows an example of the response times and the degree of communication confidence of each of applications AP1-AP3.

The response times of applications AP1-AP3 are the same as shown in FIG. 9.

The degree of communication confidence (medium reliability and high reliability) is an example of the communication reliability required by an application. The degree of communication confidence that is required by applications AP1 and AP2 is "medium reliability." The degree of communication confidence required by application AP3 is "high reliability."

In the present example embodiment, the degree of communication confidence (medium reliability and high reliability) is determined on the basis of the communication mode (hereinbelow referred to as "compatible communication mode") that is accommodated on the customer side.

"High reliability" means that the compatible communication mode is a VPN (Virtual Private Network) or the Internet. In an adjustment unit of a customer in which the compatible communication mode is a VPN or the Internet, communication with a power supply/demand adjustment device (for example, a storage battery) that is contained in the adjustment unit that executes the application can be realized by way of a VPN or the Internet.

"Medium reliability" means that the compatible communication mode is 3G (3rd Generation) or the Internet. In an adjustment unit of a customer in which the compatible communication mode is 3G or the Internet, communication with a power supply/demand adjustment device that is contained in the adjustment unit that executes the application can be realized by way of 3G or the Internet.

The degree of communication confidence is not necessarily determined on the basis of the compatible communication mode and can be altered as appropriate. For example, the degree of communication confidence may also be determined on the basis of the error rate that occurs in communication with the customer side (for example, customer-side device C). For example, "medium reliability" may be defined as having an error rate equal to or less than a first threshold value and "high reliability" may be defined as having an error rate equal to or lower than a second threshold value that is lower than the first threshold value.

Storage unit E2 is an example of the second storage unit. Storage unit E2 stores information (such as various characteristics) of adjustment units that contain one or more power supply/demand adjustment devices. In the present example embodiment, storage unit E2 stores, as information of adjustment units, information of each of one or more power supply/demand adjustment devices that are contained in an adjustment unit.

Generation unit E3 uses the characteristics that are stored in storage unit E1 and the information that is stored in storage unit E2 to generate processing information that represents applications for which there are adjustment units that accommodate the characteristics.

The operation of the present example embodiment is next described.

FIG. 13 is a flow chart for describing the operation of customer-side device E.

Generation unit E3 uses the characteristics that are stored in storage unit E1 and the information that is stored in storage unit E2 to generate processing information that represents applications for which there are adjustment units that satisfy the characteristics (Step S1301). An adjustment unit that satisfies the characteristics is an example of an adjustment unit that is compatible with the characteristics.

For example, generation unit E3 generates processing information that represents applications for which, of the power supply/demand adjustment devices that are contained in an adjustment unit, there is a power supply/demand adjustment device that satisfies all of the following Conditions (a)-(b).

Condition (a): a response time that is equal to or less than the response time of the application.

Condition (b): a compatible communication mode that is compatible with the degree of communication confidence of the application.

In addition, information indicating the "response time" and "compatible communication mode" of a power supply/demand adjustment device contained in an adjustment unit is stored in storage unit E2.

The "response time" of a power supply/demand adjustment device is an example of the response characteristic of the power supply/demand adjustment device.

The "compatible communication mode" of a power supply/demand adjustment device is a communication mode (for example, the Internet or a VPN) that is compatible with the power supply/demand adjustment device.

Generation unit E3 next supplies the processing information to reporting unit D4.
Upon receiving the processing information, reporting unit D4 reports this processing information to an outside device (for example, the control devices A, B, and C described above) (Step S1302).

The effects of the present example embodiment are next described.

In the present example embodiment, generation unit E3 uses the response time and degree of communication confidence that are stored in storage unit E1 and the information that is stored in storage unit E2 to generate processing information that represents applications for which there are adjustment units that satisfy the response time and degree of communication confidence. Reporting unit D4 reports the processing information that was generated by generation unit E3 to an outside device.

As a result, the outside device is able to check applications that can be accommodated by customer-side device D on the basis of the processing information. The outside device is thus able to submit a request regarding the application to a customer that maintains a power supply/demand adjustment device that is capable of accommodating the application.

A modification of the present example embodiment is next described.

Although the response time and the degree of communication confidence were used as characteristics of an application in the present example embodiment, the characteristics of an application are not limited to the response time and the degree of communication confidence and can be altered as appropriate. For example, the degree of communication confidence alone may also be used as the characteristic of an application.

Storage unit E1 may also serve as storage unit E2. In this case, storage unit E1 stores the characteristics of each of applications AP1-AP3 and information (such as characteristics) of adjustment units that contain one or more power supply/demand adjustment devices.

Either one or both of storage unit E1 and storage unit E2 may be incorporated in generation unit E3. For example, storage unit E1 and storage unit E2 may be memory that is incorporated in generation unit E3.

**Sixth Example Embodiment**

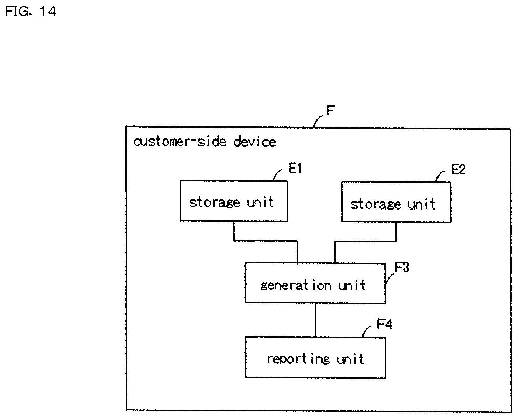

FIG. 14 shows customer-side device F of the sixth example embodiment of the present invention. In FIG. 14, components having the same configuration as shown in FIG. 11 are given identical reference numbers.

The main point of difference between the sixth example embodiment and the fifth example embodiment is that in the sixth example embodiment, a customer-side device controls the operation of an adjustment unit in accordance with operation control information that was transmitted from the transmission destination (outside device) of the processing information and that reflects the power demand adjustment processing content of an application that the adjustment unit can accommodate. The sixth example embodiment is next described while focusing on the point of difference with the fifth example embodiment.

Customer-side device F is an example of the customer-side device that was described in the explanation of the first example embodiment.

Customer-side device F is maintained by a customer that maintains an adjustment unit that contains one or more power supply/demand adjustment devices.

Customer-side device F contains storage units E1 and E2, generation unit F3, and reporting unit F4.

Storage unit E2 is an example of an adjustment unit. A configuration that includes generation unit F3 and reporting unit F4 is an example of a reporting unit. In other words, generation unit F3 and reporting unit F4 function as a reporting unit, and on the basis of information that indicates characteristics relating to power supply/demand adjustment processing and information relating to power supply/demand adjustment devices in the adjustment unit of each customer that storage unit E2 manages as adjustment units, generate processing information that indicates whether the execution of power supply/demand adjustment processing can be accommodated. Reporting unit F4 then functions as the reporting unit to report the processing information to an outside device.

Reporting unit F4 has the function of receiving in period T1 operation control information that reflects the power demand adjustment processing content of an applications that can be accommodated by the adjustment unit from the transmission destination (for example, control devices A, B, and C described above). Reporting unit F4 may further alter period T1 within a time range that is equal to or greater than the standard interval T1s. In addition, reporting unit F4 supplies operation control information to generation unit F3. Here, $T1 \geq T1s$.

The operation control information is next described.

In the following explanation, operation control information that reflects the power demand adjustment processing content of applications AP1, AP2, and AP3 is also referred to as "application AP1 operation control information," "Application AP2 operation control information," and "application AP3 operation control information," respectively.

The operation control information of application AP1 is operation control information used for peak-cutting (demand reduction) processing. The operation control information of application AP1 is, for example, operation control information that indicates the power amount of the object of reduction.

The operation control information of application AP2 is operation control information for LFC. The operation control information of application AP2 is operation control information that stipulates a process that controls the operation of an adjustment unit on the basis of the integrated value of the frequency deviation (deviation from the standard frequency) of the grid frequency of the power grid to which the adjustment unit is connected.

The operation control information of application AP3 is operation control information for GF. The operation control information of application AP3 is operation control information that stipulates a process that controls the operation of an adjustment unit on the basis of the frequency deviation of the grid frequency of the power grid to which the adjustment unit is connected.

The transmission destination of the processing information uses the processing information to identify, as request-destination customers (customer-side devices), all or a portion of the customers that maintain adjustment units that are capable of accommodating the application. The transmission destination of the processing information then transmits, in period T1 the operation control information of the application that the adjustment units can accommodate, to the request-destination customers (customer-side devices).

In addition to the function belonging to generation unit E3, generation unit F3, upon receiving the operation control information, controls the operation of an adjustment unit in accordance with the operation control information in a period T2 that is shorter than standard interval T1s. Generation unit F3 may also change period T2 within a time range that is shorter than the standard interval T1s.

In the present example embodiment, reporting unit F4 repeatedly executes the reception of operation control information in period T1. Generation unit F3 controls the operation of an adjustment unit in accordance with the operation control information in period T2 that is shorter than period T1. Generation unit F3 is capable of using operation control information that has been received once multiple times to control the operation of an adjustment unit.

Generation unit F3 is thus able to use the operation control information that has been received to control the operation of an adjustment unit even if a failure occur in the communication of new operation control information.

Accordingly, in the present example embodiment, generation unit F3 may also generate processing information that represents applications for which adjustment units exist that do not satisfy the degree of communication confidence that is required by an application.

**Seventh Example Embodiment**

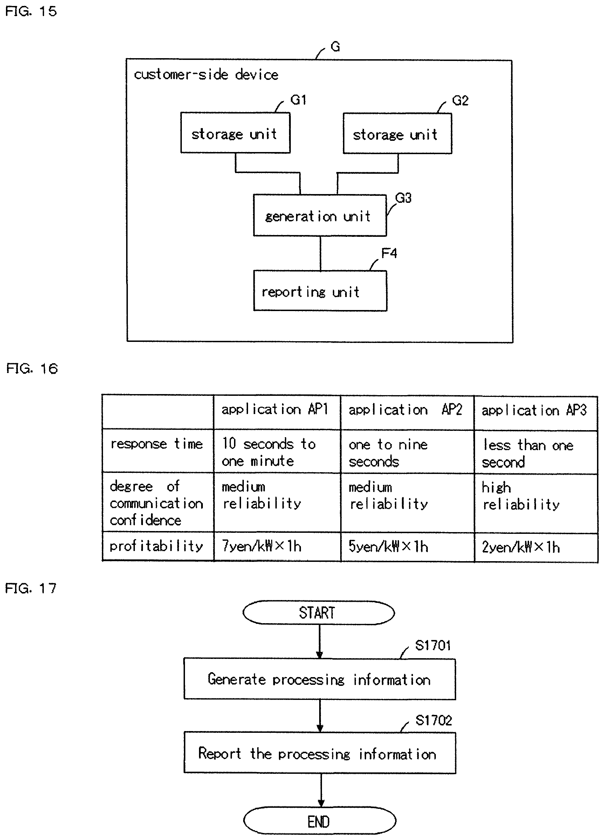

FIG. 15 shows customer-side device G of the seventh example embodiment of the present invention. In FIG. 15, components of the same configuration as components shown in FIG. 14 are given the same reference numbers.

The point of difference between the seventh example embodiment and the sixth example embodiment is that the profitability of each application is also used as a characteristic of each of applications AP1-AP3 in the seventh example embodiment in addition to the response times and degree of communication confidence of each of the applications.

When an adjustment unit is used in the execution of an application in the present example embodiment, the compensation that is paid to the person that maintains the adjustment unit (the customer) is used as the profitability of the application.

In addition, a point of difference between the seventh example embodiment and the sixth example embodiment regarding configuration is that storage units G1 and G2 and generation unit G3 are used in place of storage units E1 and E2 and generation unit F3 in the fourth example embodiment.

The seventh example embodiment is next described while focusing on the points of difference with the sixth example embodiment.

Customer-side device G is an example of the customer-side device that is described in the explanation of the first example embodiment.

Customer-side device G is maintained by a customer that maintains an adjustment unit that contains one or more power supply/demand adjustment devices.

Customer-side device G contains storage units G1 and G2, generation unit G3, and reporting unit F4. Storage unit G2 is an example of an adjustment unit. The configuration that includes generation unit G3 and reporting unit F4 is an example of a reporting unit. In other words, generation unit G3 and reporting unit F4 function as a reporting unit and generate processing information that indicates whether there is capability to execute power supply/demand adjustment processing on the basis of information that indicates characteristics relating to power supply/demand adjustment processing and information that relates to power supply/demand adjustment devices in the adjustment unit of each customer who storage unit G2 manages as adjustment units. Reporting unit F4 then functions as a reporting unit and reports the processing information to an outside device.

Storage unit G1 is an example of the first storage unit. Storage unit G1 stores the profitability of each application as a characteristic of each of applications AP1-AP3 in addition to the response time and degree of communication confidence of each application.

FIG. 16 shows an example of the response time, degree of communication confidence, and profitability of applications AP1-AP3.

The response time and degree of communication confidence of applications AP1-AP3 is identical to the content shown in FIG. 12.

The profitability of application AP1 is 7 yen / kW $\times$ 1h.

The profitability of application AP2 is 5 yen / kW $\times$ 1h.

The profitability of application AP3 is 2 yen / kW $\times$ 1h.

Storage unit G2 is an example of the second storage unit. Storage unit G2 stores information (such as various characteristics) of adjustment units that contain one or more power supply/demand adjustment devices. In the present example embodiment, storage unit G2 stores as information of the adjustment units various items of information of one or more power supply/demand adjustment devices that are contained in the adjustment units.

Generation unit G3 uses the characteristics that are stored in storage unit G1 and the information that is stored in storage unit G2 to generate processing information that represents applications for which there are adjustment units that accommodate the characteristics.

The operation of the present example embodiment is next described.

FIG. 17 is a flow chart for describing the operation of customer-side device G.

Generation unit G3 uses the characteristics that are stored in storage unit G1 and the information that is stored in storage unit G2 to generate processing information that represents applications for which there are adjustment units that satisfy the characteristics (Step S1701). An adjustment unit that satisfies the characteristics is an example of an adjustment unit that accommodates the characteristics.

For example, generation unit G3 generates processing information that represents an application for which there is a power supply/demand adjustment device that satisfies all of the following Conditions (a)-(c) among the power supply/demand adjustment devices that are contained in an adjustment unit.

Condition (a): a response time that is equal to or less than the response time of the application.

Condition (b): a compatible communication mode that is compatible with the degree of communication confidence of the application.

Condition (c): a profitability condition that satisfies the profitability of the application.

The information that indicates the "response time," "compatible communication mode", and "profitability condition" of a power supply/demand adjustment device that is contained in an adjustment unit is stored in storage unit G2.

The "response time" of a power supply/demand adjustment device is an example of the response characteristics of a power supply/demand adjustment device.

The "compatible communication mode" of a power supply/demand adjustment device is a communication mode (for example, the Internet or a VPN) with which a power supply/demand adjustment device is compatible.

The "profitability condition" of a power supply/demand adjustment device is an example of a compensation condition in which compensation for using a power supply/demand adjustment device is equal to or greater than a predetermined value. The profitability condition is, for example, set by each customer. The profitability condition may also be set by a person or device that differs from the customer.

For example, the profitability condition of customer No. 1 is equal to or greater than 2 yen / kW $\times$ 1h. The value 2 yen / kW $\times$ 1h is an example of a predetermined value. The profitability condition of customer No. 2 is equal to or greater than 5 yen / kW $\times$ 1h. The value 5 yen / kW $\times$ 1h is an example of a predetermined value. The profitability condition of customer No. 3 is not limited. In this case, the predetermined value corresponds to 0 yen.

Generation unit G3 next supplies processing information to reporting unit F4.

Upon receiving the processing information, reporting unit F4 reports this processing information to an outside device (for example, the above-described control devices A, B, and C) (Step S1702).

The effect of the present example embodiment is next described.

In the present example embodiment, generation unit G3 uses the response time, degree of communication confidence, and profitability that are stored in storage unit G1 and the information that is stored in storage unit G2 to generate processing information that represents applications for which there are adjustment units that satisfy the response times, degree of communication confidence, and profitability. Reporting unit F4 reports the processing information that was generated by generation unit G3 to an outside device.

As a result, the outside device is able to check an application that customer-side device G can accommodate on the basis of the processing information. The outside device is thus able to submit a request regarding the application to a customer that maintains a power supply/demand adjustment device that can accommodate the application.

A modification of the present example embodiment is next described.

In the present example embodiment, the response time, degree of communication confidence and profitability were used as the characteristics of an application, but the characteristics of the application are not limited to the response time, degree of communication confidence and profitability and can be altered as appropriate. For example, the profitability alone may also be used as the characteristic of the application.

Storage unit G1 may also serve as storage unit G2. In this case, storage unit G1 stores the characteristics of each of applications AP1-AP3 and information (such as characteristics) of adjustment units that contain one or more power supply/demand adjustment devices.

Either one or both of storage unit G1 and storage unit G2 may be incorporated in generation unit G3. For example, storage unit G1 and storage unit G2 may be memory that is incorporated in generation unit G3.

**Eighth Example Embodiment**

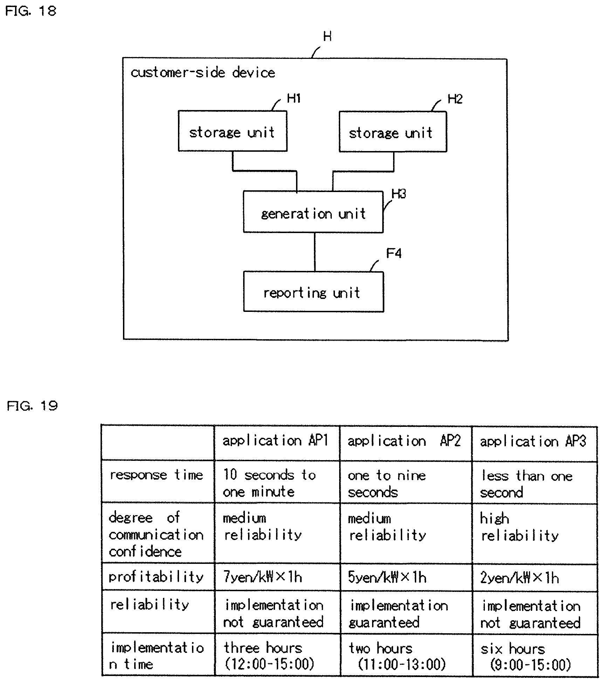

FIG. 18 shows customer-side device H of the eighth example embodiment of the present invention. In FIG. 18, components having the same configuration as components shown in FIG. 15 are given the same reference numbers.

The main point of difference between the eighth example embodiment and the seventh example embodiment is that in the eighth example embodiment, the reliability of implementation and the implementation time of an application by an adjustment unit are used as characteristics of each of applications AP1-AP3 in addition to the response time, communication reliability, and profitability of each application.

In the present example embodiment, "implementation guaranteed" and "implementation not guaranteed" are used to mean reliability.

"Implementation guaranteed" means that an application requires that an adjustment unit ensure (guarantee) that an application will be executed.

"Implementation not guaranteed" means that an application does not require that an adjustment unit ensure (guarantee) that an application will be executed.

A point of difference regarding configuration between the eighth example embodiment and the seventh example embodiment is that in the eighth example embodiment, storage units H1 and H2 and generation unit H3 are used in place of storage units G1 and G2 and generation unit G3.

The eighth example embodiment is next described while focusing on the points of difference with the seventh example embodiment.

Customer-side device H is an example of the customer-side device described in the explanation of the first example embodiment.

Customer-side device H is maintained by a customer that maintains an adjustment unit that contains one or more power supply/demand adjustment devices.

Customer-side device H includes storage units H1 and H2, generation unit H3 and reporting unit F4.

Storage unit H2 is an example of an adjustment unit. The configuration that contains generation unit H3 and reporting unit F4 is an example of a reporting unit. In other words, generation unit H3 and reporting unit F4 function as a reporting unit and generate processing information that indicates whether the execution of power supply/demand adjustment processing can be accommodated on the basis of information that indicates characteristics relating to the power supply/demand adjustment processing and information relating to power supply/demand adjustment devices in the adjustment unit of each customer that storage unit H2 manages as adjustment units. Reporting unit F4 then functions as a reporting unit and reports this processing information to an outside device.

Storage unit H1 is an example of the first storage unit. Storage unit H1 stores the reliability (implementation guaranteed and implementation not guaranteed) and the implementation time of each application in addition to the response time, degree of communication confidence, and profitability of each application as the characteristics of each of applications AP1-AP3.

FIG. 19 shows an example of the response time, degree of communication confidence, profitability, reliability, and implementation time of applications AP1-AP3.

The response time, degree of communication confidence, and profitability of applications AP1-AP3 are identical that the values shown in FIG. 16.

The reliability and implementation time of application AP1 are "implementation not guaranteed" and three hours (12:00-15:00), respectively.

The reliability and implementation time of application AP2 are "implementation guaranteed" and two hours (11:00-13:00), respectively.

The reliability and implementation time of application AP3 are "implementation not guaranteed" and six hours (9:00-15:00), respectively.

Storage unit H2 is an example of the second storage unit. Storage unit H2 stores the information (such as various characteristics) of adjustment units that contain one or more power supply/demand adjustment devices. In the present example embodiment, storage unit H2 stores information of each of one or more power supply/demand adjustment devices that are contained in an adjustment unit as the information of the adjustment unit.

Generation unit H3 uses the characteristics that are stored in storage unit H1 and the information that is stored in storage unit H2 to generate processing information that represents an application for which there are adjustment units that can accommodate the characteristics.

The operation of the present example embodiment is next described.

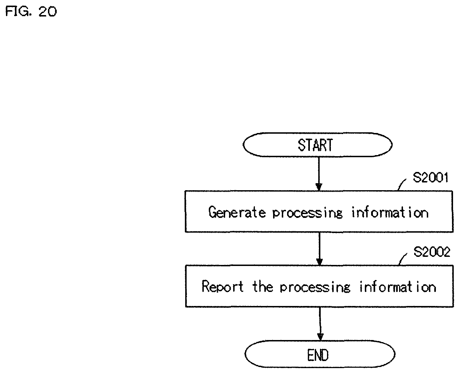

FIG. 20 is a flow chart for describing the operation of customer-side device H.

Generation unit H3 uses the characteristics that are stored in storage unit H1 and the information that is stored in storage unit H2 to generate processing information that represents applications for which there are adjustment units that satisfy the characteristics (Step S2001). The adjustment units that satisfy the characteristics are examples of adjustment units that are compatible with the characteristics.

For example, generation unit H3 generates processing information that represents applications for which there are, from among power supply/demand adjustment devices that are contained in an adjustment unit, a power supply/demand adjustment device that satisfies all of following Conditions (a)-(e):

Condition (a): a response time that is equal to or less than the response time of the application
Condition (b): a compatible communication mode that accommodates the degree of communication confidence of the application
Condition (c): a profitability condition that is satisfied by the profitability of the application
Condition (d): an implementation guarantee characteristic that satisfies the reliability of the application
Condition (e): a usage-permitted interval that is contained in the implementation time of the application

In addition, in Condition (d), the implementation guarantee characteristic that satisfies the "implementation not guaranteed" of the reliability of the application is "implementation guaranteed" and "implementation not guaranteed," and the implementation guarantee characteristic that satisfies the reliability "implementation guaranteed" of the application is "implementation guaranteed."

Further, information that indicates the "response time," "compatible communication mode," "profitability condition," "implementation guarantee characteristic," and "usage-permitted interval" of power supply/demand adjustment devices that are contained in an adjustment unit is stored in storage unit H2.

The "implementation guarantee characteristic" of a power supply/demand adjustment device is an example of the implementation guarantee condition that relates to the guarantee of execution of an application by the power supply/demand adjustment device. In the present example embodiment, "implementation guaranteed" and "implementation not guaranteed" are used as the implementation guarantee characteristic.

The "usage-permitted interval" of a power supply/demand adjustment device is an example of the usage interval condition.

The profitability condition, implementation guarantee characteristic, and usage-permitted interval are examples of the usage condition.

Generation unit H3 next supplies processing information to reporting unit F4. Reporting unit F4, upon receiving the processing information, reports this processing information to an outside device (for example, the above-described control devices A, B, and C) (Step S2002).

The effect of the present example embodiment is next described.

In the present example embodiment, generation unit H3 uses the response time, degree of communication confidence, profitability, reliability and implementation time that are stored in storage unit H1 and the information that is stored in storage unit H2 to generate processing information that represents applications for which there are adjustment units that satisfy the response time, degree of communication confidence, profitability, reliability and implementation time. Reporting unit F4 reports the processing information that was generated by generation unit H3 to an outside device.

As a result, the outside device is able to check applications that customer-side device H is able to accommodate on the basis of the processing information. As a result, the outside device is able to submit a request regarding the application to a customer that maintains a power supply/demand adjustment device that is able to accommodate the application.

A modification of the present example embodiment is next described.

Although the response time, degree of communication confidence, profitability, reliability and implementation time were used as the characteristics of an application in the present example embodiment, the characteristics of an application are not limited to the response time, degree of communication confidence, profitability, reliability and implementation time and can be altered as appropriate. For example, only the reliability and implementation time may be used as the characteristics of an application.

Storage unit H1 may also serve as storage unit H2. In this case, storage unit H1 stores the characteristics of each of applications AP1-AP3 and information (such as characteristics) of adjustment units that contain one or more power supply/demand adjustment devices.

Either one or both of storage unit H1 and storage unit H2 may be incorporated in generation unit H3. For example, Storage unit H1 and storage unit H2 may be memory that is incorporated in generation unit H3.

**Ninth Example Embodiment**

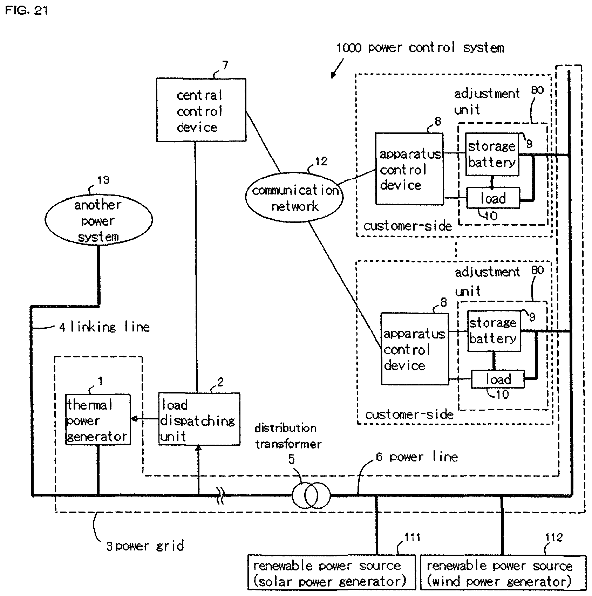

FIG. 21 shows power control system 1000 that adopts the battery control system of the ninth example embodiment of the present invention.

Power control system 1000 includes thermal power generator 1, load dispatching unit 2, power grid 3, linking line 4, distribution transformer 5, power line 6, central control device 7, a plurality of apparatus control devices 8, a plurality of storage batteries 9 and a plurality of loads 10.

Thermal power generator 1, load dispatching unit 2, power grid 3, linking line 4, distribution transformer 5 and power line 6 are maintained by a power company.

Central control device 7 is maintained by an aggregator.

Apparatus control device 8, storage battery 9 and load 10 are maintained by each customer. The number of storage batteries 9 or loads 10 maintained by each customer is not limited to "1" and can be altered as appropriate.

Thermal power generator 1, distribution transformer 5 and power line 6 are included in power grid 3. Renewable power source (solar power generator) 111 and renewable power source (wind power generator) 112 are connected to power grid 3.

Central control device 7 is an example of a control device. Apparatus control device 8 is an example of a control device or a customer-side device. Storage battery 9 and load 10 are examples of power supply/demand adjustment devices. Storage battery 9 and load 10 are connected to power grid 3. Load 10 is an electrical apparatus (such as an air conditioner, an electric water heater, a heat pump water heater, a pump or a freezer) or an electric vehicle. Storage batteries 9 and loads 10 are contained in adjustment unit 80.

A summary of the functions of power control system 1000 is next presented.

On the power company side, load dispatching unit 2 transmits a demand for power supply/demand adjustment processing to central control device 7 on the aggregator side. Load dispatching unit 2 transmits demands of a plurality of types (demands for power supply/demand adjustment processing) to central control device 7.

On the aggregator side, central control device 7 transmits, for each power (electricity) demand of the power

**EP 3 190 683 A1**

company, the characteristics of the power supply/demand adjustment processing that are required in the power (electricity) demand each apparatus control device 8.

Central control device 7 further transmits to each apparatus control device 8 the communication characteristics relating to the transmission path with apparatus control device 8.

Each apparatus control device 8 generates processing information that represents the power supply/demand adjustment processing that can be accommodated by storage batteries 9 and loads 10 on the basis of the characteristics of the power supply/demand adjustment processing, the characteristics of storage batteries 9 and loads 10, the communication characteristics relating to the communication path, and the demand forecast of storage batteries 9 and loads 10.

Each apparatus control device 8 transmits the processing information to central control device 7.

Upon receiving the processing information from each apparatus control device 8, central control device 7 stores each item of processing information.

On the basis of each item of processing information, central control device 7 selects request-destination customers that are the destinations of requests for power supply/demand adjustment processing for each power supply/demand adjustment process.

Central control device 7 further produces operation control information for controlling storage batteries 9 and loads 10 that are maintained by the request-destination customers.

For example, central control device 7 creates operation control information that reflects the states of storage batteries 9 that are maintained by the request-destination customers (for example, the remaining capacity and SOC (State of Charge)) and the content of the power supply/demand adjustment processing that accord with the demand.

Central control device 7 next transmits the operation control information to apparatus control devices 8 that are maintained by the request-destination customers.

The transmission of the operation control information to apparatus control devices 8 that are maintained by the request-destination customers is an example of the communication of actuation of power supply/demand adjustment processing.

Upon receiving the operation control information, apparatus control device 8 controls the operation of storage batteries 9 and loads 10 in accordance with the operation control information to execute the power supply/demand adjustment that accords with the power (electricity) demand of the power company. The power supply/demand adjustment that accords with the power (electricity) demand of the power company refers to the response to the power (electricity) demand of the power company (hereinbelow also referred to as simply "response").

In the present example embodiment, a power (electricity) demand reduction (for example, peak cutting) demand, an LFC demand, and a GF demand are used as the power (electricity) demands of a power company.

The power (electricity) demands of a power company are not limited to the above examples and can be altered as appropriate. For example, a power (electricity) demand creation (for example, bottom-up) demand, an emergency response demand, an interruptible load demand, a supply power load demand, an operation reserve power demand, and a spinning reserve power demand can be offered up as other demands of a power company.

When the power company demand is a power (electricity) demand reduction demand, central control device 7 generates operation control information for executing a process (hereinbelow referred to as "DR application 1") of cutting power (the amount of power) that was demanded by the demand reduction demand. In the following explanation, the operation control information for executing DR application 1 (demand reduction process) is referred to as "operation control information for DR application 1."

When the power company demand is an LFC demand, central control device 7 generates operation control information for executing a process (hereinbelow referred to as "DR application 2") of using an integrated value of the frequency deviation of the grid frequency to control the operation of adjustment unit 80 (for example, storage batteries 9). The operation control information for executing DR application 2 (LFC process) is hereinbelow referred to as "operation control information for DR application 2."

When the power company demand is a GF demand, central control device 7 generates operation control information for executing a process (hereinbelow referred to as "DR application 3") of using the frequency deviation of the grid frequency to control the operation of adjustment unit 80 (for example, storage batteries 9). The operation control information for executing DR application 3 (GF process) is hereinbelow referred to as "operation control information for DR application 3."

The configuration of power control system 1000 is next described.

Thermal power generator 1 is an example of a power generator. Load dispatching unit 2 communicates with central control device 7. Load dispatching unit 2 transmits, for example, a power (electricity) demand (demand reduction demand, LFC demand, or GF demand) to central control device 7.

Power grid 3 is a system for supplying power to the customer side. Power grid 3 transforms the voltage of the generated power supplied from thermal power generator 1 to a predetermined voltage in distribution transformer 5. Power grid 3 supplies the power at the predetermined voltage to the customer side.

18

Linking line 4 connects power grid 3 to another power system 13.

Central control device 7 receives the power (electricity) demand (demand reduction demand, LFC demand, or GF demand) from load dispatching unit 2.

For each DR application that accords with the power (electricity) demand, central control device 7 transmits the conditions required by the DR application (for example, the response time or degree of communication confidence required by the DR application) to each apparatus control device 8. The conditions required by the DR application refer to the characteristics of the DR application.

Central control device 7 further transmits to each apparatus control device 8 communication characteristics relating to the communication path with apparatus control devices 8. Central control device 7 then receives processing information from each apparatus control device 8.

Central control device 7 uses each item of processing information to select, for each DR application, request-destination customers that are the request destinations of the DR application.

Central control device 7 then assigns the request-destination customers of the DR applications to the DR applications and to the power (electricity) demands that correspond to the DR applications.

Central control device 7 further, for each power (electricity) demand, assigns to the power (electricity) demand (the DR application that accords with the demand) apparatus control devices 8 that are maintained by the request-destination customers that were assigned to the power (electricity) demand.

Central control device 7 transmits operation control information of the DR application that corresponds to the request-destination customers to apparatus control devices 8 that are maintained by the request-destination customers by way of communication network 12.

Apparatus control device 8 controls the operation of adjustment unit 80 (storage batteries 9 and loads 10) according to the operation control information.

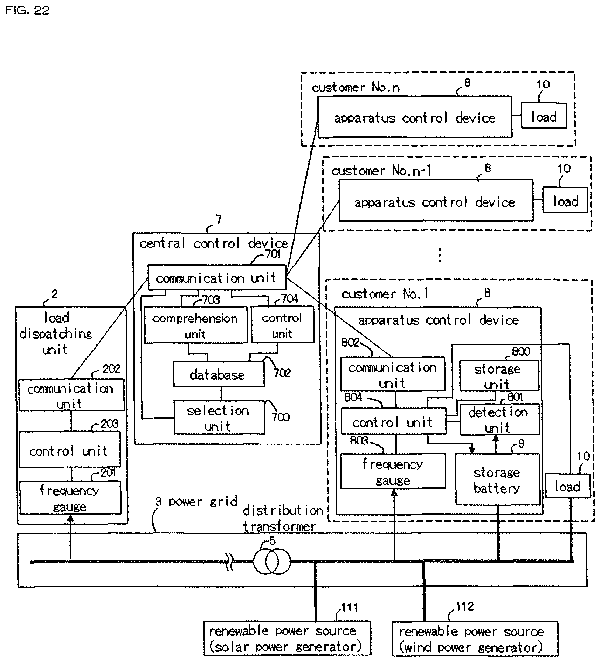

FIG. 22 shows an example of load dispatching unit 2, central control device 7, and a plurality of apparatus control devices 8. In FIG. 22, constructions that are identical to those shown in FIG. 21 are given the same reference numbers. In FIG. 22, communication network 12 is omitted. Further, although storage batteries 9 are incorporated in apparatus control devices 8 in FIG. 22, storage batteries 9 need not be incorporated in apparatus control devices 8. Apparatus control device 8 in which storage battery 9 is incorporated is an example of a storage device.

Apparatus control device 8 will be described first.

A plurality of apparatus control devices 8 are assigned for each power (electricity) demand and DR application that accords with the power (electricity) demand. One apparatus control device 8 may also be assigned to a plurality of power (electricity) demands (DR applications that accord with the demands).

Apparatus control device 8 controls the operation of storage batteries 9 and loads 10. Apparatus control device 8 includes storage unit 800, detection unit 801, communication unit 802, frequency gauge 803, and control unit 804. A configuration that includes communication unit 802 and control unit 804 is an example of a reporting unit.

Storage unit 800 is an example of a first storage unit, second storage unit and adjustment unit.

Storage unit 800 stores the characteristics (response time, degree of communication confidence, profitability, reliability, and implementation time) of each of DR applications 1-3. In addition, storage unit 800 stores the information of each of storage batteries 9 and loads 10 (for example, the "response times," "compatible communication modes," "profitability," "implementation guarantees" and "usage-permitted intervals" of storage batteries 9 and loads 10).

Detection unit 801 detects the SOC of storage batteries 9. The SOC of storage batteries 9 take a value within the range of 0-1. The SOC of storage batteries 9 represents the state of storage batteries 9. The state of storage batteries 9 is not limited to the SOC of storage batteries 9 and can be altered as appropriate. For example, the cell temperature, the current amount, or the voltage of storage batteries 9 may be used.

Communication unit 802 is an example of the reporting unit. Communication unit 802 communicates with central control device 7.

Frequency gauge 803 detects the grid frequency (the grid frequency of power grid 3). The grid frequency changes in accordance with the state of balance between power supply and demand. The grid frequency is an example of the state of the power grid. Frequency gauge 803 may be inside apparatus control device 8, or may be outside.

Control unit 804 is an example of the generation unit.

Control unit 804 uses information that is stored in storage unit 800 to generate processing information. Control unit 804 reports the processing information to central control device 7 from communication unit 802.

In addition, control unit 804 controls charging/discharging operation of storage batteries 9 and the ON/OFF operation of loads 10 in accordance with operation control information. For example, Control unit 804 controls the charging/discharging operation of storage batteries 9 and the ON/OFF operation of loads 10 in accordance with operation control information of DR application 1. Further, control unit 804 controls the charging/discharging operation of storage batteries 9 and the ON/OFF operation of loads 10 in accordance with the operation control information of DR Applications 2 and 3 and the grid frequency of power grid 3.

Control unit 804 executes the information acquisition operation (transmission/reception process) of obtaining operation control information from central control device 7 and the control operation (battery operation control process) of using the operation control information to control the charging/discharging operation of storage batteries 9 and the ON/OFF operation of loads 10.

Control unit 804 receives execution spacing information for identifying the execution spacing of the control of storage batteries 9 and loads 10 on the basis of the operation control information from central control device 7 by way of communication unit 802.

Control unit 804 repeatedly executes the information acquisition operation while providing a time interval.

Control unit 804 repeatedly executes the control operation according to execution spacing information while providing a time interval that is no greater than the time interval of the information acquisition operation.

Central control device 7 is next described.

Central control device 7 includes selection unit 700, communication unit 701, database 702, comprehension unit 703 and control unit 704. Selection unit 700, communication unit 701 and control unit 704 are contained in the reporting unit.

Selection unit 700 is an example of the acquisition unit.

Selection unit 700 selects, for each DR application, request-destination customers from among customers that maintain adjustment units 80 that can accommodate the DR application.

For each DR application, selection unit 700 stores the selection result of the request-destination customers in database 702.

Communication unit 701 communicates with each of apparatus control devices 8 and load dispatching unit 2. For example, communication unit 701 receives the SOC and ID (Identification) of storage batteries 9 from each apparatus control device 8.

Database 702 is a storage unit.

Database 702 stores processing information for each customer.

Database 702 further holds a storage battery distribution ratio curve that is used to find the capacity of storage batteries 9 that can be charged/discharged from the SOC of storage batteries 9 that were received by communication unit 701. In addition, database 702 also holds the rated output $P(n)$ of each storage battery 9 that is used to find the capacity that can be charged/discharged. The rated output of a power conditioner (AC/DC converter) (not shown in the figures) that is connected to storage batteries 9 is used as the rated output $P(n)$ of storage batteries 9.

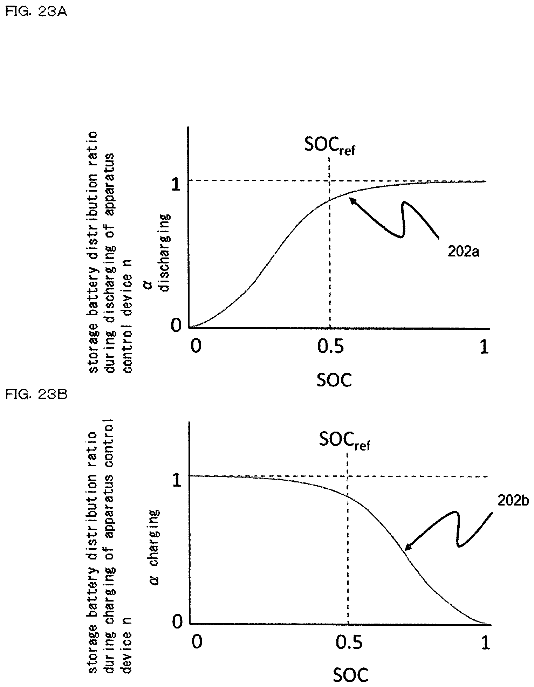

FIGs. 23A and 23B show examples of the storage battery distribution ratio curve. FIG. 23A represents an example of storage battery distribution ratio curve 202a at the time of discharging. FIG. 23B represents an example of storage battery distribution ratio curve 202b at the time of charging.

Comprehension unit 703 comprehends the information of each DR application. The information of the DR application indicates at least the DR application processing content (processing content of the power supply/demand adjustment).

Comprehension unit 703 further comprehends the amount of power allotted to storage batteries 9 and loads 10 of customers that have been assigned each DR application (hereinbelow referred to as "DR1 allotted power amount," "DR2 allotted power amount," and "DR3 allotted power amount"). Each allotted power amount is an example of the state of the power grid.

In the present example embodiment, moreover, of storage batteries 9 and loads 10, storage batteries 9 are assumed to satisfy the characteristics of DR applications 2 and 3.

The method of comprehension of the DR1 allotted power amount will be explained later.

Comprehension unit 703 comprehends the DR2 allotted power amount as described hereinbelow.

Comprehension unit 703 uses the storage battery distribution ratio curve in database 702 to derive the capacity that can be charged/discharged of the storage battery group (DR application 2 storage battery group) that is made up of storage batteries 9 from the SOC of storage batteries 9 that are maintained by the customers that have been assigned to DR application 2. The capacity that can be charged/discharged of the DR application 2 storage battery group is hereinbelow referred to as "total adjustable capacity $P_{ES-DR2}$." Alternatively, the storage batteries that are maintained by the customers that have been assigned to DR application 2 are also referred to as "storage batteries that are the objects of use of DR application 2."

Comprehension unit 703 transmits total adjustable capacity $P_{ES-DR2}$ from communication unit 701 to load dispatching unit 2. Comprehension unit 703 then receives from load dispatching unit 2 by way of communication unit 701 the DR2 allotted power amount information that represents the DR2 allotted power amount that reflects the total adjustable capacity $P_{ES-DR2}$. Comprehension unit 703 uses the DR2 allotted power amount information to comprehend the DR2 allotted power amount.

In the present example embodiment, a DR2 charging/discharging gain line that represents the LFC assignment capacity $LFC_{ES-DR2}$ that represents the DR2 maximum allotted power amount and the maximum value (threshold value) $\Delta f_{max}$ of the integrated value of the frequency deviation (although there are $\pm\Delta f_{max}$, $\pm$ will be omitted hereinbelow in the interest of simplification) as the DR2 allotted power amount information.

The "maximum value of the integrated value of frequency deviation" is used as the threshold value of the integrated value of the amount of deviation with respect to the standard frequency (for example, 50 Hz) of the grid frequency. The standard frequency of the grid frequency is stored in control unit 804.

The "maximum value of the integrated value of frequency deviation" refers to the "maximum amount of deviation of the integrated value of frequency deviation" that can be accommodated by the total output $LFC_{ES-DR2}$ of the multiplicity of storage batteries 9 that have been assigned to DR application 2. When the integrated value of the frequency deviation becomes a value that is equal to or greater than the maximum value (threshold value) of the integrated value of the frequency deviation, accommodation at $LFC_{ES-DR2}$ becomes problematic.

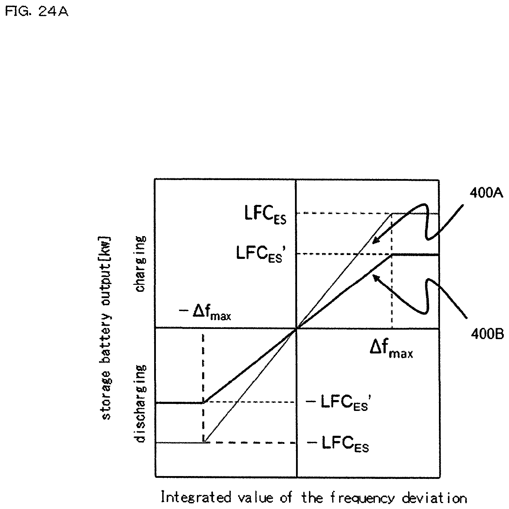

FIG. 24A shows an example of the DR2 charging/discharging gain line. Details regarding the DR2 charging/discharging gain line will be described later.

Control unit 704 generates DR2 allotment information (DR2 allotment coefficient K and maximum value $\Delta f_{max}$ of the integrated value of frequency deviation) on the basis of the SOC of storage batteries 9 that are the objects of use of DR application 2 and the DR2 charging/discharging gain line. Control unit 704 transmits the DR2 allotment information from communication unit 701 to each apparatus control device 8 that has been assigned to DR application 2. The DR2 allotment coefficient K increases as the proportion of allotment rises to storage batteries 9 that are the objects of use of DR application 2.

Comprehension unit 703 comprehends the DR3 allotted power amount as described hereinbelow.

Comprehension unit 703 uses the storage battery distribution ratio curve in database 702 to derive the chargeable/dischargeable capacity of the storage battery group (DR application 3 storage battery group) that is made up of storage batteries 9 from the SOC of storage batteries 9 that are maintained by customers assigned to DR application 3. The storage battery distribution ratio curve used here need not be the same as the storage battery distribution ratio curve used at the time of deriving the DR2 allotted power amount. In the following explanation, the chargeable/dischargeable capacity of the DR application 3 storage battery group is referred to as "total adjustable capacity $P_{ES-DR3}$." In addition, storage batteries maintained by customers that have been assigned to DR application 3 are also referred to as "storage batteries that are the objects of use in DR application 3."

Comprehension unit 703 transmits total adjustable capacity $P_{ES-DR3}$ to load dispatching unit 2 from communication unit 701. Comprehension unit 703 then receives DR3 allotted power information that represents the DR3 allotted power amount that reflects the total adjustable capacity $P_{ES-DR3}$ from load dispatching unit 2 by way of communication unit 701. Comprehension unit 703 uses the DR3 allotted power amount information to comprehend the DR3 allotted power amount.

In the present example embodiment, GF assignment capacity $GF_{ES-DDR3}$ that represents the DR3 maximum allotted power amount and a DR3 drooping characteristic line that represents the maximum value (threshold value) of frequency deviation $+f_{max}$ and $-f_{max}$ (hereinbelow referred to as $f_{max}$ that consolidates $\pm f_{max}$ in the interest of simplification) are used as the DR3 allotted power amount information.

In the following explanation, "$GF_{ES-DR3}$" is also referred to as "$LFC_{ES-DR3}$" for convenience in the explanation.

The "maximum value of frequency deviation" is used as the threshold value of the amount of divergence from the standard frequency (for example, 50 Hz) of the grid frequency.

Further, the "maximum value of frequency deviation" refers to the maximum amount of divergence of the frequency deviation" that can be accommodated by the total output $GF_{ES-DR3}$ ($LFC_{ES-DR3}$) of the storage batteries 9 maintained by a multiplicity of customers who are assigned to DR application 3. When the frequency deviation becomes a value equal to or greater than the maximum value (threshold value) of frequency deviation, the capability of accommodating at $GF_{ES-DR3}$ ($LFC_{ES-DR3}$) becomes problematic.

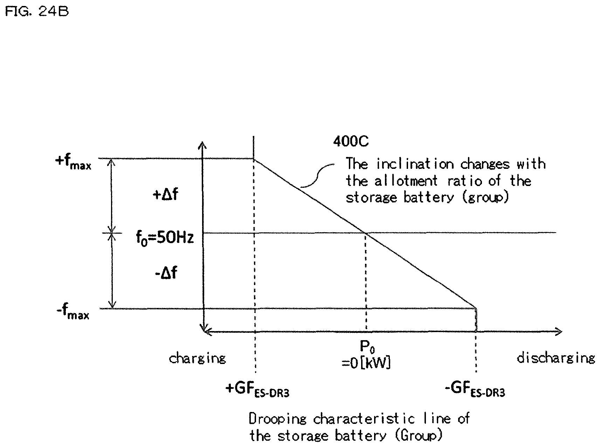

FIG. 24B shows an example of the DR3 drooping characteristic line. Details of the DR3 drooping characteristic line will be described later.

Control unit 704 generates DR3 allotment information (DR3 allotment coefficient K and maximum value $f_{max}$ of frequency deviation) on the basis of the SOC of storage batteries 9 that are the objects of use in DR application 3 and the DR3 drooping characteristic line. Control unit 704 transmits the DR3 allotment information from communication unit 701 to each apparatus control device 8 that has been assigned to DR application 3. The DR3 allotment coefficient K increases in proportion to the increase of the allotment proportion to storage batteries 9 that are the objects of use in DR application 3.

Load dispatching unit 2 is next described.

Load dispatching unit 2 includes frequency gauge 201, communication unit 202, and control unit 203.

Frequency gauge 201 detects the grid frequency of power grid 3.

Communication unit 202 communicates with central control device 7.

For example, communication unit 202 receives the total adjustable capacity $P_{ES-DR2}$ and $P_{ES-DR3}$ from central control device 7.

Control unit 203 controls the operation of load dispatching unit 2.

For example, control unit 203 transmits various demands to central control device 7 by way of communication unit 202.

In addition, control unit 203 generates DR2 allotment power amount information (DR2 charging/discharging gain line) and DR3 allotment amount information (DR3 drooping characteristic line) as shown below.

The method of generating the DR2 allotment power amount information (DR2 charging/discharging gain line) is first described.

Control unit 203 uses the grid frequency detected in frequency gauge 201 to calculate the Area Requirement (AR) that is the output compensation amount of a power plant. Control unit 203 uses the area requirement AR, the LFC adjustment capacity of the thermal power generator 1 that is the object of control, and the total adjustable capacity $P_{ES-DR2}$ to derive the LFC capacity. Control unit 203 acquires the LFC adjustment capacity of thermal power generator 1 from thermal power generator control unit (not shown). Total adjustable capacity $P_{ES-DR2}$ is supplied to control unit 203 from communication unit 202.

Control unit 203 assigns to thermal power generator 1 the capacity that is obtained by removing the sudden fluctuation component of the LFC capacity. Control unit 203 assigns to the DR application 2 storage battery group the remaining LFC capacity $LFC_{ES-DR2}$ (where $LFC_{ES-DR2} \leq P_{ES-DR2}$). For example, control unit 203 uses a high-pass filter that, of the LFC capacity, passes a fluctuation component having a period equal to or less than 10 seconds but that does not pass a fluctuation component having a period longer than 10 seconds to extract the sudden fluctuation component (capacity $LFC_{ES-DR2}$) from the LFC capacity.

Alternatively, control unit 203 assigns the LFC capacity to thermal power generator 1 and the DR application 2 storage battery group in accordance with a ratio (predetermined value) of assigning the LFC capacity to thermal power generator 1 and DR application 2 storage battery group.

Control unit 203 treats the capacity $LFC_{ES-DR2}$ as LFC assignment capacity $LFC_{ES-DR2}$.

Control unit 203 generates a DR2 charging/discharging gain line (see FIG. 24A) that represents LFC assignment capacity $LFC_{ES-DR2}$ and the maximum value (threshold value) $\Delta f_{max}$ of the integrated value of the predetermined frequency deviation.

Control unit 203 transmits the DR2 charging/discharging gain line (DR2 allotment power amount information) to central control device 7 from communication unit 202.

The method of generating the DR3 allotment power amount information (DR3 drooping characteristic line) is next described.

With regard to the GF capacity that is necessary to keep the power grid within a particular frequency deviation range, control unit 203 first acquires the total adjustable capacity $P_{ES-DR3}$ from communication unit 202. Control unit 203 uses the maximum value (threshold value) $f_{max}$ of the predetermined frequency deviation and total adjustable capacity $P_{ES-DR3}$ to generate the GF capacity $GF_{ES-DR3}$ to DR application 3 storage battery group and the DR3 drooping characteristic line (DR3 allotment power amount information). Here, $GF_{ES-DR3} \leq P_{ES-DR3}$. Control unit 203 transmits the DR3 drooping characteristic line from communication unit 202 to central control device 7.

Control unit 203 may also assign the GF capacity to thermal power generator 1 and the DR application 3 storage battery group in accordance with an assignment ratio (predetermined value) of the GF capacity to thermal power generator 1 and DR application 3 storage battery group. In this case, the DR3 drooping characteristic line differs according to the ratio.

The operation is next described.

(1) Operation by which apparatus control device 8 of each customer generates processing information

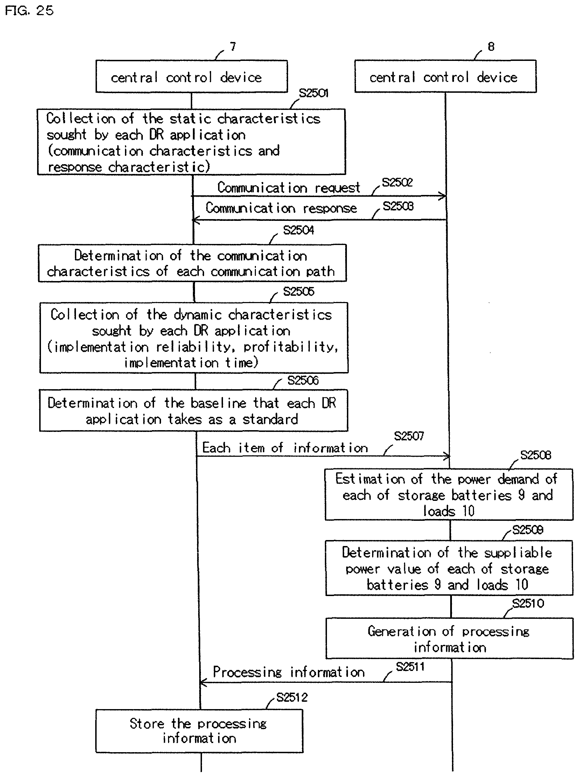

FIG. 25 is a sequence diagram for describing the operation by which apparatus control device 8 of each customer generates processing information. In FIG. 25, the number of apparatus control devices 8 is assumed to be "1" in the interest of simplifying the explanation.

The aggregator that holds central control device 7 first concludes a DR implementation contract with a plurality of customers in advance.

The DR implementation contract is a contract in which, assuming that prescribed procedures are carried out before implementation of DR, a customer acknowledges that the aggregator controls storage batteries 9 and load 10 that are maintained by the customer as DR.

The DR implementation contract indicates static characteristics (communication characteristic and response characteristic) that are sought by each DR application, and dynamic characteristics (reliability [implementation reliability], profitability, and implementation time) that are sought by each DR application. In the present example embodiment, the degree of communication confidence and the response time are used as the communication characteristic and the response characteristic, respectively.

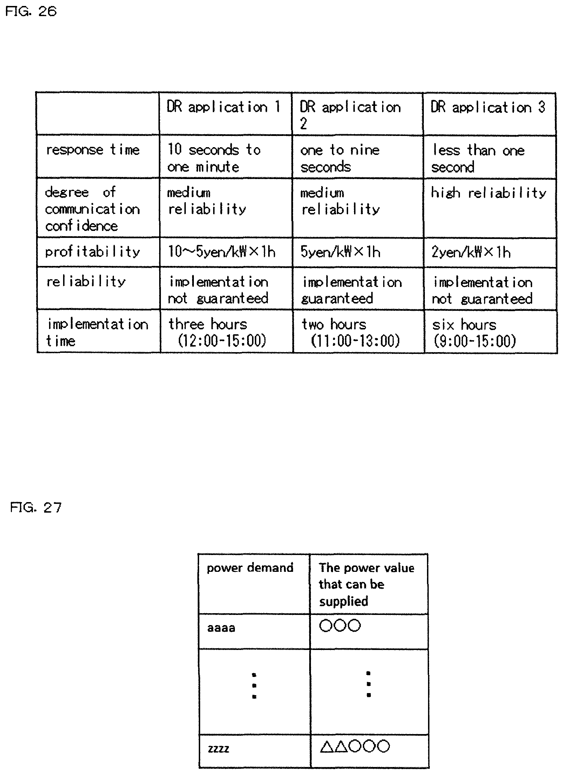

FIG. 26 shows the response time, degree of communication confidence, reliability, profitability and implementation time that are indicated in a DR implementation contract. The response time, degree of communication confidence, reliability, profitability and implementation time shown in the DR implementation contract are not limited to those shown in FIG. 26 and can be altered as appropriate.

Each DR implementation contract is stored in a contract management device (not shown) that is held by the aggregator.

In addition, the aggregator itself may determine the static characteristics and dynamic characteristics that are sought by each of DR applications 1-3, or the contract management device may also store the static characteristics and dynamic characteristics that are sought by DR applications 1-3 and that have been determined by the aggregator.

Selection unit 700 next collects the static characteristics (communication characteristic and response characteristic) that are sought by the DR application 1 (demand reduction process), DR application 2 (LFC process), and DR application 3 (GF process) (Step S2501).

In Step S2501, selection unit 700 collects the "static characteristics (response time and degree of communication confidence) that are sought by DR applications 1-3" that are stored in, for example, the contract management device by way of communication unit 701.

When a server (not shown) maintained by a wholesale power exchange stores the static characteristics sought by DR applications 1-3, selection unit 700 may also collect the static characteristics sought by DR applications 1-3 from the server by way of communication unit 701.

Selection unit 700 next stores the static characteristics sought by DR applications 1-3 in database 702.

In the present example embodiment, the static characteristics sought by DR applications 1-3 are as shown below.

DR application 1 (a demand reduction process) requires "10 seconds-1 minute" as the response characteristic (response time), and "medium reliability" as the communication characteristic (degree of communication confidence).

DR application 2 (an LFC process) requires "1-9 seconds" as the response characteristic (response time) and "medium reliability" as the communication characteristic (degree of communication confidence).

DR application 3 (a GF process) requires "one second or less" as the response characteristic (response time) and "high reliability" as the communication characteristic (degree of communication confidence).

Selection unit 700 next transmits a communication demand from communication unit 701 to each apparatus control device 8 (Step S2502).

In each apparatus control device 8, upon receiving the communication demand by way of communication unit 802, control unit 804 transmits the communication response (predetermined information) and ID to central control device 7 (Step S2503).

Selection unit 700 receives, by way of communication unit 701, the communication response and ID that were transmitted from each apparatus control device 8 in accordance with the communication demand.

Selection unit 700 next determines the communication characteristic of the communication path that was used by each apparatus control device 8 on the basis of the communication results relating to the transmission of the communication demand and the reception of the communication response and ID (Step S2504).

In Step S2504, selection unit 700 calculates, for each apparatus control device 8, the delay time of the communication path between central control device 7 and apparatus control device 8 on the basis of the difference between the transmission timing of the communication demand and the reception timing of the communication response.

Selection unit 700 next stores the delay time of each communication path in database 702 as the communication characteristic of each communication path.

Selection unit 700 next collects the dynamic characteristics (reliability, profitability, and implementation time) that are sought by each of DR application 1 (power (electricity) demand reduction process), DR application 2 (LFC process), and DR application 3 (GF process) (Step S2505). In addition, selection unit 700 may also carry out Step S2505 together with Step S2501.

In Step S2505, selection unit 700 collects, for example, the "dynamic characteristics (profitability, reliability, and implementation time) sought by DR applications 1-3" that are stored in the contract management device that is held by the aggregator.

When a server (not shown) that is held by a wholesale power exchange stores the dynamic characteristics that are sought by DR applications 1-3, selection unit 700 may also collect the dynamic characteristics that are sought by DR applications 1-3 from the server that is held by the wholesale power exchange.

Selection unit 700 next stores the collected dynamic characteristics (reliability, profitability and implementation time) that are sought by the DR applications 1-3 in database 702.

The aggregator itself may also determine the dynamic characteristics that are sought by DR applications 1-3, and database 702 may store the dynamic characteristics that are sought by DR applications 1-3 that were determined by the aggregator.

In the present example embodiment, the dynamic characteristics that are sought by DR applications 1-3 are as shown below.

DR application 1 (the power (electricity) demand reduction process) requires "10 yen-5 yen/kWh as the provisional price of a bid to a power company or wholesale power exchange aggregator" as profitability, "implementation not guaranteed OK" as the reliability, and "three hours from 12:00 to 15:00" as the implementation time of the DR application.

DR application 2 (LFC process) requires "5 yen/kW x 1h (set value of power company or wholesale power exchange)" as the profitability, "implementation guarantee necessary" as the reliability, and "two hours from 11:00 to 13:00" as the implementation time of the DR application.

DR application 3 (GF process) requires "2 yen/kW × 1h (set value of a power company or wholesale power exchange)" as the profitability, "implementation not guaranteed OK" as the reliability, and "the six hours from 9:00 to 15:00" as the implementation time of the DR application.

Control unit 704 next determines for each customer the baseline that each DR application takes as a standard (Step S2506).

In the present example embodiment, central control device 7 holds the history of power demand of each customer beforehand in database 702. The history of the measured values of the power meter of each customer is used as the history of power demand of each customer.

For each customer, control unit 704 uses a typical averaging rule or regression analysis rule based on the history of power consumption of the customer as measured by the customer's power meter to determine the power demand baseline of DR application 1.

The DR application 1 power demand baseline of each customer is a hypothetic value of the customer's power demand in a state in which DR application 1 is not executed. In addition, each power demand baseline of DR applications 2 and 3 of each customer is a fixed value.

The power demand baseline is used for, for example, to verify the state of implementation of an application by a customer.

When control unit 704 holds a power demand estimate of the implementation time slot of DR application 1 in advance for each customer, control unit 704 may use this power demand estimate to determine the power demand baseline of DR application 1. When control unit 704 acquires a power demand estimate for each customer of the implementation time slot of DR application 1 from an outside device, control unit 704 may use this power demand estimate to determine the power demand baseline of DR application 1.

Alternatively, control unit 704 determines as the power demand baseline of DR applications 2 and 3 for each customer a value obtained by correcting the measured value of the power meter of the customer by the charging/discharging amount of storage batteries 9 that immediately precedes implementation of DR applications 2 and 3.

For example, control unit 704 determines as the power demand baseline of DR applications 2 and 3 a value that is obtained by subtracting the charging/discharging amount of storage batteries 9 that immediately precedes implementation of DR applications 2 and 3 from the measured value of the power meter immediately before implementation of DR applications 2 and 3. The amount of charging/discharging of storage batteries 9 immediately preceding implementation of DR applications 2 and 3 refers to the amount of charging/discharging that is executed in storage batteries 9 regardless of whether DR applications 2 and 3 are executed or not. Further, storage batteries 9 that implement DR applications 2 and 3 preferably halt charging/discharging as much as possible immediately before implementation of DR applications 2 and 3.

Control unit 704 next transmits the static characteristics and dynamic characteristics of DR applications 1-3 that were stored in database 702, the power demand baseline of DR applications 1-3, and the communication characteristics of each communication path to each apparatus control device 8 (Step S2507).

In each apparatus control device 8, control unit 804 receives by way of communication unit 802 the static characteristics and dynamic characteristics of DR applications 1-3, the power demand baseline of DR applications 1-3, and the communication characteristics of each communication path.

Control unit 804 next stores the static characteristics and dynamic characteristics of DR applications 1-3, the power demand baseline of DR applications 1-3 and the communication characteristics of each communication path in storage unit 800.

Storage unit 800 stores information (such as characteristics) of storage batteries 9 and loads 10 beforehand. In the present example embodiment, storage unit 800 stores as the information of storage batteries 9 and loads 10 "response times," "compatible communication modes," "profitability conditions," "implementation guarantee characteristics (implementation guaranteed or implementation not guaranteed)" and "usage-permitted intervals."

The result of certification in a certification authority may also be used as information of storage batteries 9 and loads 10.

The certification result in a certification authority refers to the result of a certification authority that certifies whether storage batteries 9 or loads 10 satisfy a characteristic such as a static characteristic that is sought by a DR application. For example, when a certification authority has certified that storage battery 9 satisfies a static characteristic that DR application 3 (GF process) seeks, "GF certification" is used as the certification information of storage battery 9.

Storage unit 800 further stores a table that indicates, for each storage battery 9 or load 10, the correspondence relation between the power demand and the power value that storage battery 9 or load 10 can supply during execution of a DR application (hereinbelow referred to as a "suppliable power value").

FIG. 27 is an example of a table that shows the correspondence relation between power demand and the suppliable power values.

The reason that the suppliable power value changes according to power demand are here explained.

When the convenience of a customer (the convenience that originates from the use of storage batteries 9 or loads 10) is not taken into consideration, the power demand that can be reduced will increase as the power demand increases and the power demand that can be added will decrease.

However, if the customer convenience is taken into consideration, a limit value will be imposed on the amount of power demand that can be reduced and the amount of power demand that can be added.

For example, if an air conditioner, which is an example of load 10 for which power demand increases in the summer, should completely stop for the purpose of reducing power demand, customer convenience will be impaired. Alternatively, operating the water heater of a bath, which is an example of load 10, in order to increase power demand late at night when power demand is low because the customer has gone to bed will just be regarded by the customer as unnecessary heating.

In the table (see FIG. 27) of storage battery 9 or load 10 that is stored in storage unit 800, the suppliable power value is set to, for example, a value within a range that does not detract from the customer's own convenience. This setting may be carried out by, for example, the customer.

Control unit 804 next estimates the power demand of each of storage batteries 9 and loads 10 on the basis of the power demand history and the result of estimating the future environment (for example the result of estimation of the future temperature and weather) (Step S2508).

For example, when the temperature is estimated to reach 33 degrees Celsius, control unit 804 estimates the past power demand of storage batteries 9 and loads 10 when the temperature was 33 degrees Celsius as the future power demand of storage batteries 9 and loads 10. The method of estimating the future power demand of storage batteries 9 and loads 10 can be altered as appropriate. Alternatively, control unit 804 acquires estimation results of the future environment from an outside device that holds estimation results of the future environment.

Control unit 804 next refers to the table (FIG. 27) that is stored in storage unit 800 to determine the suppliable power value that corresponds to the estimation result of power demand for each of storage batteries 9 and loads 10 (Step S2509).

Control unit 804 then stores the adjustable power value of storage batteries 9 and loads 10 in storage unit 800.

Control unit 804 next uses the information that is stored in storage unit 800 to generate processing information (Step S2510).

The method of generating the processing information is next described.

Control unit 804 identifies storage batteries 9 and loads 10 that meet all of the following Conditions (a)-(f).

Condition (a): a response time equal to or less than the response time of the DR application.
Condition (b): a compatible communication mode that accommodates the degree of communication confidence of the DR application.
Condition (c): a profitability condition that is satisfied by the profitability of the DR application.
Condition (d): an implementation guarantee characteristic that satisfies the reliability of the DR application.
Condition (e): a usage-permitted interval that is contained within the implementation time of the DR application.
Condition (f): the adjustable power value in the usage-permitted interval that is contained within the implementation time of the DR application is not "0."

In Condition (d), the implementation guarantee characteristics that satisfy the reliability "implementation not guaranteed" of the DR application are "implementation guaranteed" and "implementation not guaranteed," and the implementation guarantee characteristic that meets the reliability "implementation guaranteed" of the DR application is "implementation guaranteed."

Control unit 804 next identifies the DR applications for which there are storage batteries 9 or loads 10 that meet all of Conditions (a)-(f) as DR applications that adjustment unit 80 can accommodate (hereinbelow referred to as "DR applications that can be accommodated"). Adjustment unit 80 that contains storage batteries 9 or loads 10 that satisfy all of the Conditions (a)-(f) of a DR application that can be accommodated is hereinbelow referred to as "adjustment unit of a DR application that can be accommodated."

Control unit 804 next generates processing information that indicates the DR applications that can be accommodated, the intervals of possible execution of the DR applications that can be accommodated, and the power value that can be supplied when executing the DR applications that can be accommodated.

The intervals of possible execution of DR applications that can be accommodated are usage-permitted intervals of the adjustment unit of the DR applications that can be accommodated that are contained within the implementation times of the DR applications that can be accommodated.

In addition, the power value that can be supplied when executing the DR applications that can be accommodated is the suppliable power value of the adjustment unit of the DR applications that can be accommodated (the total amount of suppliable power values of storage batteries 9 and loads 10 that meet all of Conditions (a)-(f) of the compatible DR applications that can be accommodated).

Control unit 804 next transmits the processing information together with the profitability condition of the customer to central control device 7 (Step S2511).

In central control device 7, control unit 704 receives the processing information and profitability condition from each apparatus control device 8 (each customer) by way of communication unit 701.

Control unit 704 next stores the processing information and profitability condition in database 702 (Step S2512).

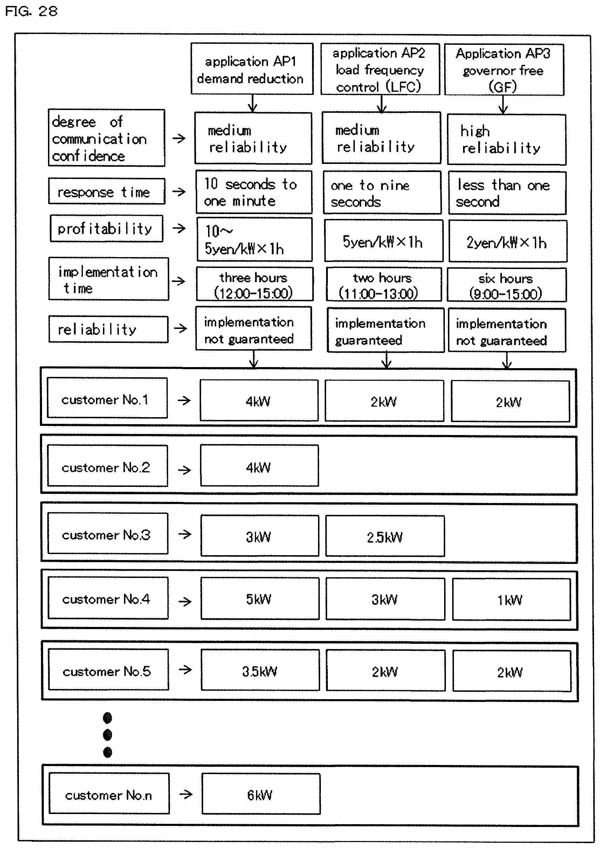

FIG. 28 shows an example of the processing information and characteristics of the DR applications for each customer.

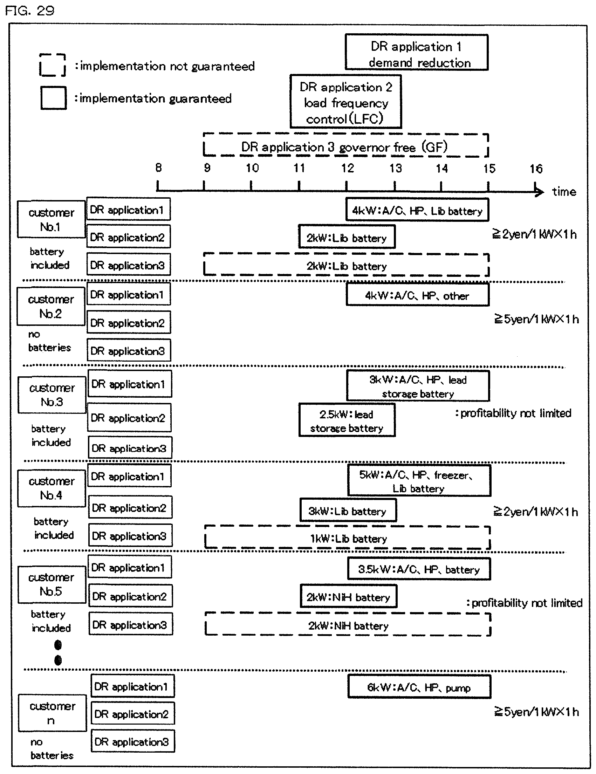

FIG. 29 shows an example of the classification of adjustment units and profitability condition for each customer. In FIG. 29, "A/C," "HP," "Lib battery," and "NIH battery" each refer to an air conditioner, a heat pump water heater, a lithium-ion battery, and a nickel-hydrogen battery, respectively. An air conditioner and a heat pump water heater are each examples of loads 10. A lithium-ion battery and a nickel-hydrogen battery are each examples of storage batteries 9.

(2) Operation by which central control device 7 selects request-destination customers

The operation in which central control device 7 selects request-destination customers is next described.

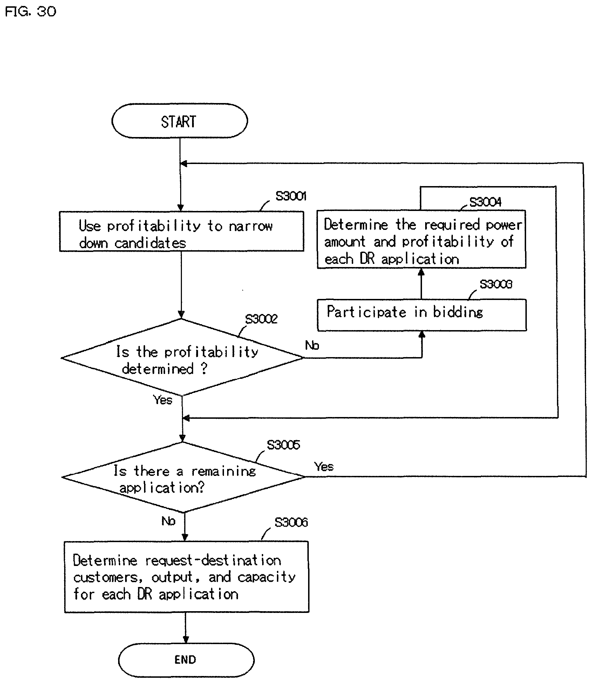

FIG. 30 is a flow chart for describing the operation in which central control device 7 selects request-destination customers.

In this instance of DR execution, selection unit 700 first selects a request-destination customer with relation to DR application 1 that has the highest profitability based on the profitability provided by each DR application (Step S3001).

In Step S3001, selection unit 700 refers to the processing information for each customer and selects all customers that are compatible with DR application 1 as request-destination customers of DR application 1.

Selection unit 700 next judges whether the profitability of DR application 1 is determined (Step S3002).

In this case, the profitability "10 yen-5 yen/kWh @ 12:00-15:00" of the DR application 1 (demand reduction process) is a provisional value of a bid. As a result, selection unit 700 judges that the profitability of DR application 1 is not determined.

The amount of reduction of the power demand for which arrangements have been made in all request-destination customers of DR application 1 is "500kW×3h" in the time slot of 12:00 to 15:00.

In this state, selection unit 700 enters into bidding on the wholesale power exchange (Step S3003).

Selection unit 700 begins bidding with a tendered price of "10 yen/kWh" for a bid volume of "500kW" in the time slot of 12:00-15:00. The tendered price is assumed to subsequently drop gradually. At the stage at which the tendered price becomes "5 yen/kWh," selection unit 700 makes the bid volume 450kW at 12:00-13:00 and 500kW at 13:00-15:00. Selection unit 700 here applies the decreased volume (50kW) at 12:00-13:00 to DR application 2 (5 yen/kW) that is an LFC process.

Selection unit 700 is finally assumed to make a successful bid for DR application 1 with profitability at "5 yen/kW," and with 450kW in 12:00-13:00, and 500kW in 13:00-15:00. In accordance with this successful bid, selection unit 700 sets the profitability and necessary capacity of DR application 1 (Step S3004). DR application 1 of this successful bid is "implementation not guaranteed."

Next, in order to assign the capacity of the successful bid to the request-destination customer that was selected for application to DR application 1, selection unit 700 in this instance uses a method of performing weighting of the volume of each time slot originally reported by the customer to assign the capacity of the successful bid as shown below.

Selection unit 700 calculates 450kW/500kW = x as the weighting factor for 12:00-13:00.
Control unit 700 calculates 500kW/500kW = y as the weighting factor for 13:00-15:00.

Control unit 700 multiplies the capacity of each time slot that was originally reported by the customer by the weighting factor to determine the reduced power of each request-destination customer of DR application 1.

Selection unit 700 next judges whether a DR application remains for which a request-destination customer has not been selected (Step S3005).

If a DR application remains for which a request-destination customer has not been selected, selection unit 700 returns the process to Step S3001. In the present example embodiment, selection unit 700 executes Step S3001 for DR application 2 and DR application 3.

Selection unit 700 executes Step S3001 for DR application 2 (LFC process) that has the next highest profitability after DR application 1.

In the present example embodiment, selection unit 700 refers to the processing information for each customer to select, as the request-destination customers of DR application 2, customers that are capable of executing DR application 2 while carrying out DR application 1 (demand reduction process) during the execution interval of DR application 1.

Selection unit 700 next executes Step S3002.

Because the profitability "5 yen/kW×1h" of DR application 2 is a set value, selection unit 700 advances the process to Step S3005.

Selection unit 700 next executes Step S3001 for DR application 3 (a GF process) of the lowest profitability.

Selection unit 700 refers to the processing information for each customer to select as the request-destination customers of DR application 3 customers that are capable of executing DR application 3 while carrying out DR application 2 during the execution interval of DR application 2 and carrying out DR application 1 during the execution interval of DR application 1.

Selection unit 700 next executes Step S3002.

Because the profitability "2 yen/kW×1h" of DR application 3 is a set value, selection unit 700 advances the process to Step S3005.

In Step S3005, the request-destination customer of DR application 3 that has the lowest profitability is determined. As a result, each request-destination customer, output, and capacity are determined by means of the above-described processes so as to increase the profitability obtained by customers for three DR applications (Step S3006).

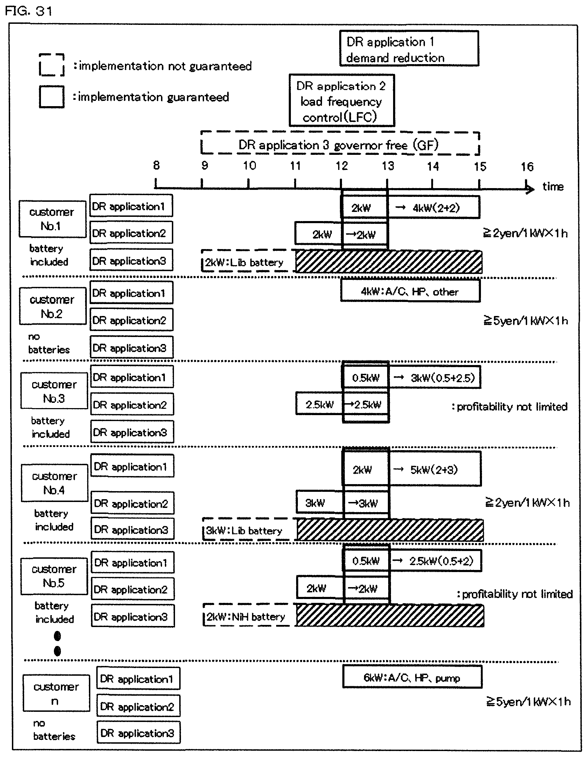

FIG. 31 shows request-destination customers for each DR application and the assignment of capacity for the request-destination customers.

For example, regarding customer No. 1 in FIG. 31, DR application 2 (LFC process) and DR application 1 (demand reduction process) are executed at the same time in the time slot 12:00-13:00. As the classification of processes at this time, DR application 2 is implemented using storage battery 9, and DR application 1 is implemented with an output reduction (a demand reduction of 2kW) of load (for example, an air conditioner or hot water heater) 10.

On the other hand, in the interval of time slot 13:00-15:00 at customer No. 1, the discharging of storage battery 9 is added in DR application 1 (demand reduction process) and the apparent demand is reduced by 4kW.

The implementation operation of DR application 1 is next described.

The implementation operation of DR application 1 shown hereinbelow is the content that is implemented in the time slot of 12:00-15:00 with adjustment units 80 of the request-destination customers of DR application 1 that were selected in the above-described processes as the objects of control.

Because basically the same charging/discharging processes are carried out for different customers, the implementation operation is here described taking customer No. 1 as an example.

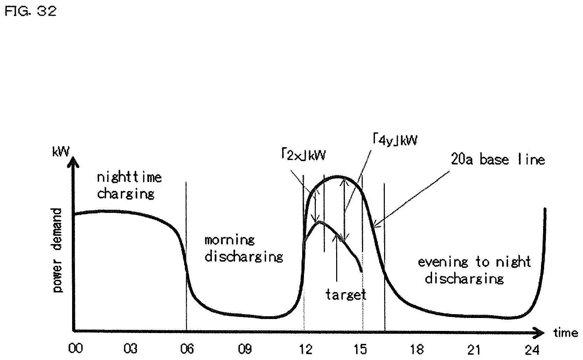

FIG. 32 shows the normal-time power demand curve of customer No. 1.

Customer No. 1 has storage battery (for example, a lithium-ion secondary cell) 9 in addition to ordinary household appliances (load 10).

Customer No. 1 implemented an operation that overall reduces electrical charges by charging storage battery 9 with inexpensive nighttime power and then by discharging storage battery 9 to meet power consumption of his or her own household appliances in the time slot of expensive daytime power.

However, discharging was not carried out in the time slot in which peak demand occurs on the side of power grid 3.

As a result, baseline 20a that corresponds to DR application 1 of customer No. 1 was recognized as the form shown by the solid line of FIG. 32.

In the time slot 12:00-15:00 on the day in question in which DR application 1 is implemented, demand reduction was carried out basically as:

$$
\begin{array}{ll}
\text{12:00-13:00:} & \text{baseline - "2} \times \text{x" kW} \\
\text{13:00-14:00:} & \text{baseline - "4} \times \text{y" kW} \\
\text{14:00-15:00:} & \text{baseline - "4} \times \text{y" kW}
\end{array}
$$

where "x" and "y" are weighting factors.

Control unit 704 of central control device 7 transmits information of the amount of power (electricity) demand reduction at each of these times from communication unit 701 to apparatus control device 8 of customer No. 1 at the stage of the previous day.

Further, on the day in question when implementing DR application 1, control unit 704 transmits, from communication unit 701 to apparatus control device 8 of customer No. 1, operation control information that identifies the amount of power (electricity) demand reduction at a period of TA1 = 5 minutes at the time when DR application 1 is being implemented. The operation control information that identifies the amount of power (electricity) demand reduction is an example of the operation control information of DR application 1.

The operation control information may represent the differential from the baseline (for example, "2x" kW at 12:00-13:00). Alternatively, the operation control information may represent a weighting factor (x or y).

Upon receiving operation control information by way of communication unit 802 in apparatus control device 8 of customer No. 1, control unit 804 takes such action as causing discharging of storage battery 9 at period TA2 = 0.1 seconds and causing reduction of the output of load 10 to realize the amount of power (electricity) demand reduction that is specified in the operation control information.

DR application 1 is implemented by carrying out the same control for other request-destination customers of DR application 1.

On the day in question, it is possible that, in the stage of implementing DR application 1, there will be a storage battery that is unable to implement DR application 1 due to communication trouble, a breakdown of the storage battery, or other circumstances in a storage battery that is maintained by a request-destination customer of DR application 1. It is here assumed that the number of request-destination customers of DR application 1 is M (where M is an integer equal to or greater than 2). A request-destination customer of DR application 1 that has a storage battery that is unable to carry out DR application 1 is referred to as a "non-implementing customer."

In this case, control unit 704 of central control device 7 attempts continuation of implementation of DR application 1 by changing the weighting factors (x, y) for storage batteries maintained by, from among the request-destination customers of DR application 1, request-destination customers other than the non-implementing customer.

For example, the weighting factor was originally 450kW/500kW = x in the time period 12:00-13:00. In this case, there is a storage battery output surplus of 50kW for the storage battery group that is maintained by all request-destination customers of DR application 1.

Accordingly, when one non-implementing customer is omitted, control unit 704 guarantees the original demand reduction capacity by making the weighting factor for the M-1 storage batteries that are the targets of use of DR application 1 the value "(450kW × M)/(500kW × (M-1))." On the day of implementing DR application 1, control unit 704 implements control of storage batteries that are the objects of use of DR application 1 by sending operation control information that specifies a "differential from the baseline" that is calculated by this new weighting factor to each request-destination customer of DR application 1 at a period of TA1 = 5 minutes.

If there is no control surplus power such as in the time slot 13:00-15:00, the deficient amount is compensated for by charging/discharging of, for example, storage batteries that the aggregator maintains as reserve power.

The execution operation of DR application 2 (LFC process) is next described. In the following explanation, the operation is described on the assumption that storage batteries 9 are the power supply/demand adjustment devices that can accommodate DR application 2. Apart from storage batteries 9, loads may also be power supply/demand adjustment devices that can accommodate DR application 2.

A summary of the execution operation of DR application 2 is first described.

(1) Central control device 7 first receives the SOC of storage batteries 9 that are the objects of use of DR application 2 at a period of TB1 from apparatus control devices 8 to which DR application 2 has been assigned and collects the SOC of storage batteries 9 that are the objects of use of DR application 2. The period TB1 is on the order of 15 minutes. "Storage batteries that are maintained by request-destination customers of DR application 2" refers to storage batteries 9 that are maintained by request-destination customers of DR application 2.

(2) Central control device 7 derives, for each collection of SOC of storage batteries 9 that are the objects of use of DR application 2, the total adjustable capacity $P_{ES-DR2}$ on the basis of the SOC of storage batteries 9 that are the objects of use of DR application 2.

(3) Central control device 7 next transmits total adjustable capacity $P_{ES-DR2}$ to load dispatching unit 2 at a period $T_m$. Period $T_m$ is equal to or greater than TB1, and for example, is 15 minutes.

(4) Load dispatching unit 2, for each reception of total adjustable capacity $P_{ES-DR2}$, calculates the LFC assignment capacity $LFC_{ES-DR2}$ (where $LFC_{ES-DR2} \leq P_{ES-DR2}$) for the storage battery 9 group that is the object of use of DR application 2.

(5) For each calculation of the LFC assignment capacity $LFC_{ES-DR2}$, load dispatching unit 2 uses the LFC assignment capacity $LFC_{ES-DR2}$ and the maximum value $\Delta f_{max}$ of the integrated value of the frequency deviation to create a DR2 charging/discharging gain line. Load dispatching unit 2 then transmits the DR2 charging/discharging gain line to central control device 7.

(6) Central control device 7 calculates DR2 allotment coefficient K in accordance with the most recent DR2 charging/discharging gain line from load dispatching unit 2.

(7) Central control device 7 next transmits DR2 allotment information (DR2 allotment coefficient K and the maximum value $\Delta F_{max}$ of the integrated value of the frequency deviation) to each apparatus control device 8 that has been assigned to DR application 2 at a period of TB1.

(8) Each apparatus control device 8 that has been assigned to DR application 2 calculates a local charging/discharging gain line that stipulates the charging/discharging action of storage batteries 9 that are the objects of use of DR application 2 on the basis of the DR2 allotment coefficient K and the maximum value $\Delta F_{max}$ of the integrated value of the frequency deviation). The local charging/discharging gain line will be described later.

Each apparatus control device 8 that has been assigned to DR application 2 uses the local charging/discharging gain line and the grid frequency to control the charging/discharging action of storage batteries 9 that are the objects of use of DR application 2.

Details of the execution operation of DR application 2 are next described.

The operation by which central control device 7 derives total adjustable capacity $P_{ES-DR2}$ on the basis of the SOC of storage batteries 9 that are the objects of use of DR application 2 (hereinbelow referred to as the "$P_{ES-DR2}$ derivation operation") is first described.

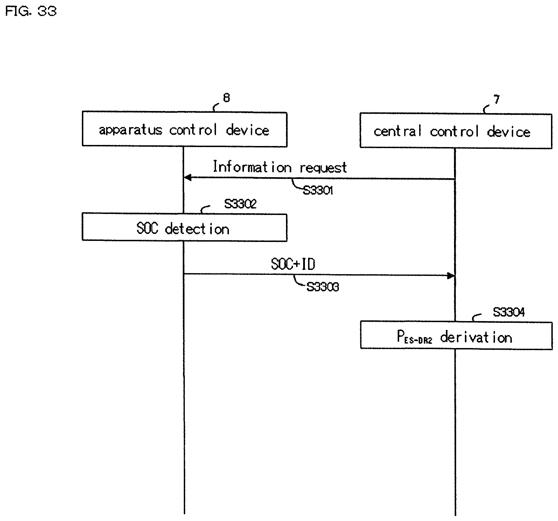

FIG. 33 is a sequence diagram for describing the $P_{ES-DR2}$ derivation operation. In FIG. 33, the number of apparatus control devices 8 that accommodate DR application 2 is assumed to be "1" in the interest of simplification of the explanation.

Communication unit 701 of central control device 7 transmits an information request indicating a request for SOC to each apparatus control device 8 that accommodates DR application 2 (Step S3301).

Control unit 804 in each apparatus control device 8, upon receiving the information request indicating a request for SOC by way of communication unit 802, detects the SOC of storage batteries 9 that are the objects of use of DR application 2 (Step S3302).

Control unit 804 next transmits the SOC detected by detection unit 801 together with an ID from communication unit 802 to central control device 7 (Step S3303). The ID is hereinbelow described as a sequential number (n) from "1" to "N."

Upon receiving the SOC to which the ID is appended (hereinbelow referred to as "SOC(n)") from each apparatus control device 8 that accommodates DR application 2, central control device 7 derives total adjustable capacity $P_{ES-DR2}$ (Step S3304).

Central control device 7 and each apparatus control device 8 that accommodates DR application 2 repeat the operations of Steps S3301-S3304 ($P_{ES-DR2}$ derivation operation) at a period of TB1.

The method of deriving total adjustable capacity $P_{ES-DR2}$ is next described.

Communication unit 701 of central control device 7 collects SOC(n) from each apparatus control device 8 that accommodates DR application 2 at a period of TB1.

Comprehension unit 703 next uses SOC(n) and the storage battery distribution ratio curves 202a and 202b in database 702 to derive storage battery distribution ratio $\alpha_{discharging}(n)$ of the time of discharging and storage battery distribution ratio $\alpha_{charging}(n)$ of the time of charging for each storage battery 9 that is the object of use of DR application 2.

In the present example embodiment, storage battery distribution ratio curves 202a and 202b are based on the curves shown in FIGs. 23A and 23B. Storage battery distribution ratio curves 202a and 202b are different curves according to information relating to the execution time required by DR application 2 and information such as the rated output P(n) of storage batteries 9 (the output of the power conditioner in kW and the storage battery capacity in kWh). For example, in the present example embodiment, a curve is used in which total adjustable capacity $P_{ES-DR2}$ that is derived by the processes described hereinbelow is a value that is thought to be sufficient to enable continuation of at least charging/discharging during the interval of period TB1. Further, the storage battery distribution ratio curve is not limited to the curve described in this instance and can be altered as appropriate according to the demand and DR application.

Here, the storage battery distribution ratio curves shown in FIGs. 23A and 23B use curves that take as an object basically maintaining SOC at about 50% during both charging and discharging. However, the storage battery distribution ratio curve may be corrected as appropriate to leave capacity for use of, for example, DR application 1 after DR application 2.

Comprehension unit 703 next uses storage battery distribution ratio $\alpha_{discharging}(n)$ and storage battery distribution ratio $\alpha_{charging}(n)$, the rated output P(n) of each of a total number N of storage batteries 9 that are the objects of use of DR application 2 in database 702, and the equations shown in Numerical Expression 1 and Numerical Expression 2 to derive $P_{ES, discharging}$ and $P_{ES, charging}$.

Numerical Expression 1

$$P_{ES,discharging} = \sum_{n=1}^{N} \alpha_{discharging}(n) \cdot P(n)$$

Numerical Expression 2

$$P_{ES,charging} = \sum_{n=1}^{N} \alpha_{charging}(n) \cdot P(n)$$

Comprehension unit 703 then adopts the smaller value of $P_{ES, discharging}$ and $P_{ES, charging}$ as the total adjustable capacity $P_{ES-DR2}$.

The operation by which central control device 7 communicates with load dispatching unit 2 to comprehend the DR2 charging/discharging gain line (hereinbelow referred to as the "DR2 comprehension operation") is next described.

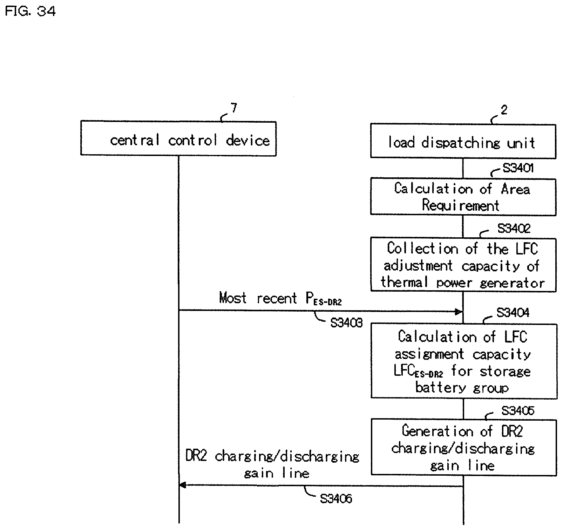

FIG. 34 is a sequence diagram for describing the DR2 comprehension operation. Control unit 203 of load dispatching unit 2 uses the grid frequency detected by frequency gauge 201 to calculate the area requirement (AR) that is the corrected output amount of a power plant (Step S3401).

Control unit 203 then collects the LFC adjustment capacity of thermal power generator 1 from the thermal power generator control unit (not shown in the figures) (Step S3402).

On the other hand, communication unit 701 of central control device 7 transmits the most recent total adjustable capacity $P_{ES-DR2}$ to load dispatching unit 2 (Step S3403).

Communication unit 202 of load dispatching unit 2 receives the most recent total adjustable capacity $P_{ES-DR2}$ that was transmitted from communication unit 701 of central control device 7. Communication unit 202 supplies this most recent total adjustable capacity $P_{ES-DR2}$ to control unit 203

Control unit 203, having received the most recent total adjustable capacity $P_{ES-DR2}$, uses the area requirement AR, the LFC adjustment capacity of thermal power generator 1, and the most recent total adjustable capacity $P_{ES-DR2}$ to derive the LFC capacity. Control unit 203 then assigns to thermal power generator 1 the capacity that remains after removing the sudden fluctuation component of the LFC capacity. Control unit 203 then assigns the remaining LFC capacity $LFC_{ES-DR2}$ (where $LFC_{ES-DR2} <= P_{ES-DR2}$) to the DR application 2 storage battery group as LFC assignment capacity $LFC_{ES-DR2}$ (Step S3404). DR application 2 storage battery group refers to the storage battery group that is maintained by the request-destination customers of DR application 2.

Control unit 203, taking into consideration the standpoint of economy while also considering the allotment of the EDC (Economic load Dispatching Control) component, sets the ratio of the assignment of the LFC capacity to thermal power generator 1 and the assignment of LFC capacity to the DR application 2 storage battery group (LFC assignment capacity $LFC_{ES-DR}$).

Control unit 203 next generates the DR2 charging/discharging gain line (refer to FIG. 24A) that represents the LFC assignment capacity $LFC_{ES-DR2}$ and the predetermined maximum value $\Delta f_{max}$ of the integrated value of the frequency deviation (Step S3405).

The DR2 charging/discharging gain line shown in FIG. 24A represents the charging/discharging amount of the DR application 2 storage battery group with respect to the integrated value $\Delta f$ of the frequency deviation. The DR2 charging/discharging gain line changes by becoming line 400A and then line 400B according to the size of LFC assignment capacity $LFC_{ES-DR2}$ ($LFC_{ES}$ or $LFC_{ES}'$) within the range of "LFC assignment capacity $LFC_{ES-DR2} <=$ total adjustable capacity $P_{ES-DR2}$."

Control unit 203 then transmits the DR2 charging/discharging gain line from communication unit 202 to central control device 7 (Step S3406).

Central control device 7 and load dispatching unit 2 repeat the operation of Steps S3401-S3406 (the DR2 comprehension operation) at period $T_m$ (for example, $T_m$ = 15 minutes).

Comprehension unit 703 of central control device 7 goes on receiving the DR2 charging/discharging gain line by way of communication unit 701 and holds the most recent charging/discharging gain line of the DR2 charging/discharging gain lines.

The operations of the generation of DR2 allotment information, the transmission of the DR2 allotment information to each apparatus control device 8, and the derivation of the local charging/discharging gain line by each apparatus control device 8 on the basis of the DR2 allotment information are next described (hereinbelow referred to as the "DR2 allotment operations").

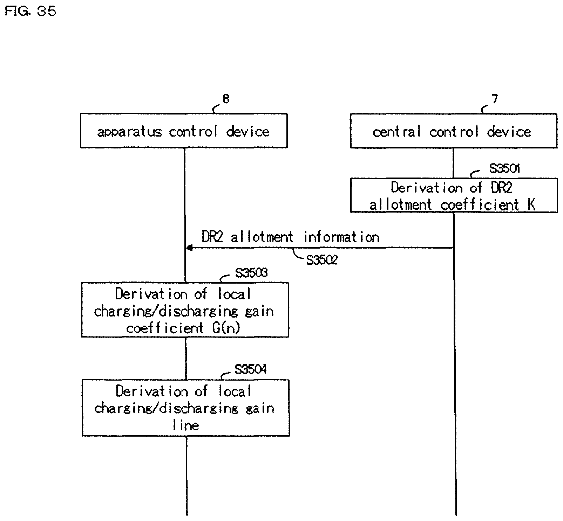

FIG. 35 is a sequence diagram for describing the DR2 allotment operation. In FIG. 35, the number of apparatus control devices 8 to which DR application 2 is assigned is assumed to be "1" in the interest of simplifying the explanation.

Control unit 704 of central control device 7 uses the LFC assignment capacity $LFC_{ES-DR2}$ that is indicated by the most recent charging/discharging gain line, the most recent total adjustable capacity $P_{ES-DR2}$, and the equation shown in Numerical Expression 3 to derive DR2 allotment coefficient K (Step S3501).

Numerical Expression 3

$$K = \frac{LFC_{ES\cdot DR2}}{P_{ES\cdot DR2}}$$

Control unit 704 then transmits from communication unit 701 DR2 allotment information that shows the DR2 allotment coefficient K and the maximum value $\Delta f_{max}$ of the integrated value of the frequency deviation that is indicated in the most recent DR2 charging/discharging gain line to each apparatus control device 8 that has been assigned to DR application 2 (Step S3502). Although Numerical Expression 3 was used as DR2 allotment coefficient K in the present example embodiment, in other cases, a flexible operation is also possible such as, when under pressure, individual storage batteries are instructed to use the value of DR2 allotment coefficient K in order to forcibly supply output that is close to the limit.

In the present example embodiment, the following process is executed in Step S3502.

Control unit 704 specifies, for each storage battery 9 that is the object of use of DR application 2, the smaller value of the latest storage battery distribution ratio $\alpha_{discharging}(n)$ and storage battery distribution ratio $\alpha_{charging}(n)$ that were derived by comprehension unit 703 as the storage battery distribution ratio $\alpha(n)$.

Control unit 704 then generates operation-relevant information that shows, for each storage battery 9 that is the object of use of DR application 2, the storage battery distribution ratio $\alpha(n)$ and the rated output P(n) that is held in database 702.

Control unit 704 next adds the DR2 allotment information to each item of operation-relevant information.

Control unit 704 then transmits from communication unit 701 the DR2 allotment information to which the operation-relevant information has been appended to apparatus control device 8 that corresponds to the operation-relevant information. The DR2 allotment information to which the operation-relevant information has been added is an example of the operation control information of DR application 2.

In each apparatus control device 8 that has been assigned to DR application 2, control unit 804 receives by way of communication unit 802 the DR2 allotment information to which the operation-relevant information has been appended.

Control unit 804 uses the DR2 allotment information to which the operation-relevant information has been appended and the equation shown in Numerical Expression 4 to derive local charging/discharging gain coefficient G(n) (Step S3503).

Numerical Expression 4

$$G(n) = \frac{K \cdot \alpha(n) \cdot P(n)}{\Delta f_{max}}$$

The values in the equation of Nu merical Explanation 4 are indicated in the DR2 allotment information to which the operation-relevant information has been appended.

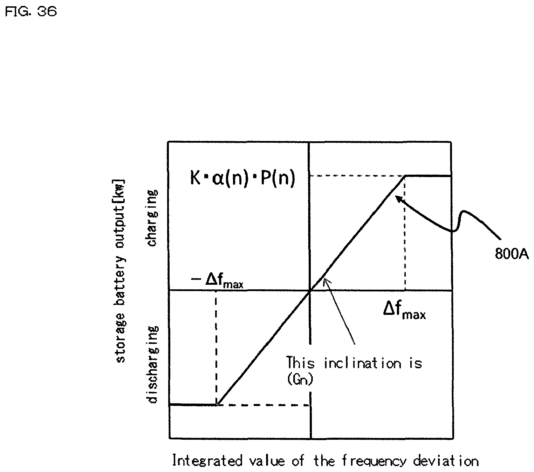

Control unit 804 next uses the local charging/discharging gain coefficient G(n) and the maximum value $\Delta f_{max}$ of the integrated value of the frequency deviation that was indicated in the DR2 allotment information to which the operation-relevant information is appended to derive the local charging/discharging gain line 800A shown in FIG. 36 (Step S3504).

The local charging/discharging gain line 800A shown in FIG. 36 is a straight line that passes through the origin 0 with an inclination that is the local charging/discharging gain coefficient G(n) within the range in which the integrated value $\Delta f$ of the frequency deviation satisfies $-\Delta f_{max} \leq \Delta f \leq \Delta f_{max}$. In addition, local charging/discharging gain line 800A takes a fixed value of "$-K \cdot \alpha(n) \cdot P(n)$" (where the minus sign represents discharging) within the range in which the integrated value $\Delta f$ of the frequency deviation is $\Delta f < -\Delta f_{max}$. In addition, the local charging/discharging gain line 800A takes the fixed value "$K \cdot \alpha(n) \cdot P(n)$" within the range in which the integrated value $\Delta f$ of the frequency deviation is $\Delta f_{max} < \Delta f$.

Central control device 7 and each apparatus control device 8 that has been assigned to DR application 2 repeat Steps S3501-S3504 at a period of TB1.

In each apparatus control device 8 that has been assigned to DR application 2, control unit 804 goes on receiving the DR2 allotment information to which the operation-relevant information has been appended by way of communication unit 802, and retains, of the DR2 allotment information to which the operation-relevant information has been appended, the most recent DR2 allotment information to which the operation-relevant information has been appended.

The operation (hereinbelow referred to as the "DR2 charging/discharging control operation") by which apparatus control device 8 that has been assigned to DR application 2 controls the charging/discharging of storage batteries 9 that are the objects of use of DR application 2 on the basis of the DR2 allotment information to which the operation-relevant information has been appended, and the grid frequency is next described.

At the starting time of DR application 2, control unit 704 of central control device 7 transmits execution spacing information IB that indicates the operation period TB2 to apparatus control devices 8 that have been assigned to DR application 2 by way of communication unit 701. Operation period TB2 is, for example, 10 seconds. Upon receiving the execution spacing information IB by way of communication unit 802, control unit 804 of apparatus control device 8 that has been assigned to DR application 2 holds the execution spacing information IB.

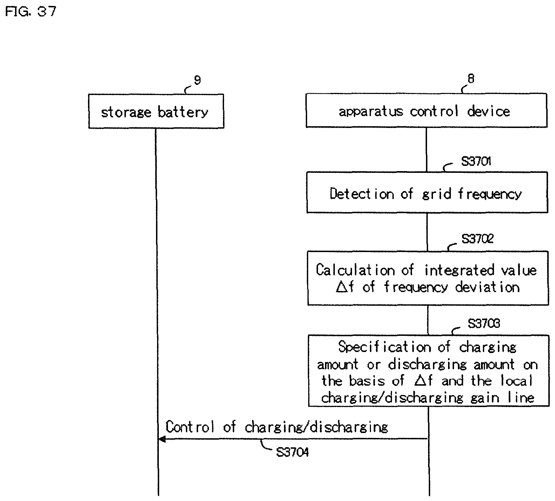

FIG. 37 is a sequence diagram for describing the charging/discharging control operation. In apparatus control device 8 that has been assigned to DR application 2, control unit 804 causes frequency gauge 803 to detect the grid frequency (Step S3701).

Control unit 804 next subtracts the standard frequency of the grid frequency from the detection result of frequency gauge 803 and calculates the integrated value $\Delta f$ of the frequency deviation by integrating the result of this subtraction (Step S3702).

Control unit 804 then calculates the charging amount or discharging amount of storage batteries 9 that are the objects of use of DR application 2 in accordance with the integrated value $\Delta f$ of frequency deviation and the local charging/discharging gain line (Step S3703).

When the absolute value of the integrated value $\Delta f$ of frequency deviation is equal to or less than the maximum value (threshold value) $\Delta f_{max}$ of the integrated value of the frequency deviation in Step S3703, control unit 804 calculates the absolute value of a value ($G(n) \cdot \Delta f$) obtained by multiplying the local charging/discharging gain coefficient $G(n)$ by the integrated value $\Delta f$ of frequency deviation as the adjustment power amount.

On the other hand, when the absolute value of the integrated value $\Delta f$ of frequency deviation is greater than the maximum value $\Delta f_{max}$ of the integrated value of the frequency deviation, control unit 804 calculates the value ($K \cdot \alpha(n) \cdot P(n)$) that is obtained by multiplying together the allotment coefficient K, the storage battery distribution ratio $\alpha(n)$, and the rated output $P(n)$ as the adjustment power amount.

In this example, a case of point symmetry is shown in which the inclination of $G(n)$ on the charging side and discharging side in FIG. 36 is the same, but in actuality, a case lacking point symmetry can be assumed, and in such a case, $G(n)$ is determined by a similar approach.

When the integrated value $\Delta f$ of frequency deviation is a positive value, control unit 804 next causes storage batteries 9 that are the objects of use of DR application 2 to execute a charging operation of the adjustment power amount. Alternatively, when the integrated value $\Delta f$ of frequency deviation is a negative value, control unit 804 causes storage batteries 9 that are the objects of use of DR application 2 to execute a discharging operation of the adjustment power amount (Step S3704).

Each apparatus control device 8 repeats Steps S3701-S3704 at period TB2 that is indicated by the execution spacing information IB. As a result, the value of the integrated value of the frequency deviation changes each time, and charging/discharging is performed each time according to $G(n) \cdot \Delta f$.

Apparatus control device 8 (for example, control unit 804) that executes DR application 2 further measures the charging/discharging result for LFC with respect to the baseline. Apparatus control device 8 (for example, control unit 804) that executes DR application 2 holds this measurement result. Apparatus control device 8 (for example, control unit 804) that executes DR application 2 transmits this measurement result to central control device 7 as implementation history at an appropriate frequency.

The execution operation of DR application 3 is next described. In the following explanation, an operation is described on the assumption that storage batteries 9 are the power supply/demand adjustment devices that are compatible with DR application 3. Apart from storage batteries 9, loads may also be power supply/demand adjustment devices that can accommodate DR application 2.

A summary of the execution operation of DR application 3 is first described.

(1) Central control device 7 receives the SOC of storage batteries 9 that are the objects of use of DR application 3 from apparatus control devices 8 that have been assigned to DR application 3 at a period of TC1 and collects the SOC of storage batteries 9 that are the objects of use of DR application 3. Period TC1 is on the order of 5 minutes. "Storage batteries 9 that are the objects of use of DR application 3" refers to storage batteries that are maintained by the request-destination customer of DR application 3.

(2) With each collection of the SOC of storage batteries 9 that are the objects of use of DR application 3, central control device 7 derives the total adjustable capacity $P_{ES-DR3}$ on the basis of the SOC of storage batteries 9 that are the objects of use of DR application 3.

(3) Central control device 7 next transmits the total adjustable capacity $P_{ES-DR3}$ to load dispatching unit 2 at a period of $T_m$. Period $T_m$ is equal to or greater than period TC1 and is, for example, 15 minutes.

(4) With each reception of the total adjustable capacity $P_{ES-DR3}$, load dispatching unit 2 calculates the GF assignment capacity $GF_{ES-DR3}$ (where $GF_{ES-DR3} \leq P_{ES-DR3}$) for the group of storage batteries 9 that are the objects of use of DR application 3.

(5) Load dispatching unit 2, with each calculation of GF assignment capacity $GF_{ES-DR3}$, uses the GF assignment capacity $GF_{ES-DR3}$ and the maximum value $f_{max}$ of frequency deviation to create a DR3 drooping characteristic line. Load dispatching unit 2 then transmits the DR3 drooping characteristic line to central control device 7.

(6) Central control device 7 calculates the DR3 allotment coefficient K in accordance with the most recent DR3 drooping characteristic line from load dispatching unit 2.

(7) Central control device 7 next transmits DR3 allotment information (DR3 allotment coefficient K and the maximum value $f_{max}$ of frequency deviation) to each apparatus control device 8 that is assigned to DR application 3 at a period TC1.

(8) Each apparatus control device 8 that has been assigned to DR application 3 calculates the local drooping characteristic line that stipulates the charging/discharging operation of storage batteries 9 that are the objects of use of DR application 3 on the basis of DR3 allotment coefficient K and the maximum value $f_{max}$ of frequency deviation. The local drooping characteristic line will be described later.

(9) Each apparatus control device 8 that has been assigned to DR application 3 uses the local drooping characteristic line and the grid frequency to control the charging/discharging operation of storage batteries 9 that are the objects of use of DR application 3.

The operation (hereinbelow referred to as the "$P_{ES-DR3}$ derivation operation") by which central control device 7 derives total adjustable capacity $P_{ES-DR3}$ on the basis of the SOC of storage batteries 9 that are the objects of use of DR application 3 is first described.

The explanation of this $P_{ES-DR3}$ derivation operation is realized by changing the readings in the explanation of the above-described $P_{ES-DR2}$ derivation operation as shown below.

The term "DR application 2" is to be read as "DR application 3."

"$_{DR2}$" is to be read as "$_{DR3}$."

"Period TB1" is to be read as "period TC1."

The operation (hereinbelow referred to as the "DR3 comprehension operation") by which central control device 7 communicates with load dispatching unit 2 to comprehend the DR3 drooping characteristic line is next described.

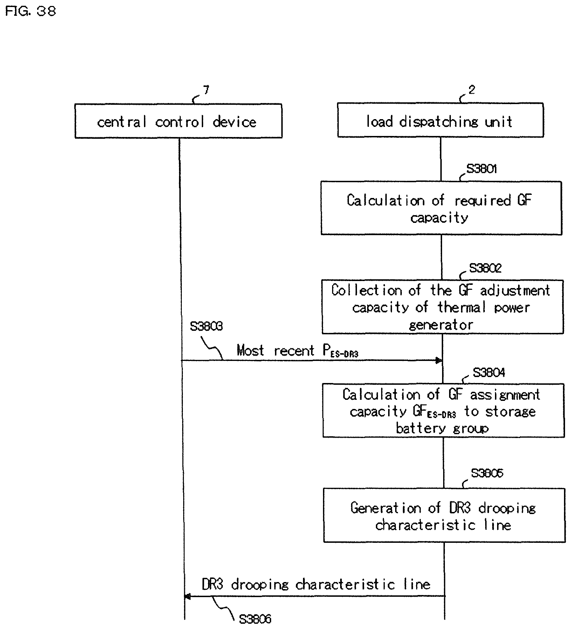

FIG. 38 is a sequence diagram for describing the DR3 comprehension operation. Control unit 203 of load dispatching unit 2 calculates the GF capacity required in an area on the basis of the estimated generation amount of solar power generation, the estimated generation amount of wind power generation, and the estimated power demand (Step S3801).

Control unit 203 then collects the GF adjustment capacity of thermal power generator 1 from the thermal power generator control unit (not shown in the figures) (Step S3802).

On the other hand, communication unit 701 of central control device 7 transmits the most recent total adjustable capacity $P_{ES-DR3}$ to load dispatching unit 2 (Step S3803).

Communication unit 202 of load dispatching unit 2 receives the most recent total adjustable capacity $P_{ES-DR3}$ that was transmitted from communication unit 701 of central control device 7. Communication unit 202 supplies the most recent total adjustable capacity $P_{ES-DR3}$ to control unit 203.

Control unit 203, upon receiving the most recent total adjustable capacity $P_{ES-DR3}$, performs sharing of the capacity to thermal power generator 1 and the DR application 3 storage battery group (the storage battery group that is the object of use of DR application 3). For example, control unit 203 uses the GF adjustment capacity of thermal power generator 1 and the most recent total adjustable capacity $P_{ES-DR3}$ to assign to thermal power generator 1, of the required GF capacity and of the capacity that thermal power generator 1 can bear, the portion of the capacity that can be efficiently taken on based on a forecast of the operating state of the generator. Control unit 203 next assigns to the DR application 3 storage battery group the remaining GF capacity $GF_{ES-DR3}$ (where $GF_{ES-DR3} \leq P_{ES-DR3}$) as GF assignment capacity $GF_{ES-DR3}$ (Step S3804).

Control unit then generates a DR3 drooping characteristic line (refer to FIG. 24B) that represents the GF assignment capacity $GF_{ES-DR3}$ and the maximum value $f_{max}$ of frequency deviation that was determined beforehand (Step S3805).

The DR3 drooping character line shown in FIG. 24B represents the charging/discharging amount of the DR application 3 storage battery group with respect to the frequency deviation Δf. The inclination of the DR3 drooping characteristic line changes according to the size of the GF assignment capacity $GF_{ES-DR3}$ (assignment ratio) within the range of "GF assignment capacity $GF_{ES-DR3} \leq$ total adjustable capacity $P_{ES-DR3}$."

Control unit 203 next transmits the DR3 drooping characteristic line from communication unit 202 to central control device 7 (Step S3806).

Central control device 7 and load dispatching unit 2 repeat the operations of Steps S3801-S3806 (the DR3 comprehension operation) at period $T_m$ (where $T_m$ is, for example, 15 minutes).

Comprehension unit 703 of central control device 7 goes on receiving the DR3 drooping characteristic line by way of communication unit 701 and holds, of the DR3 drooping characteristic lines, the most recent drooping characteristic line.

The operations of generating the DR3 allotment information, transmitting the DR3 allotment information to each apparatus control device 8, and deriving the local drooping characteristic line (hereinbelow referred to as "DR3 allotment operation") are next described.

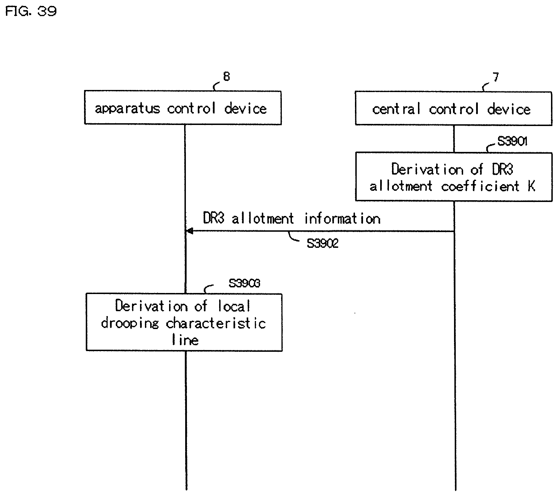

FIG. 39 is a sequence diagram for describing the DR3 allotment operation. In FIG. 39 the number of apparatus control devices 8 that are assigned to DR application 3 is made "1" in the interest of simplifying the explanation.

Control unit 704 of central control device 7 uses the GF allotment capacity $GF_{ES-DR3}$ indicated in the most recent drooping characteristic line, the most recent total adjustable capacity $P_{ES-DR3}$, and the equation shown in Numerical Expression 5 to derive the DR3 allotment coefficient K (Step S3901).

## Numerical Expression 5

$$K= \left(GF_{ES-DR3}\right) \ / \ \left(P_{ES-DR3}\right)$$

Control unit 704 next transmits DR3 allotment information that indicates the DR3 allotment coefficient K and the maximum value $f_{max}$ of the frequency deviation indicated in the most recent DR3 drooping characteristic line from communication unit 701 to each apparatus control device 8 that has been assigned to DR application 3 (Step S3902). In the present example embodiment, Numerical Expression 5 is used as DR3 allotment coefficient K, but flexible operation is also possible such as, when under pressure, individual storage batteries are instructed to use the value of DR3 allotment coefficient K in order to forcibly supply output that is close to the limit.

In the present example embodiment, the following process is executed in Step S3902. Control unit 704 specifies as the storage battery distribution ratio (n) for each storage battery 9 that is the object of use of DR application 3, the smaller value of the latest storage battery distribution ratio $\alpha_{discharging}(n)$ and storage battery distribution ratio $\alpha_{charging}(n)$ that were derived by comprehension unit 703.

Control unit 704 then generates, for each storage battery 9 that is the object of use of DR application 3, operation-relevant information that shows the storage battery distribution ratio $\alpha(n)$ and the rated output $P(n)$ that is held in database 702.

Control unit 704 then appends the DR3 allotment information to each item of operation-relevant information.

Control unit 704 next transmits from communication unit 701 to apparatus control devices 8 that correspond to the operation-relevant information the DR3 allotment information to which the operation-relevant information has been appended. The DR3 allotment information to which the operation-relevant information has been appended is an example of the operation control information of DR application 3.

In each apparatus control device 8 that has been assigned to DR application 3, control unit 804 receives the DR3 allotment information to which the operation-relevant information has been appended by way of communication unit 802.

Control unit 804 uses the maximum value $f_{max}$ of frequency deviation that is indicated in the DR3 allotment information to which the operation-relevant information has been appended and the equation shown in Numerical Expression 6 to derive the local drooping characteristic line (Step S3903).

## Numerical Expression 6

$$GF(n)=K \cdot \alpha(n) \cdot P(n)$$

The values in the equation of Numerical Expression 6 are shown in the DR3 allotment information to which the operation-relevant information has been appended.

Local drooping characteristic line 400C shown in FIG. 24B is a straight line that passes through the origin (0 [kW], $f_0 = 50$Hz) and that has an inclination determined by GF(n) and $f_{max}$ in the range in which the frequency deviation $\Delta f$ is $-f_{max} \leq \Delta f \leq +f_{max}$. In addition, local drooping characteristic line 400C takes the fixed value "$-K \cdot \alpha(n) \cdot P(n)$" (where the minus sign indicates discharging) in the range in which frequency deviation $\Delta f$ is $\Delta f < -f_{max}$. Further, local drooping characteristic line 400C takes the fixed value "$K \cdot \alpha(n) \cdot P(n)$" in the range where frequency deviation $\Delta f$ is $+f_{max} < \Delta f$.

Central control device 7 and each apparatus control device 8 that has been assigned to DR application 3 repeat Steps S3901-S3903 at period TC1 (where TC1 is, for example, 5 minutes).

In each apparatus control device 8 that has been assigned to DR application 3, control unit 804 goes on receiving DR3 allotment information to which operation-relevant information has been appended by way of communication unit 802 and holds, of the DR3 allotment information to which operation-relevant information has been appended, the most recent DR3 allotment information to which operation-relevant information has been appended.

An operation (hereinbelow referred to as the "DR3 charging/discharging control operation") in which apparatus control devices 8 that have been assigned to DR application 3 control the charging/discharging of storage batteries 9 that are the objects of use of DR application 3 on the basis of the DR3 allotment information to which operation-relevant information has been appended and the grid frequency is next described.

At the starting time of DR application 3, control unit 704 of central control device 7 transmits execution spacing information IB that indicates the operation period TC2 to apparatus control devices 8 that have been assigned to DR application 3 by way of communication unit 701. Operation period TC2 is, for example, 0.1 seconds. Having received the execution spacing information IB by way of communication unit 802, control unit 804 of apparatus control device 8 that has been assigned to DR application 3 holds the execution spacing information IB.

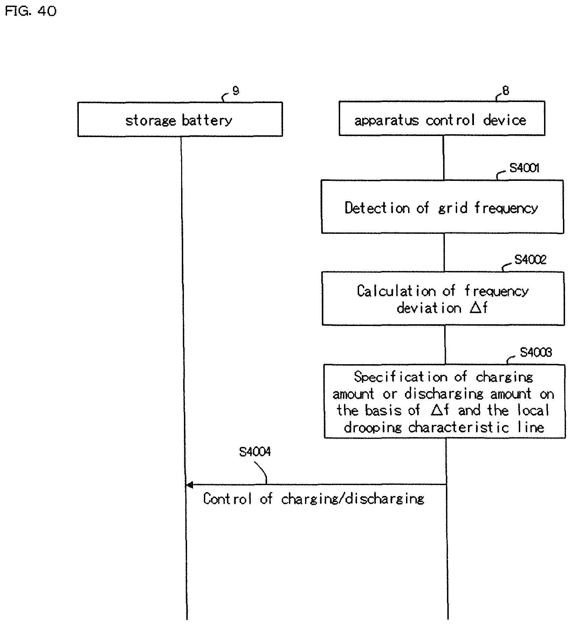

FIG. 40 is a sequence diagram for describing the charging/discharging control operation.

In apparatus control devices 8 that have been assigned to DR application 3, control unit 804 causes frequency gauge 803 to detect the grid frequency (Step S4001).

Control unit 804 then subtracts the standard frequency of the grid frequency from the detection result of frequency gauge 803 and calculates the frequency deviation $\Delta f$ (Step S4002).

Control unit 804 next calculates the charging amount or discharging amount of storage batteries 9 that are the objects of use of DR application 3 in accordance with the frequency deviation $\Delta f$ and the local drooping characteristic line (Step S4003).

In Step S4003, when the absolute value of the frequency deviation $\Delta f$ is equal to or less than maximum value (threshold value) $f_{max}$ of frequency deviation, control unit 804 calculates the absolute value of the value obtained by multiplying GF(n) by a value obtained by dividing frequency deviation $\Delta f$ by $f_{max}$ (GF(n) $\cdot \Delta f / f_{max}$) as the adjustment power amount.

On the other hand, when the absolute value of the frequency deviation $\Delta f$ is greater than the maximum value $f_{max}$ of the absolute value of the frequency deviation, control unit 804 calculates GF(n) as the adjustment power amount.

Control unit 804 next causes storage batteries 9 that are the objects of use of DR application 3 to execute a charging operation of the adjustment power amount when the frequency deviation $\Delta f$ is a positive value. Alternatively, when the frequency deviation $\Delta f$ is a negative value, control unit 804 causes storage batteries 9 that are the objects of use of DR application 3 to execute a discharging operation of the adjustment power amount (Step S4004).

Each apparatus control device 8 repeats Steps S4001-S4004 at period TC2 that was indicated in the execution spacing information IB (where TC2 is, for example, 0.1 seconds). As a result, the value of frequency deviation in each instance changes, and the charging/discharging is carried out each time in accordance with GF(n) $\cdot \Delta f / f_{max}$.

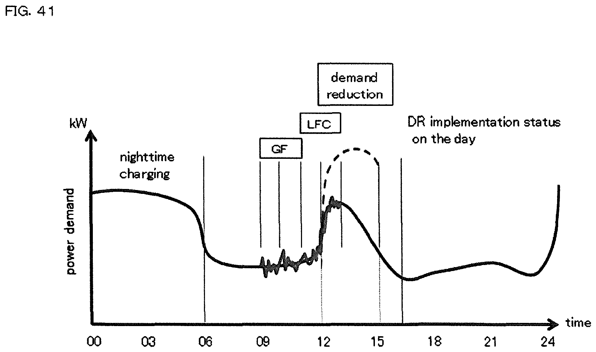

FIG. 41 shows an example of the power demand when DR applications 1-3 are executed in customer No. 1.

The effects of the present example embodiment are next described.

According to the present example embodiment, selection unit 700 uses processing information for each customer to select each request-destination customer of DR applications 1-3. The processing information indicates DR applications that can be accommodated by adjustment units 80 that include one or more storage batteries 9 and loads 10 maintained by customers.

It is therefore possible to make a request for the DR application to customers that maintain adjustment units 80 that can accommodate the DR application. As a result, the possibility of implementing a DR application can be increased, and an improvement in the reliability of power supply/demand adjustment by means of a DR application and an improvement in control accuracy become possible.

The effect of using "processing information" in an adjustment unit (apparatus control device) that manages in the adjustment unit of each customer and consolidates controllable capacity is here described.

When the objects of control are expanded to include, apart from storage batteries maintained by customers, electrical apparatuses such as household appliances or air conditioning, the type of applications that can be implemented using the apparatuses of each customer becomes unclear and efficient implementation of DR applications actually becomes problematic.

Furthermore, when the objects of control are expanded to include, apart from storage batteries, typical apparatuses such as household appliances or air conditioning, the control of the apparatuses directly affects people's lives, thus raising issues of security and privacy, and direct control of apparatuses by a central control device therefore becomes problematic.

In each of the above-described example embodiments, security is taken into consideration, and the controllable capacity of the electrical apparatuses maintained by a customer is taken as a candidate in order to realize the controllable capacity without inquiring exactly which apparatuses a customer might control.

Further, the apparatus control device of a customer is able to recognize the frequency dependency of the demand control capacity that can be realized by the "entire apparatus group" of the customer. As a result, each DR application can be accommodated. Moreover, until now, an apparatus control device was not able to recognize the frequency characteristic regarding the response of each apparatus of a customer, and efficient DR utilization of apparatuses was therefore not possible.

According to each of the above-described example embodiments, the problems of security and privacy can be solved by not implementing direct control of each apparatus of a customer by a central control device, but rather, by enabling the execution of indirect control by way of an apparatus control device.

A modification of the present example embodiment is next described.

Each of period TA1, period TB1, period TC1, period TA2, period TB2, and period TC2 can be changed as appropriate.

The number of DR applications that central control device 7 carries out is not limited to three and can be changed as appropriate.

The DR applications that central control device 7 carries out are not limited to DR applications 1-3 and can be altered as appropriate.

For example, a spinning reserve process or a non-spinning reserve process may be used as a DR application.

In this case, database 702 further stores characteristics of each of a spinning reserve process and a non-spinning reserve process (for example, the response time, degree of communication confidence, profitability, reliability, and implementation time).

Spinning reserve is next described.

Spinning reserve refers to supply power that, at the time of dropped power supply, immediately begins to react to a drop in frequency to rapidly (within about 10 seconds) raise output, and that can be continuously and spontaneously generated at least until the time that operating reserve other than spinning reserve comes into play.

As a result, storage batteries that are compatible with the characteristics of a spinning reserve process are storage batteries that have a time response characteristic that can immediately react at the time of dropped power supply as described above, and that have supply power that can be continuously generated.

Selection unit 700 further has the following functions.

Selection unit 700 has the function of selecting, as request-destination customers that are the request destinations of a spinning reserve process, customers that maintain storage batteries that accommodate the characteristics of the spinning reserve process. In addition, selection unit 700 has the function of selecting, as request-destination customers that are the request destinations of a non-spinning reserve process, customers that maintain storage batteries that accommodate the characteristics of the non-spinning reserve process.

Control unit 704 transmits operation control information for controlling the operation of storage batteries in accordance with the spinning reserve process to apparatus control devices that are maintained by request-destination customers of the spinning reserve process. Control unit 704 further transmits operation control information for controlling the operation of storage batteries in accordance with a non-spinning reserve process to apparatus control devices that are maintained by request-destination customers of the non-spinning reserve process.

As a non-spinning reserve process or spinning reserve process that uses the storage batteries of customers to carry out power demand control, the following operation modes can be considered as examples of operation modes:

Capacity (kW) is reserved as reserve power 24 hours, and compensation (such as 1 yen/kW $\times$ 1h) is paid for the reserve of reserve power. The operation of the spinning reserve process is put into motion at a limited time such as 11:00-11:30.

For example, control unit 704 transmits an operation control signal to apparatus control device 8 of customer No. 3 that participates in the spinning reserve process such that 3 kW is normally reserved for spinning reserve in customer No. 3.

On a preceding day, when notification of a new power (electricity) demand reduction DR arrives at customer No. 3, customer No. 3 delays action if the power (electricity) demand reduction DR requires an implementation guarantee, but if there is no implementation guarantee, in view of the price (which is 5 yen/kWh), customer No. 3 tenders a bid at, for example, 2kW × 3h.

On the day in question, prioritized spinning reserve for which implementation guarantee is required is put into operation from 11:00 until 11:30, whereby, in customer No. 3, spinning reserve is carried out during this time and an operation to participate in power (electricity) demand reduction is carried out between 12:00 and 15:00.

Even when the use of storage batteries 9 maintained by customer No. 3 is not prioritized for the DR, an operation such as described below may be carried out.

Customer No. 3, in view of the frequency of activation of spinning reserve, reserves a permissible output in advance for spinning reserve. Then, although customer No. 3 normally uses storage batteries 9 for its own purposes, customer No. 3 uses storage batteries 9 with priority given to spinning reserve whenever spinning reserve is put into operation.

In communication that is carried out in the above-described periods TA1, TB1, and TC1, central control device 7 carries out collection of not only operation control information, but also information relating to the monitoring of communication states and the monitoring of the states of implementation of control.

In addition, when discharge (reverse power flow) to power grid 3 from storage batteries 9 (customer side) is prohibited, control unit 804 causes the discharge power of storage batteries 9 to discharge within the range of the amount of power consumption of loads 10 of the customer. The consumption of the discharge power of storage batteries 9 by loads 10 reduces the power demand upon power grid 3.

When the discharge (reverse power flow) from storage batteries 9 to power grid 3 is not prohibited, control unit 804 may supply the discharge power of storage batteries 9 to power grid 3.

In the present example embodiment, central control device 7 determines the baseline of each DR application, but each apparatus control device 8 may also determine the baseline station of each DR application.

In the present example embodiment, control unit 804 uses the frequency deviation f and the integrated value $\Delta$f of frequency deviation that fluctuate according to the state of the power supply/demand balance as information for specifying the overall supply/demand adjustment amount.

However, the information for specifying the overall supply/demand adjustment amount is not limited to the frequency deviation f and integrated value $\Delta$f of frequency deviation and can be altered as appropriate. For example, information that indicates the overall supply and demand adjustment amount may also be used as information for specifying the overall supply and demand adjustment amount instead of the frequency deviation f and integrated value $\Delta$f of frequency deviation.

Information that indicates the overall supply and demand adjustment amount is, for example, transmitted from load dispatching unit 2. In this case, load dispatching unit 2 transmits the information that indicates overall supply and demand adjustment amount to each apparatus control device 8 by, for example, one-way communication (for example, broadcast transmission). The method of transmitting information that indicates the overall supply and demand adjustment amount is not limited to one-way communication (for example, broadcast transmission) and can be altered as appropriate.

In each apparatus control device 8, communication unit 802 receives the information that indicates the overall supply and demand adjustment amount and supplies the information that indicates the overall supply and demand adjustment amount to control unit 804. Control unit 804 uses the overall supply and demand adjustment amount in place of, for example, the integrated value $\Delta$f of frequency deviation. In this case, the power supply/demand adjustment is explained by revising "integrated value $\Delta$f of frequency deviation" to "overall supply and demand adjustment amount."

Load dispatching unit 2 generates information that indicates the overall supply and demand adjustment amount as shown hereinbelow.

Load dispatching unit 2 uses the grid frequency and the power flow of linking line 4 to calculate the overall supply and demand adjustment amount.

For example, when power is being supplied from power grid 3 to another power grid 13 by way of linking line 4, load dispatching unit 2 multiplies a predetermined constant by a value obtained by subtracting the actual grid frequency from the standard frequency of the grid frequency. Load dispatching unit 2 next calculates a value obtained by subtracting the flow of linking line 4 (the power that is being supplied from power grid 3 to another power grid 13 by way of linking line 4) from the result of this multiplication as the overall supply and demand adjustment amount.

When power is being supplied from another power grid 13 to power grid 3 by way of linking line 4, load dispatching unit 2 first multiplies a predetermined constant by a value obtained by subtracting the actual grid frequency from the standard frequency of the grid frequency as described above. Load dispatching unit 2 then calculates, as the overall supply and demand adjustment amount, the result of adding the flow of linking line 4 (the power that is being supplied from another power grid 13 to power grid 3 by way of linking line 4) to the result of the multiplication.

In each of the above-described example embodiments, the processing information may also include information that indicates the intent to participate in power adjustment and constraint conditions of a power supply/demand adjustment process (application).

The intent to participate is indicated by, for example, "will participate this time," "will not participate this time," and "will participate." In this case, control devices A-C and AA and central control device 7 use the processing information shown by an "intent to participate" display to select request-destination customers.

The constraint conditions are shown by, for example, "reverse power flow possible" and "reverse power flow not possible." In this case, when "reverse power flow possible" is indicated, control devices A-C and AA and central control device 7 request request-destination customers for reverse power flow as necessary. On the other hand, when "reverse power flow not possible" is indicated, control devices A-C and AA and central control device 7 do not request request-destination customers for reverse power flow.

In each of the above-described example embodiments, when the selection unit (acquisition unit) of an apparatus control device or customer-side device (customer side), or of a control device or central control device (aggregator side) is to acquire, for example, information relating to the characteristics of an application or information relating to batteries, as described in the above example embodiments, the selection unit may acquire the information from a storage unit or from each other's apparatus control device, customer-side device, control device, or central control device, or may acquire the above-described information by way of an outside device.

In each of the above-described example embodiments, each of control devices A-C and AA, customer-side devices D-H and DD, central control device 7, apparatus control device 8 may be realized by a computer. In this case, the computer reads and executes a program that is recorded on a recording medium that can be read by a computer to execute the functions belonging to control devices A, B, C, and AA, customer-side devices D, E, F, G, H, and DD, central control device 7, or apparatus control device 8. The recording medium is, for example, a CD-ROM (Compact Disk Read Only Memory). The recording medium is not limited to a CD-ROM and can be altered as appropriate.

In each of the above-described example embodiments, the configurations shown in the figures are merely examples, and the present invention is not limited to these configurations.

In the present specification, "acquisition" includes at least one of: one's own device taking data or information that is stored in another device or recording medium (dynamic acquisition) such as by requesting or inquiring and receiving from another device or by accessing another device or recording medium and reading; and inputting to one's own device data or information supplied from another device (passive acquisition) such as by receiving data or information that is distributed (or transmitted or push-notified). In addition, "acquisition" further includes acquisition by selecting from among data or information that has been received, or receiving by selecting data or information that has been distributed.

Although the invention of the present application has been described with reference to example embodiments, the invention of the present application is not limited to the above-described example embodiments. The configuration and details of the invention of the present application are open to various modifications within the scope of the invention of the present application that will be clear to one of ordinary skill in the art. The present application claims the benefits of priority based on Japanese Patent Application No. 2014-156204 for which application was submitted on July 31, 2014 and incorporates by citation all of the disclosures of that application.

All or a portion of the above-described example embodiments can be described as in the following Notes but is not limited by the following Notes.

## SUPPLEMENTARY NOTE 1

A control device is provided with:

an acquisition unit that acquires processing information that indicates power supply/demand adjustment processing that can be accommodated in an adjustment unit that manages for each customer adjustment amounts in one or more power supply/demand adjustment devices that are used in power adjustment of the power supply/demand adjustment processing; and
a reporting unit that, on the basis of information that indicates characteristics relating to the power supply/demand adjustment processing and the processing information, reports actuation of the power supply/demand adjustment processing to a customer for which said power supply/demand adjustment processing is carried out.

## SUPPLEMENTARY NOTE 2

In the control device as described in Note 1, information that indicates characteristics relating to the power supply/demand adjustment processing is information that indicates favorable conditions for executing the power supply/demand adjustment processing.

## SUPPLEMENTARY NOTE 3

In the control device as described in Note 1, the processing information is further provided with executable intervals in which the adjustment unit executes the power supply/demand adjustment processing; and
on the basis of the executable intervals, the reporting unit reports the actuation of the power supply/demand adjustment processing to a customer for which said power supply/demand adjustment processing is carried out..

**SUPPLEMENTARY NOTE 4**

In the control device as described in Note 1, the processing information is provided with a power value that can be supplied when the adjustment unit is executing the power supply/demand adjustment processing; and
the reporting unit, on the basis of the power value that can be supplied, reports the actuation of the power supply/demand adjustment processing to a customer for which said power supply/demand adjustment processing is carried out.

**SUPPLEMENTARY NOTE 5**

In the control device as described in Note 1, profitability is provided that is the compensation paid to a customer for each process of the power supply/demand adjustment processing; and
the reporting unit, on the basis of the profitability, reports actuation of the power supply/demand adjustment processing to a customer for which said power supply/demand adjustment processing is carried out.

**SUPPLEMENTARY NOTE 6**

In the control device as described in Note 5, the reporting unit reports actuation of the power supply/demand adjustment processing to a customer for which said power supply/demand adjustment processing is carried out in an order of priority starting from the power supply/demand adjustment process having the highest profitability.

**SUPPLEMENTARY NOTE 7**

In the control device as described in any one of Notes 1 to 6, the report of the actuation of the power supply/demand adjustment processing is a report of operation control information that controls the operation of the power supply/demand adjustment devices.

**SUPPLEMENTARY NOTE 8**

An apparatus control device has:

an adjustment unit that manages for each customer information relating to one or more power supply/demand adjustment devices that are used in power adjustment of power supply/demand adjustment processing; and
a reporting unit that, on the basis of information indicating characteristics relating to the power supply/demand adjustment processing and information relating to power supply/demand adjustment devices in the adjustment unit of each customer, transmits to an outside device processing information that indicates whether execution of the power supply/demand adjustment processing can be accommodated.

**SUPPLEMENTARY NOTE 9**

In the apparatus control device as described in Note 8, information that indicates characteristics relating to the power supply/demand adjustment processing is information that indicates favorable conditions in the execution of the power supply/demand adjustment processing.

**SUPPLEMENTARY NOTE 10**

In the control device as described in Note 8 or 9, the information relating to the power supply/demand adjustment devices is information indicating characteristics of power supply/demand adjustment devices that accommodate favorable conditions in the execution of the power supply/demand adjustment processing.

**SUPPLEMENTARY NOTE 11**

In the apparatus control device as described in Note 8, the processing information includes information that indicates the adjustment amount that can be accommodated in the execution of the power supply/demand adjustment processing.

**SUPPLEMENTARY NOTE 12**

In the apparatus control device as described in Note 8, the processing information is set for each of the customers and includes information that indicates constraint conditions and the intent to participate in power adjustment of power supply/demand adjustment processing.

**SUPPLEMENTARY NOTE 13**

In the apparatus control device as described in Note 8, the reporting unit reports to an outside device processing information indicating that an adjustment unit has a response time that is equal to or less than the response time of the power supply/demand adjustment processing.

**SUPPLEMENTARY NOTE 14**

In the apparatus control device as described in Note 8, the reporting unit reports to an outside device processing information indicating that an adjustment unit has a degree of communication confidence that is equal to or greater than the degree of communication confidence of the power supply/demand adjustment processing.

**SUPPLEMENTARY NOTE 15**

In the apparatus control device as described in Note 8, the reporting unit reports to an outside device processing information indicating that an adjustment unit is provided with a profitability condition that is equal to or less than the compensation of the power supply/demand adjustment processing.

**SUPPLEMENTARY NOTE 16**

In the apparatus control device as described in Note 15, when there are a plurality of processes relating to the power supply/demand adjustment having compensation that is equal to or greater than the profitability condition provided in the power supply/demand adjustment device, the reporting unit reports processing information to an outside device indicating that an adjustment unit accommodates characteristics of power supply/demand adjustment processing having the highest profitability.

**SUPPLEMENTARY NOTE 17**

In the apparatus control device as described in Note 8, the reporting unit reports to an outside device processing information indicating that an adjustment unit has a usage-permitted interval in the execution interval of the power supply/demand adjustment processing.

**SUPPLEMENTARY NOTE 18**

In the apparatus control device as described in Note 8, the reporting unit transmits the state of the adjustment unit to an outside device and receives operation control information that accords with the state of the adjustment unit from the outside device.

**SUPPLEMENTARY NOTE 19**

The apparatus control device as described in Note 8 acquires the state of a power grid at a time interval that is shorter than the reception interval of the operation control information and, on the basis of the state of the relevant power grid and the operation control information, controls the operation of the power supply/demand adjustment devices.

**SUPPLEMENTARY NOTE 20**

In the apparatus control device as described in Note 8, the communication unit receives from the outside device operation control information that is generated on the basis of the state of the power supply/demand adjustment devices and the power amount that is shared by all of N (where N is a number equal to or greater than 1) power supply/demand adjustment devices for adjusting the power amount on the power grid.

**SUPPLEMENTARY NOTE 21**

The apparatus control device as described in Note 8 is provided with a reception unit that receives a report of the actuation of the power supply/demand adjustment processing indicating that a customer undergoes said power supply/demand adjustment processing that was determined on the basis of the processing information and predetermined conditions.

**SUPPLEMENTARY NOTE 22**

In the apparatus control device as described in Note 8, the processing information is provided with an executable interval in which the adjustment unit executes the power supply/demand adjustment processing; and
the reception unit receives a report of the actuation of the power supply/demand adjustment processing that was determined on the basis of the execution interval for each process of the power supply/demand adjustment processing.

**SUPPLEMENTARY NOTE 23**

In the apparatus control device as described in Note 8, the processing information is provided with a power value that can be supplied when the adjustment unit executes the power supply/demand adjustment processing, and
the reception unit receives a report of the actuation of the power supply/demand adjustment processing that was determined on the basis of the power value that can be supplied for each process of the power supply/demand adjustment processing.

**SUPPLEMENTARY NOTE 24**

In the apparatus control device as described in Note 8, profitability is set that is the compensation paid to a customer for each process of the power supply/demand adjustment processing; and
the reception unit receives a report of the actuation of the power supply/demand adjustment processing that was determined on the basis of profitability for each process of the power supply/demand adjustment processing.

**SUPPLEMENTARY NOTE 25**

In the apparatus control device as described in Note 8, the reception unit receives a report of the actuation of the power supply/demand adjustment processing in an order of priority that starts with power supply/demand adjustment processing that has the highest profitability.

**SUPPLEMENTARY NOTE 26**

In the apparatus control device as described in any one of Notes 21 to 25, the report of the actuation of the power supply/demand adjustment processing is a report of operation control information that controls the operation of the power supply/demand adjustment devices.

**SUPPLEMENTARY NOTE 27**

In the apparatus control device as described in any one of Notes 8 to 26, the power supply/demand adjustment device is a storage battery and functions as a power storage device that contains the storage battery.

**SUPPLEMENTARY NOTE 28**

A reporting method includes steps of:

acquiring processing information that indicates power supply/demand adjustment processing that can be accommodated in an adjustment unit that manages, for each customer, adjustment amounts in one or more power supply/demand adjustment devices that are used in power adjustment of the power supply/demand adjustment processing;
on the basis of information indicating characteristics relating to the power supply/demand adjustment processing and the processing information, reporting the actuation of the power supply/demand adjustment processing to a customer for which said power supply/demand adjustment processing is carried out.

## SUPPLEMENTARY NOTE 29

In the reporting method as described in Note 28, the information that indicates characteristics relating to the power supply/demand adjustment processing is information that indicates favorable conditions in the execution of the power supply/demand adjustment processing.

## SUPPLEMENTARY NOTE 30

In the reporting method as described in Note 28 or 29, the report of actuation of the power supply/demand adjustment processing is a report of operation control information that controls the operation of the power supply/demand adjustment devices.

## SUPPLEMENTARY NOTE 31

A reporting method includes steps of:

managing, for each customer, information relating to one or more power supply/demand adjustment devices that are used in power adjustment of power supply/demand adjustment processing; and
on the basis of information that indicates characteristics relating to the power supply/demand adjustment processing and information relating to power supply/demand adjustment devices in the adjustment unit of each customer, transmitting to an outside device processing information that indicates whether the execution of the power supply/demand adjustment processing can be accommodated.

## SUPPLEMENTARY NOTE 32

In the reporting method as described in Note 31, information that indicates characteristics relating to the power supply/demand adjustment processing is information that indicates favorable conditions in the execution of the power supply/demand adjustment processing.

## SUPPLEMENTARY NOTE 33

In the reporting method as described in Note 31 or 32, information relating to the power supply/demand adjustment devices is information that indicates characteristics of power supply/demand adjustment devices that accommodate favorable conditions in the execution of the power supply/demand adjustment processing.

## SUPPLEMENTARY NOTE 34

A recording medium that can be read by a computer and on which a program is recorded causes a computer to execute:

an acquisition procedure of acquiring processing information that indicates power supply/demand adjustment processing that can be accommodated in an adjustment unit that manages for each customer adjustment amounts in one or more power supply/demand adjustment devices that are used in power adjustment of the power supply/demand adjustment processing; and
a reporting procedure of, on the basis of information that indicates characteristics relating to the power supply/demand adjustment processing and the processing information, reporting actuation of the power supply/demand adjustment processing to a customer for which said power supply/demand adjustment processing is carried out.

## SUPPLEMENTARY NOTE 35

In the recording medium as described in Note 34, the information that indicates characteristics relating to the power supply/demand adjustment processing is information that indicates favorable conditions in the execution of the power supply/demand adjustment processing.

## SUPPLEMENTARY NOTE 36

In the recording medium as described in Note 34 or 35, the report of actuation of the power supply/demand adjustment processing is a report of operation control information that controls the operation of the power supply/demand adjustment devices.

**SUPPLEMENTARY NOTE 37**

A recording medium that can be read by a computer and on which a program is recorded causes a computer to execute:

a management procedure of managing for each customer information relating to one or more power supply/demand adjustment devices that are used in power adjustment of power supply/demand adjustment processing; and
a transmission procedure of, on the basis of information indicating characteristics relating to the power supply/demand adjustment processing and information relating to power supply/demand adjustment devices in the adjustment unit of each customer, transmitting to an outside device processing information that indicates whether execution of the power supply/demand adjustment processing can be accommodated.

**SUPPLEMENTARY NOTE 38**

In the recording medium as described in Note 37, the information that indicates characteristics relating to the power supply/demand adjustment processing is information that indicates favorable conditions in the execution of the power supply/demand adjustment processing.

**SUPPLEMENTARY NOTE 39**

In the recording medium as described in Note 37 or 38, the information relating to the power supply/demand adjustment devices is information that indicates characteristics of power supply/demand adjustment devices that accommodate favorable conditions in the execution of the power supply/demand adjustment processing.

**Explanation of Reference Numbers**

A-C, AA control device
A1 acquisition unit
A2 reporting unit
AA1, B1 storage unit
AA2, B2, C2 selection unit
D-H, DD customer-side device
D1 adjustment unit
D2 reporting unit
DD1, DD2, E1, E2, G1, G2, H1, H2 storage unit
DD3, E3, F3, G3, H3 generation unit
DD4, F4 reporting unit
1000 power control system
1 thermal power generator
2 load dispatching unit
201 frequency gauge
202 communication unit
203 control unit
3 power grid
4 linking line
5 distribution transformer
6 power line
7 central control device
700 selection unit
701 communication unit
702 database
703 comprehension unit
704 control unit
8 apparatus control device

80 adjustment unit
800 storage unit
801 detection unit
802 communication unit
803 frequency gauge
804 control unit
9 storage battery
10 load
111 renewable power source (solar power generator)
112 renewable power source (wind power generator)


**Claims**

1. A control device comprising:

   an acquisition unit that acquires processing information that indicates power supply/demand adjustment processing that can be accommodated in an adjustment unit that manages for each customer adjustment amounts in one or more power supply/demand adjustment devices that are used in power adjustment of said power supply/demand adjustment processing; and
   a reporting unit that, on the basis of information that indicates characteristics relating to said power supply/demand adjustment processing and said processing information, reports actuation of said power supply/demand adjustment processing to a customer for which said power supply/demand adjustment processing is carried out.

2. The control device as set forth in claim 1, wherein information that indicates characteristics relating to said power supply/demand adjustment processing is information that indicates favorable conditions for executing said power supply/demand adjustment processing.

3. The control device as set forth in claim 1, wherein:

   said processing information is further provided with executable intervals in which said adjustment unit executes said power supply/demand adjustment processing; and
   on the basis of said executable intervals, said reporting unit reports the actuation of said power supply/demand adjustment processing to a customer for which said power supply/demand adjustment processing is carried out.

4. The control device as set forth in claim 1, wherein:

   said processing information is provided with a power value that can be supplied when said adjustment unit is executing said power supply/demand adjustment processing; and
   said reporting unit, on the basis of said power value that can be supplied, reports the actuation of said power supply/demand adjustment processing to a customer for which said power supply/demand adjustment processing is carried out.

5. The control device as set forth in claim 1, wherein:

   profitability is provided that is the compensation paid to a customer for each process of said power supply/demand adjustment processing; and
   said reporting unit, on the basis of said profitability, reports actuation of said power supply/demand adjustment processing to a customer for which said power supply/demand adjustment processing is carried out.

6. The control device as set forth in claim 5, wherein said reporting unit reports actuation of said power supply/demand adjustment processing to a customer for which said power supply/demand adjustment processing is carried out in an order of priority starting from the power supply/demand adjustment process having the highest said profitability.

7. The control device as set forth in any one of claims 1 to 6, wherein the report of actuation of said power supply/demand adjustment processing is a report of operation control information that controls the operation of said power supply/demand adjustment devices.

**8.** An apparatus control device comprising:

an adjustment unit that manages for each customer information relating to one or more power supply/demand adjustment devices that are used in power adjustment of power supply/demand adjustment processing; and a reporting unit that, on the basis of information indicating characteristics relating to said power supply/demand adjustment processing and information relating to power supply/demand adjustment devices in the adjustment unit of each customer, transmits to an outside device processing information that indicates whether execution of said power supply/demand adjustment processing can be accommodated.

**9.** The apparatus control device as set forth in claim 8, wherein information that indicates characteristics relating to said power supply/demand adjustment processing is information that indicates favorable conditions in the execution of said power supply/demand adjustment processing.

**10.** The control device as set forth in claim 8 or 9, wherein the information relating to said power supply/demand adjustment devices is information indicating characteristics of power supply/demand adjustment devices that accommodate favorable conditions in the execution of said power supply/demand adjustment processing.

**11.** The apparatus control device as set forth in claim 8, wherein said processing information includes information that indicates the adjustment amounts that can be accommodated in the execution of said power supply/demand adjustment processing.

**12.** The apparatus control device as set forth in claim 8, wherein said processing information is set for each of said customers and includes information that indicates constraint conditions and intent to participate in power adjustment of power supply/demand adjustment processing.

**13.** The apparatus control device as set forth in claim 8, wherein said reporting unit reports to an outside device processing information indicating that an adjustment unit has a response time that is equal to or less than the response time of said power supply/demand adjustment processing.

**14.** The apparatus control device as set forth in claim 8, wherein said reporting unit reports to an outside device processing information that indicates that an adjustment unit has a degree of communication confidence that is equal to or greater than the degree of communication confidence of said power supply/demand adjustment processing.

**15.** The apparatus control device as set forth in claim 8, wherein said reporting unit reports to an outside device processing information indicating that an adjustment unit is provided with a profitability condition that is equal to or less than the compensation of said power supply/demand adjustment processing.

**16.** The apparatus control device as set forth in claim 15, wherein: when there are a plurality of processes relating to said power supply/demand adjustment in which compensation is equal to or greater than the profitability condition provided in said power supply/demand adjustment device, said reporting unit reports to an outside device processing information indicating that an adjustment unit accommodates characteristics of power supply/demand adjustment processing having the highest profitability.

**17.** The apparatus control device as set forth in claim 8, wherein said reporting unit reports to an outside device processing information indicating that an adjustment unit has a usage-permitted interval in the execution interval of said power supply/demand adjustment processing.

**18.** The apparatus control device as set forth in claim 8, wherein said reporting unit transmits the state of said adjustment unit to an outside device and receives operation control information that accords with the state of said adjustment unit from said outside device.

**19.** The apparatus control device as set forth in claim 8, wherein said apparatus control device acquires the state of a power grid at a time interval that is shorter than the reception interval of said operation control information and, on the basis of the state of the relevant power grid and said operation control information, controls the operation of said power supply/demand adjustment devices.

**20.** The apparatus control device as set forth in claim 8, wherein said communication unit receives from said outside device operation control information that is generated on the basis of the state of said power supply/demand adjustment devices and the power amount that is shared by all of N (where N is a number equal to or greater than 1) of said power supply/demand adjustment devices for adjusting the power amount on a power grid.

21. The apparatus control device as set forth in claim 8, wherein said apparatus control device is provided with a reception unit that receives a report of the actuation of said power supply/demand adjustment processing indicating that a customer undergoes said power supply/demand adjustment processing that was determined on the basis of said processing information and predetermined conditions.

22. The apparatus control device as set forth in claim 8, wherein:

said processing information is provided with an executable interval in which said adjustment unit executes said power supply/demand adjustment processing; and
said reception unit receives a report of the actuation of said power supply/demand adjustment processing that was determined on the basis of said execution interval for each process of said power supply/demand adjustment processing.

23. The apparatus control device as set forth in claim 8, wherein:

said processing information is provided with a power value that can be supplied when said adjustment unit executes said power supply/demand adjustment processing, and
said reception unit receives a report of the actuation of said power supply/demand adjustment processing that was determined on the basis of said power value that can be supplied for each process of said power supply/demand adjustment processing.

24. The apparatus control device as set forth in claim 8, wherein:

profitability is set that is compensation paid to a customer for each process of said power supply/demand adjustment processing; and
said reception unit receives a report of the actuation of said power supply/demand adjustment processing that was determined on the basis of said profitability for each process of said power supply/demand adjustment processing.

25. The apparatus control device as set forth in claim 8, wherein said reception unit receives a report of the actuation of said power supply/demand adjustment processing in an order of priority that starts with power supply/demand adjustment processing that has the highest profitability.

26. The apparatus control device as set forth in any one of claims 21 to 25, wherein the report of the actuation of said power supply/demand adjustment processing is a report of operation control information that controls the operation of said power supply/demand adjustment devices.

27. The apparatus control device as set forth in any one of claims 8 to 26, wherein said power supply/demand adjustment device is a storage battery and functions as a power storage device that contains said storage battery.

28. A reporting method comprising:

acquiring processing information that indicates power supply/demand adjustment processing that can be accommodated in an adjustment unit that manages, for each customer, adjustment amounts in one or more power supply/demand adjustment devices that are used in power adjustment of said power supply/demand adjustment processing; and
on the basis of information indicating characteristics relating to said power supply/demand adjustment processing and said processing information, reporting the actuation of said power supply/demand adjustment processing to a customer for which said power supply/demand adjustment processing is carried out.

29. A reporting method comprising:

managing, for each customer, information relating to one or more power supply/demand adjustment devices that are used in power adjustment of power supply/demand adjustment processing; and
on the basis of information that indicates characteristics relating to said power supply/demand adjustment processing and information relating to power supply/demand adjustment devices in the adjustment unit of each customer, transmitting to an outside device processing information that indicates whether the execution of said power supply/demand adjustment processing can be accommodated.

30. A recording medium that can be read by a computer and on which a program is recorded that causes a computer to execute:

an acquisition procedure of acquiring processing information that indicates power supply/demand adjustment processing that can be accommodated in an adjustment unit that manages, for each customer, adjustment amounts in one or more power supply/demand adjustment devices that are used in power adjustment of said power supply/demand adjustment processing; and
a reporting procedure of reporting actuation of said power supply/demand adjustment processing to a customer for which said power supply/demand adjustment processing is carried out on the basis of information that indicates characteristics relating to said power supply/demand adjustment processing and said processing information.

31. A recording medium that can be read by a computer and on which a program is recorded that causes a computer to execute:

a management procedure of managing, for each customer, information relating to one or more power supply/demand adjustment devices that are used in power adjustment of power supply/demand adjustment processing; and
a transmission procedure of, on the basis of information indicating characteristics relating to said power supply/demand adjustment processing and information relating to power supply/demand adjustment devices in the adjustment unit of each customer, transmitting to an outside device processing information that indicates whether execution of said power supply/demand adjustment processing can be accommodated.

FIG. 1A

```
                                                    A
┌──────────────────────────────────────────────────┐
│ control device                                     │
│            A1                        A2            │
│   ┌──────────────────┐     ┌──────────────────┐   │
│   │ acquisition unit  │─────│  reporting unit  │   │
│   └──────────────────┘     └──────────────────┘   │
│                                                    │
└──────────────────────────────────────────────────┘
```

FIG. 1B

```
                                   AA
┌──────────────────────────────────────────┐
│ control device                             │
│                        AA1                │
│         ┌──────────────────┐              │
│         │   storage unit    │             │
│         └──────────────────┘              │
│                 │          AA2            │
│         ┌──────────────────┐              │
│         │  selection unit   │             │
│         └──────────────────┘              │
│                                            │
└──────────────────────────────────────────┘
```

FIG. 1C

```
                                   AA
┌──────────────────────────────────────────────┐
│ control device                                 │
│                         AA1                   │
│          ┌──────────────────┐                 │
│          │   storage unit    │                │
│          └──────────────────┘                 │
│                  │            AA2             │
│   ┌──────────────────────────────────────┐   │
│   │ selection          A1                │   │
│   │ unit  ┌──────────────────┐           │   │
│   │       │ acquisition unit  │          │   │
│   │       └──────────────────┘     A2    │   │
│   │       ┌──────────────────┐           │   │
│   │       │  reporting unit   │          │   │
│   │       └──────────────────┘           │   │
│   └──────────────────────────────────────┘   │
└──────────────────────────────────────────────┘
```

EP 3 190 683 A1

FIG. 2

```
        ┌─────────────┐
        │    START    │
        └──────┬──────┘
               │            ┌ S201
        ┌──────▼────────────────────────┐
        │ Acquire processing information │
        └──────┬────────────────────────┘
               │            ┌ S202
        ┌──────▼────────────────────────────┐
        │ For each application, report       │
        │ actuation of the application to    │
        │ the request-destination customers  │
        └──────┬────────────────────────────┘
               │
        ┌──────▼──────┐
        │     END     │
        └─────────────┘
```

FIG. 3

```
                      ┌ B
┌─────────────────────────────────────────┐
│ control device                          │
│                            ┌ B1          │
│         ┌──────────────────────┐         │
│         │                      │         │
│         │    storage unit      │         │
│         │                      │         │
│         └──────────┬───────────┘         │
│                    │         ┌ B2         │
│         ┌──────────┴───────────┐         │
│         │   selection unit     │         │
│         │                      │         │
│         └──────────────────────┘         │
│                                          │
└─────────────────────────────────────────┘
```

FIG. 4

| | | application AP1 demand reduction | application AP2 load frequency control(LFC) | application AP3 governor free (GF) |
|---|---|---|---|---|
| | | ↓ | ↓ | ↓ |
| customerNo.1 | → | 4kW (12:00-15:00) | 2kW (11:00-13:00) | 2kW (9:00-15:00) |
| customerNo.2 | → | 4kW (12:00-15:00) | | |
| customerNo.3 | → | 3kW (12:00-15:00) | 2.5kW (11:00-13:00) | |
| customerNo.4 | → | 5kW (12:00-15:00) | 3kW (11:00-13:00) | 1kW (9:00-15:00) |
| customerNo.5 | → | 3.5kW (12:00-15:00) | 2kW (11:00-13:00) | 2kW (9:00-15:00) |
| ⋮ | | | | |
| customerNo.n | → | 6kW (12:00-15:00) | | |

FIG. 5

```
              ┌─────────────┐
              │    START    │
              └─────────────┘
                     │
                     ▼                    S501
   ┌──────────────────────────────────┐
   │ Acquire processing information and│
   │ implementation time              │
   └──────────────────────────────────┘
                     │
                     ▼                    S502
   ┌──────────────────────────────────┐
   │ Select request-destination customers│
   └──────────────────────────────────┘
                     │
                     ▼                    S503
   ┌──────────────────────────────────┐
   │ For each application, report the │
   │ actuation of the application to the│
   │ request-destination customers    │
   └──────────────────────────────────┘
                     │
                     ▼
              ┌─────────────┐
              │     END     │
              └─────────────┘
```

FIG. 6

```
                                    ┌ C
┌──────────────────────────────────────┐
│ control device                       │
│                            ┌ B1       │
│           ┌──────────────────┐        │
│           │                  │        │
│           │  storage unit    │        │
│           │                  │        │
│           └─────────┬────────┘        │
│                     │      ┌ C2       │
│           ┌─────────┴────────┐        │
│           │                  │        │
│           │  selection unit  │        │
│           │                  │        │
│           └──────────────────┘        │
│                                       │
└──────────────────────────────────────┘
```

FIG. 7

```
                    ┌──────────────┐
                    │    START     │
                    └──────┬───────┘
                           │           ┌ S701
           ┌───────────────┴────────────────┐
           │ Acquire processing information, │
           │ implementation time, and        │
           │ profitability                   │
           └───────────────┬────────────────┘
                           │           ┌ S702
           ┌───────────────┴────────────────┐
           │ Select request-destination     │
           │ customers                       │
           └───────────────┬────────────────┘
                           │           ┌ S703
           ┌───────────────┴────────────────┐
           │ For each application, report the│
           │ actuation of the application to │
           │ the request-destination         │
           │ customers                       │
           └───────────────┬────────────────┘
                           │
                    ┌──────┴───────┐
                    │     END      │
                    └──────────────┘
```

FIG. 8A

FIG. 8B

FIG. 9

| | application AP1 | application AP2 | application AP3 |
|---|---|---|---|
| response time | 10 seconds to one minute | one to nine seconds | less than one second |

Fig. 10

```
        ┌──────────────┐
        │    START     │
        └──────┬───────┘
               │           ╱ S1001
               ▼
    ┌──────────────────────────┐
    │ Generate processing information │
    └──────────┬───────────────┘
               │           ╱ S1002
               ▼
    ┌──────────────────────────┐
    │ Report processing information  │
    └──────────┬───────────────┘
               │
               ▼
        ┌──────────────┐
        │     END      │
        └──────────────┘
```

FIG. 11

```
                          ┌─ E
┌──────────────────────────────────────────────┐
│ customer-side device                           │
│                                                │
│        ┌─ E1                    ┌─ E2          │
│   ┌──────────────┐         ┌──────────────┐   │
│   │ storage unit │         │ storage unit │   │
│   └──────────────┘         └──────────────┘   │
│          │                        │            │
│          └────────┐     ┌─────────┘            │
│                   │     │        ┌─ E3         │
│              ┌──────────────────┐              │
│              │ generation unit  │              │
│              └──────────────────┘              │
│                        │         ┌─ DD4        │
│                        │                        │
│              ┌──────────────────┐              │
│              │  reporting unit  │              │
│              └──────────────────┘              │
└──────────────────────────────────────────────┘
```

Fig. 12

|  | application AP1 | application AP2 | application AP3 |
|---|---|---|---|
| response time | 10 seconds to one minute | one to nine seconds | less than one second |
| degree of communication confidence | medium reliability | medium reliability | high reliability |

FIG. 13

```
                    ┌──────────────┐
                    │    START     │
                    └──────────────┘
                           │
                           ▼              ┌─ S1301
        ┌──────────────────────────────────────┐
        │  Generate processing information       │
        └──────────────────────────────────────┘
                           │
                           ▼              ┌─ S1302
        ┌──────────────────────────────────────┐
        │  Report the processing information     │
        └──────────────────────────────────────┘
                           │
                           ▼
                    ┌──────────────┐
                    │     END      │
                    └──────────────┘
```

FIG. 14

```
                                              F
  ┌────────────────────────────────────────────────────┐
  │ customer-side device                               │
  │                                                     │
  │        E1                           E2              │
  │  ┌──────────────┐            ┌──────────────┐       │
  │  │ storage unit │            │ storage unit │       │
  │  └──────────────┘            └──────────────┘       │
  │          │                         │               │
  │          └────────┐      ┌─────────┘               │
  │                 ┌─┴──────┴───────┐  F3             │
  │                 │ generation unit │                │
  │                 └─────────────────┘                │
  │                         │                          │
  │                 ┌───────────────┐  F4              │
  │                 │ reporting unit │                 │
  │                 └───────────────┘                  │
  │                                                     │
  └────────────────────────────────────────────────────┘
```

FIG. 15

FIG. 16

| | application AP1 | application AP2 | application AP3 |
|---|---|---|---|
| response time | 10 seconds to one minute | one to nine seconds | less than one second |
| degree of communication confidence | medium reliability | medium reliability | high reliability |
| profitability | 7yen/kW×1h | 5yen/kW×1h | 2yen/kW×1h |

FIG. 17

```
START
  ↓
Generate processing information   S1701
  ↓
Report the processing information   S1702
  ↓
END
```

FIG. 18

H

customer-side device

H1
storage unit

H2
storage unit

H3
generation unit

F4
reporting unit

FIG. 19

|  | application AP1 | application AP2 | application AP3 |
|---|---|---|---|
| response time | 10 seconds to one minute | one to nine seconds | less than one second |
| degree of communication confidence | medium reliability | medium reliability | high reliability |
| profitability | 7yen/kW×1h | 5yen/kW×1h | 2yen/kW×1h |
| reliability | implementation not guaranteed | implementation guaranteed | implementation not guaranteed |
| implementation time | three hours (12:00-15:00) | two hours (11:00-13:00) | six hours (9:00-15:00) |

FIG. 20

```
            ┌──────────────────┐
            │      START       │
            └──────────────────┘
                     │
                     ▼          ╱ S2001
  ┌────────────────────────────────────┐
  │  Generate processing information    │
  └────────────────────────────────────┘
                     │
                     ▼          ╱ S2002
  ┌────────────────────────────────────┐
  │  Report the processing information  │
  └────────────────────────────────────┘
                     │
                     ▼
            ┌──────────────────┐
            │       END        │
            └──────────────────┘
```

FIG. 21

1000 power control system

central control device — 7

another power system — 13

communication network — 12

adjustment unit — 80

apparatus control device — 8

storage battery — 9

load — 10

customer-side

adjustment unit — 80

apparatus control device — 8

storage battery — 9

load — 10

customer-side

4 linking line

thermal power generator — 1

load dispatching unit — 2

distribution transformer — 5

6 power line

3 power grid

renewable power source (solar power generator) — 111

renewable power source (wind power generator) — 112

FIG. 22

FIG. 23A

FIG. 23B

FIG. 24A

FIG. 24B

Drooping characteristic line of
the storage battery (Group)

FIG. 25

FIG. 26

| | DR application 1 | DR application 2 | DR application 3 |
|---|---|---|---|
| response time | 10 seconds to one minute | one to nine seconds | less than one second |
| degree of communication confidence | medium reliability | medium reliability | high reliability |
| profitability | 10~5yen/kW×1h | 5yen/kW×1h | 2yen/kW×1h |
| reliability | implementation not guaranteed | implementation guaranteed | implementation not guaranteed |
| implementation time | three hours (12:00-15:00) | two hours (11:00-13:00) | six hours (9:00-15:00) |

FIG. 27

| power demand | The power value that can be supplied |
|---|---|
| aaaa | ○○○ |
| ⋮ | ⋮ |
| zzzz | △△○○○ |

FIG. 28

| | | application AP1 demand reduction | application AP2 load frequency control (LFC) | Application AP3 governor free (GF) |
|---|---|---|---|---|
| degree of communication confidence | → | medium reliability | medium reliability | high reliability |
| response time | → | 10 seconds to one minute | one to nine seconds | less than one second |
| profitability | → | 10~ 5yen/kW×1h | 5yen/kW×1h | 2yen/kW×1h |
| implementation time | → | three hours (12:00-15:00) | two hours (11:00-13:00) | six hours (9:00-15:00) |
| reliability | → | implementation not guaranteed | implementation guaranteed | implementation not guaranteed |
| customer No.1 | → | 4kW | 2kW | 2kW |
| customer No.2 | → | 4kW | | |
| customer No.3 | → | 3kW | 2.5kW | |
| customer No.4 | → | 5kW | 3kW | 1kW |
| customer No.5 | → | 3.5kW | 2kW | 2kW |
| customer No.n | → | 6kW | | |

FIG. 29

EP 3 190 683 A1

FIG. 30

```
              ┌─────────┐
              │  START  │
              └────┬────┘
                   │
        ┌──────────▼──────────────┐        S3001
        │ Use profitability to narrow │
        │ down candidates            │
        └──────────┬──────────────┘
                   │
              ┌────▼────┐   S3002
              │ Is the profitability
              │ determined ?
              └────┬────┘
               Yes │
                   ▼
              Is there a remaining
              application?   S3005

        Determine the required power   S3004
        amount and profitability of
        each DR application

        Participate in bidding   S3003

        Determine request-destination   S3006
        customers, output, and capacity
        for each DR application

              ┌─────────┐
              │   END   │
              └─────────┘
```

FIG. 31

FIG. 32

FIG. 33

FIG. 34

```
        ┌7                                              ┌2
┌──────────────────────┐              ┌──────────────────────────┐
│  central control device │              │   load dispatching unit    │
└──────────────────────┘              └──────────────────────────┘
         │                                         │
         │                                         │  ┌─S3401
         │                              ┌──────────────────────────┐
         │                              │  Calculation of Area      │
         │                              │     Requirement           │
         │                              └──────────────────────────┘
         │                                         │  ┌─S3402
         │                              ┌──────────────────────────┐
         │                              │  Collection of the LFC    │
         │                              │  adjustment capacity of   │
         │                              │  thermal power generator  │
         │      Most recent P_{ES-DR2}  └──────────────────────────┘
         │────────────────────────────────────────▶│  ┌─S3404
         │          └─S3403             ┌──────────────────────────┐
         │                              │  Calculation of LFC       │
         │                              │  assignment capacity      │
         │                              │  LFC_{ES-DR2} for storage │
         │                              │     battery group         │
         │                              └──────────────────────────┘
         │                                         │  ┌─S3405
         │                              ┌──────────────────────────┐
         │   DR2 charging/discharging   │  Generation of DR2        │
         │          gain line           │  charging/discharging     │
         │                              │     gain line             │
         │◀─────────────────────────────────────────└──────────────┘
         │          └─S3406             │
         │                                         │
```

FIG. 35

```
        ┌─────8                          ┌─────7
  ┌──────────────────────┐       ┌──────────────────────┐
  │ apparatus control device │    │ central control device │
  └──────────────────────┘       └──────────────────────┘
            │                               │  ┌─ S3501
            │                     ┌──────────────────────┐
            │                     │ Derivation of DR2      │
            │                     │ allotment coefficient K │
            │                     └──────────────────────┘
            │   DR2 allotment information   │
            │◄──────────────────────────────┤
            │         └─ S3502              │
      ┌─ S3503                              │
  ┌──────────────────────┐                  │
  │ Derivation of local    │                │
  │ charging/discharging gain │             │
  │ coefficient G(n)        │               │
  └──────────────────────┘                  │
            │                               │
      ┌─ S3504                              │
  ┌──────────────────────┐                  │
  │ Derivation of local    │                │
  │ charging/discharging gain │             │
  │ line                   │                │
  └──────────────────────┘                  │
            │                               │
```

FIG. 36

FIG. 37

```
    ┌─────────────────┐              ┌──────────────────────────┐
  9 │ storage battery │            8 │  apparatus control device│
    └────────┬────────┘              └────────────┬─────────────┘
             │                                    │ ┌ S3701
             │                       ┌────────────┴─────────────┐
             │                       │ Detection of grid frequency│
             │                       └────────────┬─────────────┘
             │                                    │ ┌ S3702
             │                       ┌────────────┴─────────────┐
             │                       │ Calculation of integrated value│
             │                       │  Δf of frequency deviation│
             │                       └────────────┬─────────────┘
             │                                    │ ┌ S3703
             │                       ┌────────────┴─────────────┐
             │                       │ Specification of charging │
             │                       │ amount or discharging amount on│
             │                       │ the basis of Δf and the local│
             │                       │ charging/discharging gain line│
             │  Control of charging/discharging └────┬─────────┘
             │◄───────────────────────────────────────
             │           └ S3704                      │
             │                                        │
```

FIG. 38

```
        7                                    2

┌─────────────────────────┐      ┌─────────────────────────┐
│  central control device │      │   load dispatching unit │
└─────────────────────────┘      └─────────────────────────┘
            │                                 │
            │                                 │  S3801
            │                    ┌────────────────────────────┐
            │                    │  Calculation of required GF │
            │                    │         capacity            │
            │                    └────────────────────────────┘
            │                                 │
            │                                 │  S3802
            │                    ┌────────────────────────────┐
            │                    │ Collection of the GF adjustment│
            │                    │  capacity of thermal power  │
            │        S3803       │         generator           │
            │                    └────────────────────────────┘
            │  Most recent P_ES-DR3            │
            │────────────────────────────────▶│  S3804
            │                    ┌────────────────────────────┐
            │                    │ Calculation of GF assignment│
            │                    │  capacity GF_ES-DR3 to storage│
            │                    │      battery group          │
            │                    └────────────────────────────┘
            │                                 │
            │                                 │  S3805
            │                    ┌────────────────────────────┐
            │                    │ Generation of DR3 drooping  │
            │                    │    characteristic line      │
            │                    └────────────────────────────┘
            │  DR3 drooping characteristic line │
            │◀────────────────────────────────│
            │    S3806                         │
```

FIG. 39

```
        8                                    7
  ┌──────────────────────┐          ┌──────────────────────┐
  │ apparatus control device │      │ central control device │
  └──────────────────────┘          └──────────────────────┘
            │                                   │    ⌐S3901
            │                         ┌──────────────────────┐
            │                         │   Derivation of DR3   │
            │                         │ allotment coefficient K │
            │                         └──────────────────────┘
            │   DR3 allotment information        │
            │◄──────────────────────────────────│
            │          └ S3902                   │
            │   ⌐ S3903                          │
  ┌──────────────────────┐                       │
  │   Derivation of local  │                     │
  │ drooping characteristic │                    │
  │         line           │                     │
  └──────────────────────┘                       │
            │                                   │
            │                                   │
```

FIG. 40

```
         9                                    8
┌─────────────────────┐         ┌─────────────────────┐
│   storage battery   │         │ apparatus control device │
└─────────────────────┘         └─────────────────────┘
          │                                 │
          │                                 │    S4001
          │                     ┌───────────────────────────┐
          │                     │ Detection of grid frequency │
          │                     └───────────────────────────┘
          │                                 │
          │                                 │    S4002
          │                     ┌───────────────────────────┐
          │                     │  Calculation of frequency  │
          │                     │      deviation Δf          │
          │                     └───────────────────────────┘
          │                                 │
          │                                 │    S4003
          │                     ┌───────────────────────────┐
          │                     │  Specification of charging │
          │                     │ amount or discharging amount on │
          │                     │  the basis of Δf and the local │
          │                     │  drooping characteristic line │
          │                     └───────────────────────────┘
          │          S4004                  │
          │            │                    │
          │◄───────────────────────────────┤
          │  Control of charging/discharging │
          │                                 │
          │                                 │
```

FIG. 41

## INTERNATIONAL SEARCH REPORT

International application No.

PCT/JP2015/070254

| A. CLASSIFICATION OF SUBJECT MATTER |
|---|
| H02J13/00(2006.01)i, G06Q50/06(2012.01)i, H02J3/32(2006.01)i |

According to International Patent Classification (IPC) or to both national classification and IPC

B. FIELDS SEARCHED

Minimum documentation searched (classification system followed by classification symbols)
H02J13/00, G06Q50/06, H02J3/32

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2013-172537 A   (Toshiba Corp.),<br>02 September 2013 (02.09.2013),<br>paragraphs [0014] to [0124]; fig. 1 to 18<br>(Family: none) | 1-31 |
| Y | JP 2013-176284 A   (NEC Corp.),<br>05 September 2013 (05.09.2013),<br>paragraphs [0022] to [0274]; fig. 1 to 22<br>& JP 5234235 B          & US 2015/0002100 A1<br>& WO 2013/042474 A1      & EP 2760098 A1 | 1-31 |
| Y | WO 2013/172022 A1   (Panasonic Corp.),<br>21 November 2013 (21.11.2013),<br>paragraph [0076]<br>& US 2014/0222239 A1 | 13 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    07 September 2015 (07.09.15) | Date of mailing of the international search report<br>    15 September 2015 (15.09.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (July 2009)

81

**INTERNATIONAL SEARCH REPORT**

International application No.

PCT/JP2015/070254

C (Continuation). DOCUMENTS CONSIDERED TO BE RELEVANT

| Category* | Citation of document, with indication, where appropriate, of the relevant passages | Relevant to claim No. |
|---|---|---|
| A | WO 2013/030937 A1 (Hitachi, Ltd.), 07 March 2013 (07.03.2013), paragraphs [0076] to [0077] (Family: none) | 1-31 |
| A | JP 2013-258806 A (Panasonic Corp.), 26 December 2013 (26.12.2013), paragraphs [0085] to [0096]; fig. 4 to 5 (Family: none) | 1-31 |
| A | JP 2006-277385 A (Kyocera Corp.), 12 October 2006 (12.10.2006), paragraphs [0015] to [0030]; fig. 1 to 3 (Family: none) | 1-31 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014038201 A
- JP 2014156204 A